# EUROPEAN PATENT APPLICATION

(11) **EP 4 152 831 A1**
(43) Date of publication of application: **22.03.2023**
(21) Application number: 21809284.9
(22) Date of filing: 19.05.2021
(51) Int. Cl.: H04W 52/02, H04W 76/28

(54) **COMMUNICATION METHOD AND APPARATUS**

(30) Priority: 20.05.2020 CN 202010432864; 22.10.2020 CN 202011141177
(71) Applicant: Huawei Technologies Co., Ltd., Longgang District, Shenzhen, Guangdong 518129 (CN)
(72) Inventor: LIU, Jun, Shenzhen, Guangdong 518129 (CN)
(74) Representative: Pfenning, Meinig & Partner mbB
(86) International application number: PCT/CN2021/094582
(87) International publication number: WO 2021/233328

(57) **Abstract**

This application provides a communication method and apparatus. The method may include: A first communication device determines a first candidate resource and a first service that are used for sidelink transmission; and the first communication device determines a first resource from the first candidate resource, where there is an intersection between the first resource and a first active time in time domain, and the first active time is determined based on a DRX active time corresponding to the first service. In this application, the first communication device selects a resource that has an intersection with the DRX active time corresponding to the first service as a reserved resource, and performs sidelink transmission over the reserved resource. This can ensure that the first communication device can receive transmission from a second communication device (for example, TX UE) within the active time, reduce power consumption of the RX UE, and ensure sidelink transmission between the first communication device and the second communication device.

## Description

This application claims priority to Chinese Patent Application No. 202010432864.6, filed with the China National Intellectual Property Administration on May 20, 2020 and entitled "COMMUNICATION METHOD, APPARATUS, AND DEVICE", and claims priority to Chinese Patent Application No. 202011141177.5, filed with the China National Intellectual Property Administration on October 22, 2020 and entitled "COMMUNICATION METHOD AND APPARATUS", which are incorporated herein by reference in their entireties.

### TECHNICAL FIELD

This application relates to the communication field, and in particular, to a communication method and apparatus.

### BACKGROUND

A new radio (new radio, NR) system is a current mainstream wireless communication technology. For a vehicle to everything (vehicle to everything, V2X) service feature and a new service transmission requirement, the new radio system intends to support V2X communication with a lower latency and higher reliability. However, on a sidelink (sidelink), a receive terminal device (RX UE) keeps monitoring sidelink control information (sidelink control information, SCI) to check whether there is information from a transmit terminal device (TX UE).

However, in a scenario in which the UE autonomously selects a resource, the RX UE does not always exchange valid information with the TX UE. In this case, when there is no data exchange between the transmit UE and the receive UE, if the RX UE still continuously monitors the SCI, power consumption of the RX UE may increase.

### SUMMARY

This application provides a communication method and apparatus, to reduce power consumption of RX UE.

According to a first aspect, this application provides a communication method, which may be applied to a communication system. The communication system may be applied to a sidelink communication system, for example, an internet of vehicles system. The method may include: A first communication device determines a first candidate resource and a first service that are used for sidelink transmission; and the first communication device determines a first resource from the first candidate resource, where there is an intersection between the first resource and a first active time in time domain, and the first active time is determined based on a DRX active time corresponding to the first service.

In this application, the first communication device selects a resource that has an intersection with the DRX active time corresponding to the first service as a reserved resource, and performs sidelink transmission over the reserved resource. This can ensure that the first communication device can receive transmission from a second communication device (for example, TX UE) within the active time, reduce power consumption of the RX UE, and ensure sidelink transmission between the first communication device and the second communication device.

Based on the first aspect, in some possible implementations, that the first communication device determines a first resource from the first candidate resource includes: The first communication device determines a resource that is in the first candidate resource and that has an intersection with the first active time in time domain as a second candidate resource; and the first communication device determines the first resource from the second candidate resource.

Based on the first aspect, in some possible implementations, that the first communication device determines a resource that is in the first candidate resource and that has an intersection with the first active time in time domain as a second candidate resource includes: The first communication device determines a resource that is in the first candidate resource and that is included in the first active time in time domain as the second candidate resource.

Based on the first aspect, in some possible implementations, to improve a matching degree between the reserved resource and the DRX active time of the first service, in a scenario of a plurality of destination IDs, before starting sidelink transmission over the first resource, the first communication device may further select a second service from the first service. In this case, the first communication device may select, from the plurality of destination IDs, a destination ID that corresponds to a DRX active time having an intersection with the first resource in time domain.

Based on the first aspect, in some possible implementations, to improve the matching degree between the reserved resource and the DRX active time of the first service, the method may further include: The first communication device determines a first active time; and the first communication device monitors SCI within the first active time. Herein, the SCI indicates a resource used by another UE for sidelink transmission.

In this application, after determining the first active time, a MAC layer of the first communication device indicates the first active time to a physical layer of the first communication device. The physical layer monitors, within the first active time, SCI sent by another UE, and further the physical layer performs measurement within the first active time.

Based on the first aspect, in some possible implementations, the first communication device determines a union set, that is, the first active time, of DRX active times in time domain in at least one DRX configuration. Herein, the at least one DRX configuration may be some or all DRX configurations that can be determined by the first communication device. It may be understood that the at least one DRX configuration may include a DRX configuration of the first service.

Further, the first communication device performs measurement within the first active time.

In this application, the measurement may include measuring a PSCCH-RSRP or a PSSCH-RSRP, or measuring an S-RSSI. The PSCCH-RSRP is obtained by measuring a DMRS associated with a PSCCH, and the PSSCH-RSRP is obtained by measuring a DMRS associated with a PSSCH.

It may be understood that, if the first communication device monitors, within the first active time, the SCI sent by another UE, a resource indicated by the SCI is within the first active time. In this case, it may also be considered that the first communication device measures the resource indicated by the SCI within the first active time.

Based on the first aspect, in some possible implementations, to improve the matching degree between the reserved resource and the DRX active time of the first service, the first communication device may further perform resource exclusion. When the resource exclusion is performed in a selection window, the MAC layer of the first communication device first indicates, to the physical layer, a union set of DRX active times corresponding to the first service and/or a union set, that is, the first active time, of DRX active times corresponding to aperiodic services in a current service and a historical service in the first service; and then the physical layer excludes a resource from the second resource, and determines a resource that has an intersection with the union set as the first candidate resource. It may be understood that the first candidate resource needs to meet at least one of the following conditions: there is an intersection with a union set of DRX active times corresponding to the first service in time domain, and there is an intersection with a union set of DRX active times corresponding to aperiodic services in a current service and a historical service in the first service in time domain.

In this application, the second resource may be a resource that is in the selection window and that corresponds to a resource determined by the physical layer through sensing, or may be a resource that is in the selection window and that corresponds to a resource obtained after the physical layer excludes a resource from the resource determined through sensing.

In some optional implementations, the physical layer may further exclude a resource from the first candidate resource.

According to a second aspect, this application provides a communication method, which may be applied to a communication system. The communication system may be applied to a sidelink communication system, for example, an internet of vehicles system. The method may include: in a scenario in which a first service includes a plurality of destination IDs, before starting sidelink transmission over a first resource, a first communication device may further select a second service from the first service. In this case, the first communication device may select, from the plurality of destination IDs, a destination ID that corresponds to a DRX active time having an intersection with the first resource in time domain.

According to a third aspect, an embodiment of this application provides a communication method, which may be applied to a communication system. The communication system may be applied to a sidelink communication system, for example, an internet of vehicles system. The method may include: A first communication device determines a second active time; and the first communication device monitors SCI within the second active time.

Herein, the SCI indicates a resource used by another UE for sidelink transmission.

In this application, after determining the second active time, a MAC layer of the first communication device indicates the second active time to a physical layer of the first communication device. The physical layer monitors, within the second active time, the SCI sent by the another UE, and further the physical layer performs measurement within the second active time.

Based on the third aspect, in some possible implementations, the first communication device determines a union set, that is, the second active time, of DRX active times in time domain in at least one DRX configuration. Herein, the at least one DRX configuration may be some or all DRX configurations that can be determined by the first communication device. It may be understood that the at least one DRX configuration may include a DRX configuration of the first service.

Further, the first communication device performs sensing within the second active time to demodulate the SCI of the another UE, to learn of a resource occupation status of the another UE.

In this application, the first communication device selects a resource that has an intersection (that is, the second active time) with the DRX active time corresponding to the first service as a reserved resource, and performs sidelink transmission over the reserved resource. This can ensure that the first communication device can receive transmission from a second communication device (for example, TX UE) within the active time, reduce power consumption of the RX UE, and ensure sidelink transmission between the first communication device and the second communication device.

Based on the third aspect, in some possible implementations, the first communication device may perform measurement based on the SCI within the second active time, that is, measure a resource indicated by the SCI.

In this application, the "measure" may include measuring a PSCCH-RSRP or a PSSCH-RSRP, or measuring an S-RSSI. The PSCCH-RSRP is determined by measuring a DMRS associated with a PSCCH, and the PSSCH-RSRP is determining by measuring a DMRS associated with a PSSCH.

It may be understood that, if the first communication device monitors the SCI within the second active time, a resource indicated by the SCI is within the second active time. In this case, it may also be considered that the first communication device measures the resource indicated by the SCI within the second active time.

Based on the third aspect, in some possible implementations, to improve a matching degree between the reserved resource and the DRX active time of the first service, the first communication device may further determine a first candidate resource and a first service that are used for sidelink transmission; and the first communication device determines a first resource from the first candidate resource.

Based on the third aspect, in some possible implementations, that the first communication device determines a first resource from the first candidate resource includes: The first communication device determines a resource that is in the first candidate resource and that has an intersection with the second active time in time domain as a second candidate resource; and the first communication device determines the first resource from the second candidate resource.

Based on the third aspect, in some possible implementations, that the first communication device determines a resource that is in the first candidate resource and that has an intersection with the second active time in time domain as a second candidate resource includes: The first communication device determines a resource that is in the first candidate resource and that is included in the second active time in time domain as the second candidate resource.

Based on the third aspect, in some possible implementations, to improve the matching degree between the reserved resource and the DRX active time of the first service, in a scenario of a plurality of destination IDs, before starting sidelink transmission over the first resource, the first communication device may further select the first service, that is, the destination ID. In this case, the first communication device may select, from the plurality of destination IDs, a destination ID (used to identify a second service) that corresponds to a DRX active time having an intersection with the first resource in time domain, in other words, there is an intersection between an active time corresponding to the last selected destination ID and the reserved resource in time domain.

Based on the third aspect, in some possible implementations, to improve the matching degree between the reserved resource and the DRX active time of the first service, the first communication device may further perform resource exclusion. When the resource exclusion is performed in a selection window, the MAC layer of the first communication device first indicates, to the physical layer, a union set of DRX active times corresponding to the first service and/or a union set, that is, the second active time, of DRX active times corresponding to aperiodic services in a current service and a historical service in the first service; and then the physical layer excludes a resource from the second resource, and determines a resource that has an intersection with the union set as a third candidate resource. In other words, the third candidate resource needs to meet at least one of the following conditions: there is an intersection with a union set of DRX active times corresponding to the first service in time domain, and there is an intersection with a union set of DRX active times corresponding to aperiodic services in a current service and a historical service in the first service in time domain. It may be understood that the third candidate resource may be used as the first candidate resource. Certainly, the physical layer may further perform the method in S803 from the third candidate resource to determine the first candidate resource. This is not specifically limited in this embodiment of this application.

In this application, the second resource may be a resource that is in the selection window and that corresponds to a resource determined by the physical layer through sensing, or may be a resource that is in the selection window and that corresponds to a resource obtained after the physical layer excludes a resource from the resource determined through sensing.

According to a fourth aspect, this application provides a communication method, which may be applied to a communication system. The communication system may be applied to a sidelink communication system, for example, an internet of vehicles system. The method may include: A first communication device determines a fourth resource; and the first communication device determines a third candidate resource from the fourth resource. Herein, the third candidate resource needs to meet at least one of the following conditions: there is an intersection with a union set of DRX active times corresponding to a first service in time domain; and there is an intersection with a union set of DRX active times corresponding to aperiodic services in a current service and a historical service in the first service in time domain.

Based on the fourth aspect, in some possible implementations, when the first communication device performs resource exclusion in a selection window, the MAC layer of the first communication device first indicates, to a physical layer, a union set of DRX active times corresponding to the first service and/or a union set, that is, the first active time, of DRX active times corresponding to aperiodic services in a current service and a historical service in the first service; and then the physical layer excludes a resource from the fourth resource, and determines a resource that has an intersection with the union set as a third candidate resource. In other words, the third candidate resource needs to meet at least one of the following conditions: there is an intersection with a union set of DRX active times corresponding to the first service in time domain, and there is an intersection with a union set of DRX active times corresponding to aperiodic services in a current service and a historical service in the first service in time domain.

In this application, the physical layer may further exclude a resource from the third candidate resource. This is not specifically limited in this embodiment of this application.

In this application, the fourth resource may be a resource in the selection window, or may be a remaining resource after resource exclusion is performed on the resource in the selection window.

In this application, the first communication device selects a resource that has an intersection with the DRX active time corresponding to the first service as a reserved resource, and performs sidelink transmission over the reserved resource. This can ensure that the first communication device can receive transmission from a second communication device (for example, TX UE) within the active time, reduce power consumption of the RX UE, and ensure sidelink transmission between the first communication device and the second communication device.

Based on the fourth aspect, in some possible implementations, to improve a matching degree between the reserved resource and the DRX active time of the first service, the method further includes: The first communication device determines a first active time; and the first communication device monitors SCI within the first active time.

Herein, the SCI indicates a resource used by another UE for sidelink transmission.

In this application, after determining the second active time, the MAC layer of the first communication device indicates the second active time to the physical layer of the first communication device. The physical layer monitors, within the second active time, the SCI sent by the another UE, and further the physical layer performs measurement within the first active time.

Based on the fourth aspect, in some possible implementations, the first communication device determines a union set, that is, the first active time, of DRX active times in time domain in at least one DRX configuration. Herein, the at least one DRX configuration may be some or all DRX configurations that can be determined by the first communication device. It may be understood that the at least one DRX configuration may include a DRX configuration of the first service.

Based on the fourth aspect, in some possible implementations, to improve the matching degree between the reserved resource and the DRX active time of the first service, the first communication device may further determine a third candidate resource and a first service that are used for sidelink transmission; and the first communication device determines a fifth resource from the third candidate resource.

Based on the fourth aspect, in some possible implementations, that the first communication device determines a first resource from the third candidate resource includes: The first communication device determines a resource that is in the third candidate resource and that has an intersection with the first active time in time domain as a fourth candidate resource; and the first communication device determines the first resource from the fourth candidate resource.

Based on the fourth aspect, in some possible implementations, that the first communication device determines a resource that is in the third candidate resource and that has an intersection with the first active time in time domain as a fourth candidate resource includes: The first communication device determines a resource that is in the third candidate resource and that is included in the first active time in time domain as the fourth candidate resource.

Based on the fourth aspect, in some possible implementations, in some possible implementations, to improve the matching degree between the reserved resource and the DRX active time of the first service, in a scenario of a plurality of destination IDs, before starting sidelink transmission over the fifth resource, the first communication device may further select the first service, that is, a communication target. In this case, the first communication device may select, from the plurality of destination IDs, a destination ID that corresponds to a DRX active time having an intersection with the fifth resource in time domain, a communication target identified by the selected destination ID is the selected second service, in other words, there is an intersection between a DRX active time corresponding to the last selected destination ID and the reserved resource in time domain.

According to a fifth aspect, this application provides a communication method, which may be applied to a communication system. The communication system may be applied to a sidelink communication system, for example, an internet of vehicles system. The method may include: A first communication device determines a second active time, where the second active time is a union set of DRX active times in at least one discontinuous reception DRX configuration in time domain; and the first communication device monitors sidelink control information SCI within the second active time, where the SCI indicates a resource used by another communication device for sidelink transmission.

Further, the first communication device performs measurement within the second active time based on the SCI.

Based on the fifth aspect, in some possible implementations, the at least one DRX configuration includes a DRX configuration of the first service.

According to a sixth aspect, an embodiment of this application provides a communication method, which may be applied to a communication system. The communication system may be applied to a sidelink communication system, for example, an internet of vehicles system. The method may include: A first communication device determines a fourth resource used for sidelink transmission; the first communication device determines a third candidate resource from the fourth resource, where the third candidate resource meets at least one of the following conditions: there is an intersection with a union set of discontinuous reception DRX active times corresponding to a first service in time domain, where the first service includes a current service and/or a historical service; and there is an intersection with a union set of DRX active times corresponding to aperiodic services in the current service and the historical service in time domain, where the third candidate resource is used to determine a fifth resource used for sidelink transmission.

Based on the sixth aspect, in some possible implementations, the DRX active time corresponding to the first service includes at least one of the following: a DRX active time corresponding to a communication target, a DRX active time corresponding to a sidelink connection, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

According to a seventh aspect, an embodiment of this application provides a communication method, which may be applied to a communication system. The communication system may be applied to a sidelink communication system, for example, an internet of vehicles system. The method may include: A first communication device determines a third resource used for sidelink transmission; and if there is no intersection between the third resource and a discontinuous reception DRX active time corresponding to a fourth service of the first communication device, the first communication device triggers resource reselection.

Based on the seventh aspect, in some possible implementations, that there is no intersection between the third resource and a DRX active time corresponding to a fourth service includes: there is no intersection between the third resource and a union set of a plurality of DRX active times corresponding to the fourth service; there is no intersection between the third resource and at least one of a plurality of DRX active times corresponding to the first service; or there is no intersection between the third resource and a DRX active time that is in a plurality of DRX active times corresponding to the fourth service and that meets a preset quantity.

Based on the seventh aspect, in some possible implementations, the DRX active time corresponding to the first service includes at least one of the following: a DRX active time corresponding to a communication target, a DRX active time corresponding to a sidelink connection, a DRX active time corresponding to a source and target pair, a DRX active time corresponding to a sidelink link, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

Based on the seventh aspect, in some possible implementations, the first communication device may further configure a cycle for the third resource. In this case, the first communication device may configure a DRX cycle (that is, a DRX cycle) that meets a second condition and that is in a DRX configuration corresponding to the fourth service as a cycle corresponding to the third resource.

Herein, the second condition may include: a minimum value of a DRX cycle in the DRX configuration corresponding to the fourth service, a DRX cycle in the DRX configuration corresponding to the first service being less than a preset threshold, a DRX cycle in the DRX configuration corresponding to the fourth service being less than 20%, or the like. The second condition may alternatively be another condition. This is not specifically limited in this embodiment of this application.

In this embodiment of this application, a cycle of the first resource is selected as a minimum value of cycles of all DRX configurations corresponding to the fourth service, so that a cycle in which the first communication device wakes up to monitor SCI matches a cycle in which the fourth service is sent, thereby increasing a probability of effectively utilizing sidelink resources.

In this application, in any one of the first aspect to the sixth aspect and the possible implementations of the first aspect to the sixth aspect, when evaluating the selected third resource, the first communication device may perform the method in any one of the seventh aspect and the possible implementations of the seventh aspect. The first communication device may evaluate the third resource (that is, a reserved resource selected by the first communication device). If the first communication device determines that there is no intersection between the third resource and the DRX active time corresponding to the fourth service of the first communication device, the first communication device triggers the resource reselection, to reselect a resource that has an intersection with the DRX active time of the first service.

According to an eighth aspect, an embodiment of this application provides a communication method, which may be applied to a communication system. The communication system may be applied to a sidelink communication system, for example, an internet of vehicles system. The method may include: The first communication device may configure a cycle for the resource. In this case, the first communication device may configure a DRX cycle (that is, a DRX cycle) that meets a second condition and that is in a DRX configuration corresponding to the fifth service of the first communication device as a cycle corresponding to the resource.

Herein, the second condition may include: a minimum value of a DRX cycle in the DRX configuration corresponding to the fifth service, a DRX cycle in the DRX configuration corresponding to the first service being less than a preset threshold, a DRX cycle in the DRX configuration corresponding to the first service being less than 20%, or the like. The second condition may alternatively be another condition. This is not specifically limited in this embodiment of this application.

In this application, the first communication device selects a cycle of the selected resource as a minimum value of cycles of all DRX configurations corresponding to the fifth service, so that a cycle in which the first communication device wakes up to monitor SCI matches a cycle in which the fifth service is sent, thereby increasing a probability of effectively utilizing sidelink resources.

In this application, in any one of the first aspect to the seventh aspect and the possible implementations of the first aspect to the seventh aspect, when configuring the cycle for the resource, the first communication device may perform the method in any one of the eighth aspect and the possible implementations of the eighth aspect.

According to a ninth aspect, an embodiment of this application provides a communication method, which may be applied to a communication system. The communication system may be applied to a sidelink communication system, for example, an internet of vehicles system. The method may include: A first communication device determines that a first resource pool or a resource in the first resource pool meets a third condition; and the first communication device performs DRX configuration, and/or the first communication device indicates a second communication device to perform DRX configuration, so that the first communication device can select a resource pool that can be used for sidelink transmission.

Herein, the first resource pool is a resource pool from which the first communication device currently selects a resource.

Based on the ninth aspect, in some possible implementations, the third condition includes: a channel busy rate (channel busy ratio, CBR) of the current resource pool meets a fourth condition, for example, the fourth condition may be that the CBR is greater than a preset value (which may be an empirical value), or the CBR is within a preset range; and the first communication device triggers resource pool reselection, and/or a packet loss rate meets a fifth condition, for example, the fifth condition may be that the packet loss rate is greater than a preset value (which may be an empirical value), the packet loss rate is within a preset range, or the like.

In some possible implementations, the third condition may further include one of the following conditions or a combination of a plurality of conditions: a quantity of times that the CBR meets the fourth condition reaches a first threshold; a quantity of times of triggering resource pool reselection by the first communication device reaches a second threshold; and a quantity of times that the packet loss rate of the second communication device meets the fifth condition reaches a third threshold. The first threshold, the second threshold, and the third threshold may be empirical values.

In this application, after determining that the first resource pool or the resource in the first resource pool meets the third condition, the first communication device performs DRX configuration, so that the first communication device can select a resource pool that can be used for sidelink transmission.

It should be noted that the "DRX configuration" described herein may be understood as performing DRX configuration based on a reserved resource. For example, DRX reconfiguration is performed based on the reserved resource, so that there is an intersection between the reserved resource and a reconfigured DRX active time in time domain; or initial DRX configuration is performed based on the reserved resource, so that there is an intersection between the reserved resource and a configured DRX active time in time domain.

In this application, after determining that the first resource pool or the resource in the first resource pool meets the third condition, the first communication device indicates the second communication device to select a resource pool that can be used for sidelink transmission.

Based on the ninth aspect, in some possible implementations, the first communication device sends a first indication message to the second communication device, where the first indication message notifies the second communication device that a current resource pool of the first communication device or a resource in the current resource pool meets the third condition; the first communication device sends a second indication message to the second communication device, where the second indication message indicates the second communication device to perform DRX configuration; and/or the first communication device sends a third indication message to the second communication device, where the third indication message indicates DRX configuration information.

Based on the ninth aspect, in some possible implementations, if the first communication device is TX UE, the first communication device may further receive a fourth indication message from the second communication device (RX UE), where the fourth indication message indicates a packet loss rate or that the packet loss rate meets a fifth condition. For example, the fifth condition may be that the packet loss rate is greater than a preset value (which may be an empirical value), or the packet loss rate is within a preset range, or the like.

According to a tenth aspect, this application provides a communication method, which may be applied to a communication system. The communication system may be applied to a sidelink communication system, for example, an internet of vehicles system. The method may include: If first discontinuous reception DRX configuration information does not match first resource configuration information, a first communication device sends first information to a second communication device, and/or sends second information to a third communication device, where the first DRX configuration information is used for a first sidelink corresponding to the first communication device, the first resource configuration information is used for a second sidelink corresponding to the first communication device, the first information indicates the second communication device to perform DRX configuration for the first sidelink, and the second information indicates the third communication device to perform resource configuration for the second sidelink.

In some possible implementations, the first sidelink may be one or more sidelinks, and the second sidelink may also be one or more sidelinks. It should be noted that when the first sidelink is one sidelink, the second sidelink and the first sidelink may be a same sidelink, or the second sidelink and the first sidelink are different sidelinks. When the first sidelink is a plurality of sidelinks, the second sidelink may be one or more of the first sidelinks. In other words, the second sidelink is some or all of the first sidelinks.

In some possible implementations, because DRX configuration information and resource configuration information are configured by different entities, a DRX active time period indicated by the first DRX configuration information and a time domain interval indicated by the first resource configuration information may conflict in one or more time periods. In this case, it may be referred to that the first DRX configuration information does not match the first resource configuration information.

Optionally, the "one time period" may be a slot corresponding to previous time domain intervals, or may be a slot corresponding to next time domain intervals.

Further, that a DRX active time period indicated by the first DRX configuration information conflicts with a time domain interval indicated by the first resource configuration information in at least one time period includes: a quantity of slots in which n DRX active time periods overlap the time domain interval is less than a preset threshold, and n is a positive integer. For example, that a quantity of slots in which n DRX active time periods overlap the time domain interval is less than a preset threshold includes: A value obtained by dividing the quantity of overlapping slots by a quantity of slots of n times a DRX active time is less than the preset threshold.

In this application, when determining that an SL resource does not match SL DRX, the first communication device sends the first information to the second communication device and/or sends the second information to the third communication device, so that an SL resource configured by the second communication device and/or the third communication device matches the SL DRX.

Based on the tenth aspect, in some possible implementations, the first resource configuration information is current resource configuration information of the first communication device; and the method further includes: The first communication device receives the first DRX configuration information from the second communication device; and the first communication device determines that the first DRX configuration information does not match the first resource configuration information.

Based on the tenth aspect, in some possible implementations, the first communication device is a transmit terminal device, the second communication device is a receive terminal device, and the third communication device is a network device to which the transmit terminal device belongs. The first resource configuration information may indicate a resource configured by a base station for the transmit terminal device in mode 1, or may indicate a resource pool corresponding to the transmit terminal device in mode 2.

Based on the tenth aspect, in some possible implementations, the first communication device is a receive terminal device, the second communication device is a transmit terminal device, and the third communication device is a network device to which the receive terminal device belongs. The first resource configuration information indicates a receiving resource corresponding to the receive terminal device in mode 2, and the receiving resource is used for the first sidelink.

Based on the tenth aspect, in some possible implementations, the first communication device is a receive terminal device, the third communication device is a transmit terminal device, and the second communication device is a network device to which the receive terminal device belongs. The first resource configuration information includes resource configuration information indicating the receive terminal device to perform sensing.

Further, the first communication device may be auxiliary user equipment, the second communication device may be a network device to which the auxiliary user equipment belongs, and the third communication device may be assisted user equipment. The first resource configuration information includes resource configuration information indicating the first communication device to perform sensing.

Based on the tenth aspect, in some possible implementations, the first communication device is a receive terminal device, the second communication device is a transmit terminal device, and the third communication device is a network device to which the receive terminal device belongs. The first resource configuration information is used for a second sidelink between the receive terminal device being as the transmit terminal device and another terminal device (that is, a fourth communication device), and the first resource configuration information indicates the receive terminal device to send sidelink data on the second sidelink. It may also be understood that the first resource configuration information indicates the receive terminal device to send sidelink data to another terminal device.

Based on the tenth aspect, in some possible implementations, the first communication device is a receive terminal device, the second communication device is a network device to which the receive terminal device belongs, and the third communication device is a transmit terminal device. The first resource configuration information indicates to receive one or more resource sets corresponding to the terminal device.

Further, the first communication device may be assisted user equipment, the second communication device may be a network device to which the assisted user equipment belongs, and the third communication device may be auxiliary user equipment. The first resource configuration information indicates one or more resource sets corresponding to the assisted user equipment.

Based on the tenth aspect, in some possible implementations, that a first communication device sends second information to a third communication device includes: The first communication device sends mode switching request information to the third communication device, where the mode switching request information requests the third communication device to switch a resource allocation mode of the first communication device from a first mode to a second mode; or the first communication device sends resource configuration request information to the third communication device, where the resource configuration request information includes at least one of the following: a request reason indicating that DRX configuration information does not match resource configuration information, the first DRX configuration information, identification information corresponding to the first DRX configuration information, expected resource configuration information, or a resource adjustment amount.

Optionally, the resource allocation mode of the first communication device includes a mode 1 and a mode 2. If the first mode is the mode 1, the second mode is the mode 2; or if the first mode is the mode 2, the second resource is the mode 1.

In mode 1, the base station allocates an SL transmission resource to the transmit terminal device through scheduling. In mode 2, the terminal device autonomously selects, based on a requirement, a transmission resource from a preconfigured resource pool or a resource pool configured by the base station, and the base station does not need to perform scheduling.

In some possible implementations, that a first communication device sends first information to a second communication device includes: The first communication device sends DRX configuration failure information to the second communication device.

For example, the DRX configuration failure information includes at least one of the following: third information indicating a DRX configuration failure, identification information corresponding to DRX configuration information, a configuration failure type indicating that DRX configuration information does not match resource configuration information, an effective duration in which the second communication device is not allowed to configure DRX for the first communication device, the first resource configuration information, expected DRX configuration information, a DRX adjustment amount, and identification information corresponding to the DRX adjustment amount.

Based on the tenth aspect, in some possible implementations, that the first communication device sends DRX configuration failure information to the second communication device includes: The first communication device receives DRX configuration failure information sent by the third communication device, and the first communication device sends the DRX configuration failure information to the second communication device; or the first communication device starts a timer after sending the resource configuration request information to the third communication device; and when the timer expires and the first communication device receives no resource configuration information sent by the third communication device, the first communication device sends the DRX configuration failure information to the second communication device.

In some possible implementations, the DRX configuration failure information is further used to trigger the second communication device to send fourth information to a network device to which the second communication device belongs, and the fourth information indicates that a DRX configuration corresponding to the first sidelink fails.

It may be understood that the fourth information may be the foregoing DRX configuration failure information, to be specific, the receive terminal device forwards the DRX configuration failure information to a base station to which the receive terminal device belongs, or the fourth information may further include indication information generated by the receive terminal device based on the DRX configuration failure information, to indicate that a DRX configuration corresponding to the first sidelink fails.

The identification information may include at least one of the following: a target identifier, a source identifier, a sidelink connection identifier, a source and target identifier pair, a sidelink link identifier, a logical channel identifier, a resource pool identifier, a sidelink service identifier, a media access control protocol data unit MAC PDU identifier, and a transport block TB identifier.

Based on the tenth aspect, in some possible implementations, that a first communication device sends first information to a second communication device, and sends second information to a third communication device includes: The first communication device sends resource configuration request information to the third communication device, and sends DRX configuration failure information to the second communication device.

Based on the tenth aspect, in some possible implementations, the first DRX configuration information is current DRX configuration information of the first communication device; and the method further includes: The first communication device receives the first resource configuration information from the third communication device; and the first communication device determines that the first DRX configuration information does not match the first resource configuration information.

Based on the tenth aspect, in some possible implementations, the first communication device is a transmit terminal device, the second communication device is a receive terminal device, and the third communication device is a network device to which the transmit terminal device belongs. The first resource configuration information may indicate a resource configured by a base station for the transmit terminal device in mode 1, or may indicate a resource pool corresponding to the transmit terminal device in mode 2.

Based on the tenth aspect, in some possible implementations, the first communication device is a receive terminal device, the second communication device is a network device to which the receive terminal device belongs, and the third communication device is a receive terminal device. The first resource configuration information indicates a receiving resource corresponding to the transmit terminal device in mode 2.

Based on the tenth aspect, in some possible implementations, the first communication device is a receive terminal device, the second communication device is a network device to which the receive terminal device belongs, and the third communication device is a transmit terminal device. The first resource configuration information includes resource configuration information indicating the receive terminal device to perform sensing.

Further, the first communication device may be assisted user equipment, the second communication device may be a network device to which the assisted user equipment belongs, and the third communication device may be auxiliary user equipment. The first resource configuration information includes resource configuration information indicating the first communication device to perform sensing.

Based on the tenth aspect, in some possible implementations, the first communication device is a receive terminal device, the second communication device is a transmit terminal device, and the third communication device is a network device to which the receive terminal device belongs. The first resource configuration information is used by the receive terminal device to send sidelink data on the second sidelink between the receive terminal device and another terminal device (that is, a fourth communication device). It may also be understood that the first resource configuration information indicates the receive terminal device to send sidelink data to another terminal device.

Based on the tenth aspect, in some possible implementations, the first communication device is a receive terminal device, the second communication device is a network device to which the receive terminal device belongs, and the third communication device is a transmit terminal device. The first resource configuration information indicates to receive one or more resource sets corresponding to the terminal device.

Further, the first communication device is assisted user equipment, the second communication device is a network device to which the assisted user equipment belongs, and the third communication device is auxiliary user equipment.

Based on the tenth aspect, in some possible implementations, that a first communication device sends second information to a third communication device includes: The first communication device sends mode switching request information to the third communication device, where the mode switching request information requests the third communication device to switch a resource allocation mode of the first communication device from a first mode to a second mode, and configures a resource for the first communication device in the second mode; or the first communication device sends resource configuration failure information to the third communication device, where the resource configuration failure information includes at least one of the following: fifth information indicating a resource configuration failure, a configuration failure type indicating that resource configuration information does not match DRX configuration information, the first DRX configuration information, identification information corresponding to the first DRX configuration information, expected resource configuration information, or a resource adjustment amount.

Optionally, the resource allocation mode of the first communication device includes a mode 1 and a mode 2. If the first mode is the mode 1, the second mode is the mode 2; or if the first mode is the mode 2, the second resource is the mode 1.

In mode 1, the base station allocates an SL transmission resource to the transmit terminal device through scheduling. In mode 2, the terminal device autonomously selects, based on a requirement, a transmission resource from a preconfigured resource pool or a resource pool configured by the base station, and the base station does not need to perform scheduling.

Based on the tenth aspect, in some possible implementations, that a first communication device sends first information to a second communication device includes: The first communication device sends DRX configuration request information to the third communication device, where the DRX configuration request information includes at least one of the following: a request reason indicating that DRX configuration information does not match resource configuration information, the first resource configuration information, an expected DRX configuration, or a DRX adjustment amount.

Based on the tenth aspect, in some possible implementations, that a first communication device sends first information to a second communication device, and sends second information to a third communication device includes: The first communication device sends resource configuration failure information to the second communication device, and sends DRX configuration request information to the third communication device.

According to an eleventh aspect, this application provides a communication apparatus, where the apparatus is configured to perform the communication method according to any one of the first aspect to the tenth aspect and the possible implementations of the first aspect to the tenth aspect.

According to a twelfth aspect, this application provides a communication apparatus, including a processor and a memory, where the processor is coupled to the memory, and the processor is configured to read and execute instructions in the memory, to implement the communication method according to any one of the first aspect to the tenth aspect and the possible implementations of the first aspect to the tenth aspect.

According to a thirteenth aspect, this application provides a communication system, including the communication apparatus according to any one of the twelfth aspect and the possible implementations of the twelfth aspect.

According to a fourteenth aspect, this application provides a computer-readable storage medium, where the computer-readable storage medium stores a computer program or instructions, and when the computer program or the instructions is/are executed, a computer is enabled to perform the communication method according to any one of the first aspect to the tenth aspect and the possible implementations of the first aspect to the tenth aspect.

It should be understood that technical solutions of the ninth aspect to the twelfth aspect of this application are consistent with technical solutions of the first aspect to the eighth aspect of this application, and advantageous effects achieved by the aspects and the corresponding feasible implementations are similar. Details are not described again.

### BRIEF DESCRIPTION OF DRAWINGS

The following describes the accompanying drawings required for describing embodiments or the background of this application.
FIG. 1 is a schematic diagram of an architecture of a communication system according to an embodiment of this application;
FIG. 2 is a schematic diagram of another architecture of a communication system according to an embodiment of this application;
FIG. 3 is a schematic flowchart of a communication method in a scenario in which UE autonomously selects a resource according to an embodiment of this application;
FIG. 4 is a first schematic diagram of a resource and a DRX active time according to an embodiment of this application;
FIG. 5 is a second schematic diagram of a resource and a DRX active time according to an embodiment of this application;
FIG. 6 is a third schematic diagram of a resource and a DRX active time according to an embodiment of this application;
FIG. 7 is a first schematic flowchart of a communication method on a first communication device side according to an embodiment of this application;
FIG. 8 is a second schematic flowchart of a communication method on a first communication device side according to an embodiment of this application;
FIG. 9 is a third schematic flowchart of a communication method on a first communication device side according to an embodiment of this application;
FIG. 10 is a schematic diagram of a resource and a DRX active time corresponding to a current service according to an embodiment of this application;
FIG. 11 is a schematic flowchart of a communication method according to an embodiment of this application;
FIG. 12 is a schematic diagram of a structure of a communication apparatus according to an embodiment of this application;
FIG. 13 is a schematic diagram of another structure of a communication apparatus according to an embodiment of this application;
FIG. 14 is a schematic diagram of still another architecture of a communication system according to an embodiment of this application;
FIG. 15 is a fourth schematic flowchart of a communication method on a first communication device side according to an embodiment of this application;
FIG. 16 is a schematic diagram of a first scenario of a resource configuration and a DRX configuration according to an embodiment of this application;
FIG. 17 is a schematic diagram of a second scenario of a resource configuration and a DRX configuration according to an embodiment of this application;
FIG. 18 is a schematic diagram of a third scenario of a resource configuration and a DRX configuration according to an embodiment of this application;
FIG. 19 is a schematic diagram of a fourth scenario of a resource configuration and a DRX configuration according to an embodiment of this application;
FIG. 20 is a schematic diagram of a fifth scenario of a resource configuration and a DRX configuration according to an embodiment of this application;
FIG. 21 is a fifth schematic flowchart of a communication method on a first communication device side according to an embodiment of this application;
FIG. 22 is a schematic diagram of a sixth scenario of a resource configuration and a DRX configuration according to an embodiment of this application;
FIG. 23 is a schematic diagram of a seventh scenario of a resource configuration and a DRX configuration according to an embodiment of this application;
FIG. 24 is a schematic diagram of an eighth scenario of a resource configuration and a DRX configuration according to an embodiment of this application;
FIG. 25 is a schematic diagram of a ninth scenario of a resource configuration and a DRX configuration according to an embodiment of this application;
FIG. 26 is a schematic diagram of a tenth scenario of a resource configuration and a DRX configuration according to an embodiment of this application; and
FIG. 27 is a schematic diagram of still another structure of a communication apparatus according to an embodiment of this application.

### DESCRIPTION OF EMBODIMENTS

The following describes embodiments of this application with reference to the accompanying drawings in embodiments of this application. In the following descriptions, reference is made to the accompanying drawings that form a part of this application and show specific aspects of embodiments of this application in an illustrative manner or in which specific aspects of embodiments of this application may be used. It should be understood that embodiments of this application may be used in other aspects, and may include structural or logical changes not depicted in the accompanying drawings. For example, it should be understood that the disclosure with reference to the described method may also be applied to a corresponding device or system for performing the method, and vice versa. For example, if one or more specific method steps are described, a corresponding device may include one or more units such as functional units for performing the described one or more method steps (for example, one unit performs the one or more steps; or a plurality of units, each of which performs one or more of the plurality of steps), even if such one or more units are not explicitly described or illustrated in the accompanying drawings. In addition, for example, if a specific apparatus is described based on one or more units such as a functional unit, a corresponding method may include one step for implementing functionality of one or more units (for example, one step for implementing functionality of one or more units; or a plurality of steps, each of which is for implementing functionality of one or more units in a plurality of units), even if such one or more of steps are not explicitly described or illustrated in the accompanying drawings. Further, it should be understood that features of various example embodiments and/or aspects described in this specification may be combined with each other, unless otherwise specified.

A new radio (new radio, NR) system is a current mainstream wireless communication technology. For a vehicle to everything (vehicle to everything, V2X) service feature and a new service transmission requirement, the new radio system intends to support V2X communication with a lower latency and higher reliability. However, on a sidelink (sidelink, SL), receive user equipment (RX UE) keeps monitoring SCI to check whether there is information from transmit user equipment (TX UE). However, in the sidelink, there is not always service transmission between the RX UE and the TX UE. In this case, when there is no data exchange between the transmit UE and the receive UE, if the RX UE still continuously monitors the SCI, power consumption of the RX UE increases.

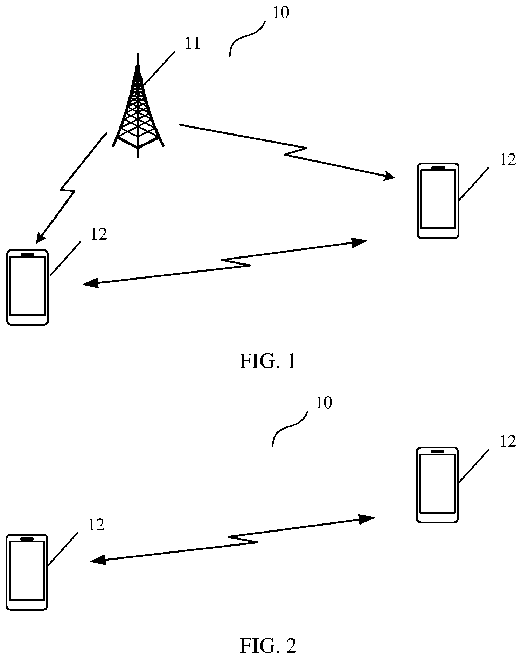

To resolve a problem of high power consumption caused by continuous monitoring the SCI by the UE on the sidelink, an embodiment of this application provides a communication method. The communication method may be applied to a communication system. The communication system may be a sidelink communication system. The sidelink communication system may be applied to fields such as the vehicle to everything (vehicle to everything, V2X), an intelligent connected vehicle, and a self-driving vehicle. The communication system may include at least one communication device. In a scenario, FIG. 1 is a schematic diagram of an architecture of a communication system according to an embodiment of this application. Refer to FIG. 1, the communication system 10 may include a network device 11 and a terminal device 12. In another scenario, FIG. 2 is a schematic diagram of another architecture of a communication system according to an embodiment of this application. Refer to FIG. 2, the communication system 10 may further include a plurality of terminal devices 12. Certainly, in this embodiment of this application, a type and a quantity of network elements included in the communication system, and a connection relationship between network elements are not limited thereto.

In this embodiment of this application, when communicating with the network device, the terminal device may further communicate with another terminal device. The network device may perform resource configuration, scheduling, coordination, and the like on a sidelink (sidelink) for communication between terminal devices, to assist direct communication between the terminal devices. Alternatively, the terminal device may autonomously perform resource configuration, scheduling, coordination, and the like on a sidelink for communication between other terminal devices. This is not specifically limited in this embodiment of this application.

In some possible implementations, the network device may be a device configured on an access network side to support the terminal to access a wireless communication system, for example, may be a next generation NodeB (next generation NodeB, gNB) in a communication system based on the 5G access technology, a transmission reception point (transmission reception point, TRP), a relay node (relay node), an access point (access point, AP), or a roadside apparatus (road site unit, RSU).

The terminal device may be a device that provides voice or data connectivity for a user, for example, may also be referred to as user equipment (user equipment, UE), a mobile station (mobile station), a subscriber unit (subscriber unit), a station (STAtion), or terminal equipment (terminal equipment, TE). The communication device may be a cellular phone (cellular phone), a personal digital assistant (personal digital assistant, PDA), a wireless modem (modem), a handheld V2P device (handheld vehicle to pedestrian), a laptop computer (laptop computer), a cordless phone (cordless phone), a wireless local loop (wireless local loop, WLL) or a tablet computer (pad), a relay node, an AP, or the like. With development of wireless communication technologies, a device that can access a wireless communication system, communicate with a network side of a wireless communication system, or communicate with another device by using a wireless communication system may be the terminal device in embodiments of this application, such as a terminal, a vehicle, or an RSU in intelligent transportation, a household device in a smart household, an electricity meter reading instrument in a smart grid, a voltage monitoring instrument, an environment monitoring instrument, a video surveillance instrument in an intelligent security network, or a cash register. The communication device may be statically fixed, or may be mobile.

Further, in a sidelink transmission scenario, the communication device (which may include a terminal device and/or a network device) may be classified into a transmit end device and a receive end device based on a data transmission direction. The transmit end device may include a transmit end network device, a transmit terminal device, transmit end user equipment, and the like. The receive end device may include a receive end network device, a receive terminal device, receive end user equipment, and the like.

It should be noted that the transmit end device (or the transmit end network device, the transmit terminal device, the transmit end user equipment, or the like) and the receive end device (or the receive end network device, the receive terminal device, the receive end user equipment, or the like) are specific to a sidelink connection (sidelink connection). For example, for a sidelink connection A, a communication device (or a network device, a terminal device, or user equipment) may be a transmit end device (or a transmit end network device, a transmit terminal device, or transmit end user equipment). For a sidelink connection B, the communication device (or the network device, the terminal device, or the user equipment) may be a receive end device (or a receive end network device, a receive terminal device, or receive end user equipment).

The following describes the communication method provided in embodiments of this application with reference to the communication system.

On an NR SL, a network device such as a base station configures a resource pool for SL communication of UE, and one resource pool is a set of some time-frequency resources. A resource used by the UE to perform communication on the SL link is determined from a preconfigured resource pool or a resource pool configured on the base station side. Specifically, there are two modes in which the TX UE obtains, from the network device, the transmission resource used for communication on the SL link: a mode 1 and a mode 2. The preconfigured resource may be obtained from a network element of a core network, or may be preset on the UE.

In mode 1, the base station allocates the SL transmission resource to the TX UE through scheduling. In this mode, when the TX UE has SL to-be-transmitted data, the TX UE reports an SL buffer status report (buffer status report, BSR) MAC CE to the base station through a Uu interface, to notify the base station of a data volume of to-be-transmitted data of the TX UE on a PC5 interface. The base station may dynamically allocate the transmission resource to the TX UE.

In mode 2, the UE autonomously selects, based on a requirement, the transmission resource from the preconfigured resource pool or the resource pool configured by the base station, and the base station does not need to perform scheduling. The SL resource determined by the UE is configured by the base station (for example, configured by using RRC signaling or a system information block (system information block, SIB)), or preconfigured. The "preconfigure" herein may be obtaining from the network element of the core network, or may be preset on the UE.

In a scenario in which the UE autonomously selects the resource (that is, the mode 2), the TX UE performs resource selection once, and may select at least one resource (which may generally include one to three resources used for one transmission opportunity and corresponding periodic resources) for one service, such as one communication target (indicated by a destination ID such as a destination L1 ID or a destination L2 ID), one sidelink connection (such as a radio resource control (radio resource control, RRC) connection), an SL link, one source and target pair (such as {source L2/L1 ID, destination L2/L1 ID}), one sidelink service, one logical channel, one resource pool, one transport block (transform block, TB), one or more media access control packet data units (medium access control packet data unit, MAC PDU), and the like. The at least one resource is used for new transmission or retransmission of the service. The at least one resource may also be referred to as a reserved resource (reserved resources).

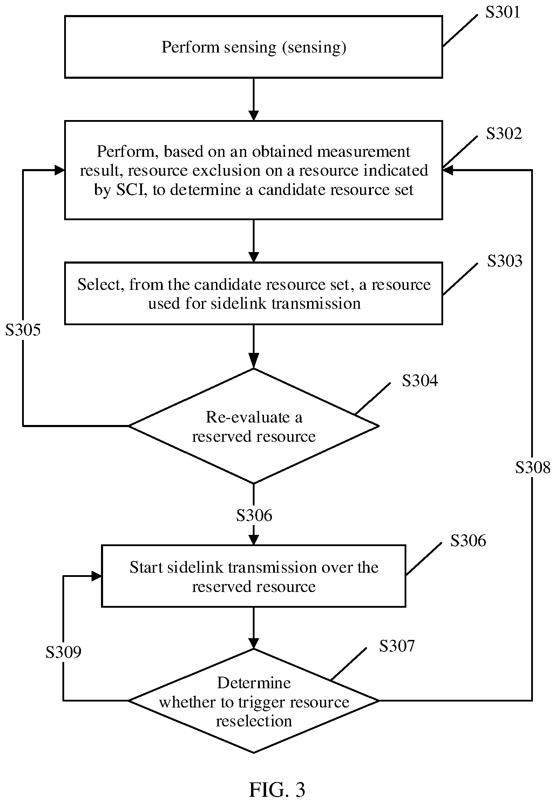

FIG. 3 is a schematic flowchart of a communication method in a scenario in which UE autonomously selects a resource according to an embodiment of this application. Refer to FIG. 3, the method may include the following steps.

S301: TX UE performs sensing (sensing).

The TX UE continuously monitors SCI sent by another UE, and performs measurement according to an indication of the SCI, to obtain a measurement result. Herein, after monitoring the SCI of the another UE, the TX UE demodulates the SCI. Demodulated SCI may reflect at least a resource usage on a sidelink.

In this embodiment of this application, the "measure" may include measuring a sidelink RSRP based on a sidelink demodulation reference signal (demodulation reference signal, DMRS), for example, measuring a reference signal received power (reference signal receiving power, RSRP) of a PSCCH (that is, a PSCCH-RSRP) or a PSSCH-RSRP, or measuring a sidelink received signal strength indicator (sidelink received signal strength indicator, S-RSSI). The PSCCH-RSRP is determined by measuring a DMRS associated with a PSCCH, and the PSSCH-RSRP is determining by measuring a DMRS associated with a PSSCH. Certainly, the UE may further measure another parameter of the resource indicated by the SCI. This is not specifically limited in this embodiment of this application.

S302: The TX UE performs, based on an obtained measurement result, resource exclusion on the resource indicated by the SCI, to determine a candidate resource set.

The TX UE excludes, from the resource indicated by the SCI, a resource whose measurement result meets a condition, to obtain a candidate resource set of the TX UE. In this case, when transmitting a service, the TX UE may select a resource from the candidate resource set for transmission. For example, in S301, the TX UE measures the reference signal received power of the SCI to obtain the PSCCH-RSRP or the PSSCH-RSRP. Then, the TX UE may exclude a resource whose PSCCH-RSRP or PSSCH-RSRP meets a preset condition. Alternatively, the TX UE may exclude, according to an indication of the SCI, a resource occupied by another UE. Alternatively, the TX UE may exclude a resource occupied by the another UE and whose RSRP is greater than a preset threshold.

In actual application, the preset condition may be that an RSRP value is within a preset range. For example, the RSRP value ranks among first 20% of all measured RSRP values in descending or ascending order, or the RSRP value is greater than 70% of all RSRP values. Certainly, the preset condition may alternatively be another condition, for example, may be set based on a transmission priority of the TX UE and a transmission priority indicated in the SCI of the another UE. This is not specifically limited in this embodiment of this application.

In some possible implementations, the TX UE may further demodulate the SCI in S301, to obtain a subcarrier spacing configuration of the resource, and the RX UE may further filter the resource based on the subcarrier spacing configuration of the resource, so that a selected subcarrier spacing can meet a transmission requirement, for use in subsequent sidelink transmission.

Certainly, the TX UE may perform resource exclusion based on another condition. This is not specifically limited in this application.

S303: The TX UE selects, from the candidate resource set, a resource used for sidelink transmission.

The resource selected by the TX UE may be understood as a reserved resource.

After a service arrives, the TX UE first performs resource selection check or resource reselection check to determine whether to trigger resource selection or reselection. If determining to trigger the resource selection or reselection, the TX UE determines a resource reservation cycle, a quantity of hybrid selected automatic repeat request (hybrid automatic repeat request, HARQ) retransmission times, and the like. Then, the TX UE selects, from the candidate resource set based on a quantity of selected frequency domain resources and a remaining packet delay budget (packet delay budge, PDB) of available sidelink data of a logical channel allowed on a carrier, a time-frequency resource used for one transmission opportunity. Further, the TX UE may further determine a resource reservation period over the selected time domain resource and then select a corresponding periodic resource set. If the TX UE determines that there is no retransmission, a time domain resource selected by the TX UE and a periodic resource set corresponding to the time domain resource may be considered as a "selected SL grant (grant)".

Optionally, if the TX UE determines, based on a quantity of HARQ retransmission times, that there is one or more retransmission times and there is still an available resource in a resource indicated by the physical layer for a plurality of transmission opportunities, the TX UE selects a time-frequency resource from the available resource for the one or more transmission opportunities based on a quantity of selected frequency domain resources, a quantity of selected HARQ retransmission times, and a remaining PDB of available SL data of a logical channel allowed on a carrier. Then, a corresponding periodic resource set is selected based on the time-frequency resource and the resource reservation period, and the selected resource and the periodic resource set corresponding to the selected resource are considered as a "selected SL grant" (resource).

In this embodiment of this application, the service in S303 may include one or a combination of a communication target, a sidelink connection (such as a source and target pair and a sidelink link), a logical channel, a resource pool (resource pool), a sidelink service, a MAC PDU, a TB, and the like. This is not specifically limited in this embodiment of this application. When the service is the MAC PDU, there may be one or more MAC PDUs. It should be noted that the communication target may be identified by using a destination ID (a communication target identifier). This is not specifically limited in this application.

S304: The TX UE re-evaluates the reserved resource.

Before performing service transmission, the TX UE further re-evaluates the reserved resource to check whether the reserved resource selected in S303 can be used for sidelink transmission, to ensure that a finally selected resource can be used for sidelink transmission.

S305: If an evaluation result indicates that the reserved resource cannot be used for sidelink transmission, the TX UE triggers resource reselection, and returns to S302.

S306: If an evaluation result indicates that the reserved resource can be used for sidelink transmission, the TX UE starts sidelink transmission over the reserved resource.

S307: In a process of performing transmission over the reserved resource, the TX UE determines whether to trigger resource reselection.

In S305 and S307, the reserved resource may not be used for sidelink transmission due to some reasons. Therefore, the TX UE further needs to evaluate the first resource, to determine whether to trigger resource reselection. For example, the foregoing reasons may include: an upper layer configures or reconfigures a resource pool; there is no configured sidelink grant; a MAC entity has no new transmission or retransmission over any resource indicated by the configured sidelink grant in the past second; sl-ReselectAfter is configured and consecutive unused transmission opportunities indicated by the configured sidelink grant reach sl-ReselectAfter; a transmission resource indicated by the configured sidelink grant cannot meet a latency requirement of data on a logical channel determined based on a priority of corresponding logical channels, and the MAC entity selects not to transmit a corresponding single MAC PDU; or a priority of a logical channel indicated by SCI received by the UE is higher than a priority of a logical channel of to-be-transmitted data, transmission of an SL scheduled by the SCI is expected to overlap a currently reserved resource, and an SL-RSRP measurement result of transmission of the SL indicated by the SCI is higher than a threshold. When the first resource meets any one of the foregoing conditions, a reserved resource (if any) associated with the SL process is cleared, and the TX UE triggers resource selection/reselection.

S308: If resource reselection is triggered, the TX UE returns to S302.

S309: If resource reselection is not triggered, the TX UE continues to use the reserved resource for sidelink transmission.

In the foregoing process, the TX UE autonomously selects the resource for sidelink transmission. To reduce power consumption of the RX UE, a DRX function may be configured for the RX UE. One DRX cycle (DRX cycle) may be divided into an active time (onduration) and a sleep period (opportunity for DRX). A time period of the "on duration" is a time period for the UE to monitor downlink PSCCH and/or PSSCH subframes. During this time period, the UE is in a wake-up state and can receive transmission from the TX UE. A time period of the "opportunity for DRX" is a DRX sleep time period, that is, a time period in which the UE enters a sleep state to save power, and turns off its own receiver without monitoring the PSCCH and/or PSSCH subframes. In this way, if the RX UE does not monitor the SCI in the active time, the RX UE may enter the sleep period. Consequently, the RX UE cannot receive sidelink transmission on the resource selected by the TX UE.

In actual application, the active time in the DRX configuration may be periodic.

In this case, to resolve this problem, an embodiment of this application provides a communication method, which may be applied to the first communication device in the foregoing communication system, for example, the TX UE.

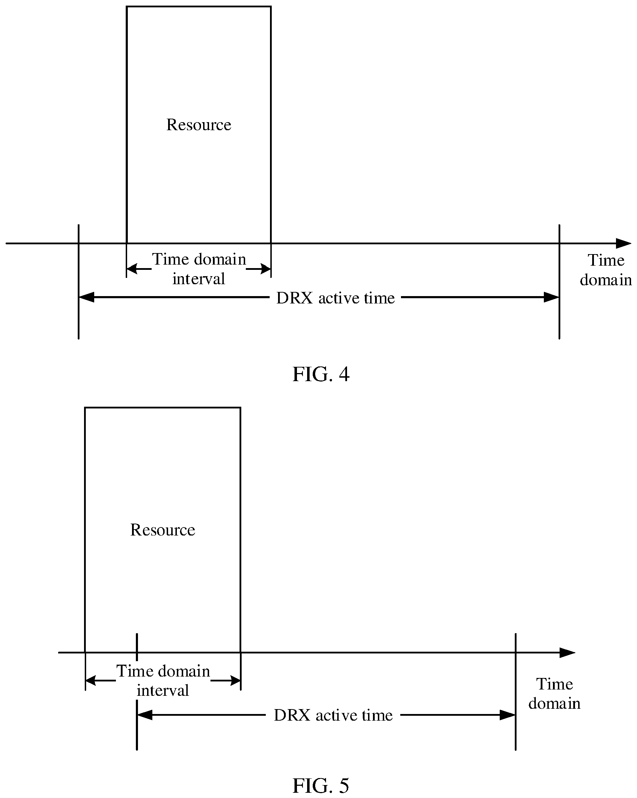

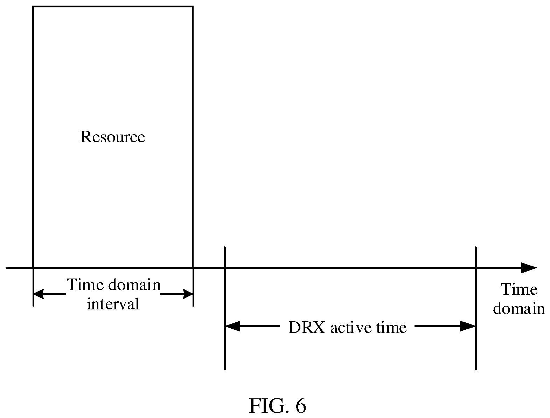

First, it should be noted that "there is an intersection between the resource and the DRX active time in time domain" described in this embodiment of this application may be understood as follows: All or some of the resources are within a time range of the DRX active time in time domain. Conversely, "there is no intersection between the resource and the DRX active time in time domain" may be understood as follows: The resource is located outside a time range of the DRX active time in time domain, and the resource is separated from the DRX active time in time domain. For example, FIG. 4 is a first schematic diagram of a resource and a DRX active time according to an embodiment of this application. Refer to FIG. 4, in time domain, the resource is within a time range of the DRX active time, that is, the resource is included in the DRX active time. Alternatively, FIG. 5 is a second schematic diagram of a resource and a DRX active time according to an embodiment of this application. Refer to FIG. 5, in time domain, some of resources, for example, at least one symbol, are within the DRX active time. FIG. 6 is a third schematic diagram of a resource and a DRX active time according to an embodiment of this application. As shown in FIG. 6, in time domain, no symbol on the resource is located in the DRX active time. In another embodiment of this application, for a relationship between the resource and the DRX active time in time domain, refer to descriptions in FIG. 4 to FIG. 6. Details are not described below again.

In this embodiment of this application, "when..." is merely used to indicate an execution condition of a step, and an execution occasion of the step is not limited. Alternatively, "when..." may be understood as "if' or "if'.

In some possible implementations, a DRX configuration may be configured on an each (per)-service basis, and DRX configuration information may include the DRX active time. Herein, the "service" may be described above, and may include one or a combination of a communication target, a sidelink connection, a source and target pair, a sidelink link, a logical channel, a resource pool, a sidelink service, a MAC PDU, a TB, and the like. This is not specifically limited in this embodiment of this application.

Assuming that the first service is a communication target identified by a destination ID, DRX configuration information may be configured for each destination ID. It may be understood that the DRX configuration may be configured by the base station for the UE, may be determined by the TX UE or the RX UE itself, may be configured through negotiation between the TX UE and the RX UE, or may be preset on the UE. This is not specifically limited in this embodiment of this application.

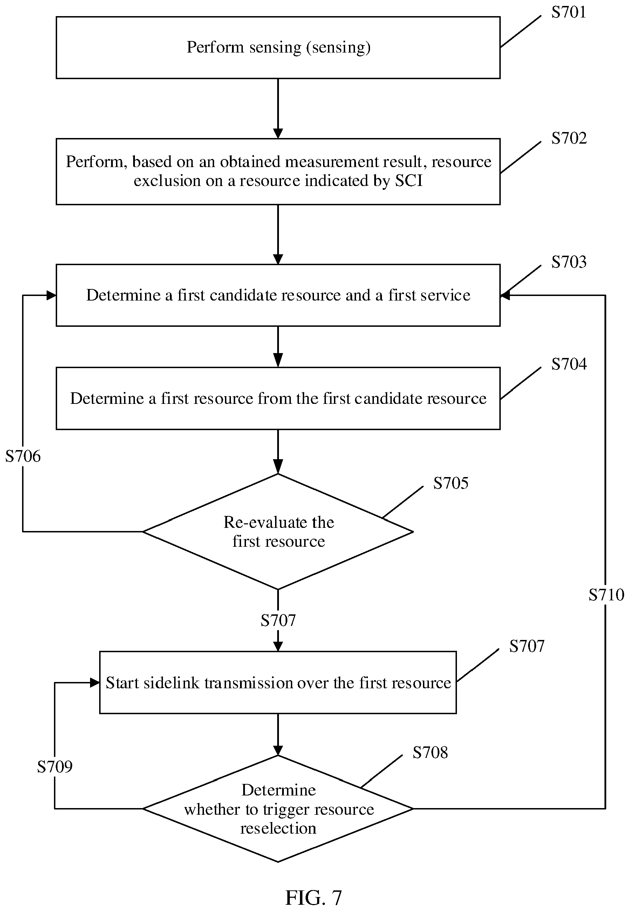

FIG. 7 is a first schematic flowchart of a communication method on a first communication device side according to an embodiment of this application. Refer to FIG. 7, the method includes the following steps.

S701: The first communication device performs sensing (sensing).

The first communication device continuously monitors SCI sent by another UE, and performs measurement according to an indication of the SCI, to obtain a measurement result. Herein, after monitoring the SCI of the another UE, the first communication device demodulates the SCI. Demodulated SCI may reflect at least a resource usage on a sidelink.

In this embodiment of this application, the "measure" may include measuring an L1 sidelink RSRP based on a sidelink DMRS, for example, measuring an RSRP of a PSCCH (that is, a PSCCH-RSRP) or a PSSCH-RSRP; or measuring an S-RSSI. The PSCCH-RSRP is obtained by measuring a DMRS associated with a PSCCH, and the PSSCH-RSRP is obtained by measuring a DMRS associated with a PSSCH. Certainly, the first communication device may further measure another parameter of the SCI. This is not specifically limited in this embodiment of this application.

S702: The first communication device performs, based on the obtained measurement result, resource exclusion on a resource indicated by the SCI.

The first communication device excludes, from the resource indicated by the SCI, a resource whose measurement result meets a condition, to obtain a candidate resource set of the first communication device. In this case, when transmitting a service, the first communication device may select a resource from the candidate resource set for transmission. For example, in S701, the first communication device measures the reference signal received power of the SCI to obtain the PSCCH-RSRP or the PSSCH-RSRP. Then, the first communication device may exclude a resource whose PSCCH-RSRP or PSSCH-RSRP meets a preset condition. Alternatively, the first communication device may exclude, according to an indication of the SCI, a resource occupied by another UE. Alternatively, the first communication device may exclude a resource occupied by the another UE and whose corresponding RSRP is greater than a preset threshold.

In actual application, the preset condition may be that an RSRP value is within a preset range. For example, the RSRP value ranks among first 20% of all measured RSRP values in descending or ascending order, or the RSRP value is greater than 70% of all RSRP values. Certainly, the preset condition may alternatively be another condition, for example, may be set based on a transmission priority of the first communication device and a transmission priority indicated in the SCI of the another UE. This is not specifically limited in this embodiment of this application.

In some possible implementations, the first communication device may further demodulate the SCI in S701, to obtain a subcarrier spacing configuration of the resource, and the first communication device may further filter the resource based on the subcarrier spacing configuration of the resource, so that a selected subcarrier spacing meets a transmission requirement, for use in subsequent sidelink transmission.

Certainly, the first communication device may perform resource exclusion based on another condition. This is not specifically limited in this application.

S703: The first communication device determines a first candidate resource and a first service that are used for sidelink transmission.

The first communication device determines the first candidate resource in S702, and obtains the first service that can be currently determined by the first communication device. The first service may include a current service and/or a historical service. Herein, the "first service" may be described above. It is assumed that the first service is a communication target identified by a destination ID. The first communication device may determine at least one destination ID as a candidate destination ID set. The candidate destination ID set may include a currently optional destination ID and/or a historically optional destination ID of the first communication device.

S704: The first communication device determines a first resource from the first candidate resource.

Because a DRX configuration is configured for the first service, the first communication device may select, from the first candidate resource, a resource that has an intersection with the first active time as a second candidate resource, and further determine the first resource from the second selected resource. In this case, the first resource may be understood as a reserved resource.

In this embodiment of this application, the first communication device may determine the first resource from the second candidate resource by using the method described in S303.

In this embodiment of this application, to match a resource with a DRX active time of the first service, the first active time may include at least one DRX active time corresponding to the first service. For example, the first active time may be a DRX active time corresponding to one destination ID or DRX active times corresponding to a plurality of destination IDs.

It may be understood that, if there are a plurality of destination IDs, the first active time may be a union set of a plurality of DRX active times in DRX configurations corresponding to the plurality of destination IDs. In this case, the first communication device may select, from the first candidate resource, a resource that has an intersection with the union set as the second candidate resource. Then, the first communication device may further select the first resource from the second candidate resource. For example, the first communication device selects, from the first candidate resource, a resource that is partially or completely located in the union set formed by the foregoing plurality of DRX active times as the second candidate resource, then selects, from the second candidate resource, a time-frequency resource used for one transmission opportunity based on a quantity of selected frequency domain resources and a remaining PDB of available sidelink data of a logical channel allowed on a carrier, and further may determine a resource reservation period over the selected time domain resource and then select a corresponding periodic resource.

Alternatively, if there is one destination ID, and the first active time may be a plurality of DRX active times in a DRX configuration corresponding to the destination ID, the first communication device may select a resource whose intersection with the DRX active time corresponding to the first service in time domain meets a first condition as the second candidate resource.

In actual application, the foregoing first condition may include: an intersection with the DRX active time corresponding to the first service is largest in time domain, an intersection with the DRX active time corresponding to the first service in time domain is within a preset range (which may be an empirical value), an intersection with the DRX active time corresponding to the first service in time domain is greater than a preset threshold, or the like. For example, if a DRX active time corresponding to one destination ID is a subframe 0, the first communication device determines a resource that is in the first candidate resource and whose quantity of symbols in an intersection with the subframe 0 is largest as the second candidate resource; the first communication device determines a resource that is in the first candidate resource and whose quantity of symbols in an intersection with the subframe 0 is greater than 80% (that is, 11 symbols) as the second candidate resource; or the first communication device determines a resource that is in the first candidate resource and that is in a symbol 1 to a symbol 12 in the subframe 0 as the second candidate resource. Similarly, DRX active times corresponding to one destination ID is a subframe 0, a subframe 3, and a subframe 6. In this case, the first communication device determines a plurality of resources that are in the first candidate resource and that have largest intersections with the subframe 0, the subframe 3, and the subframe 6 as second candidate resources, that is, selects a resource a that has a largest intersection with the subframe 0, a resource b that has a largest intersection with the subframe 3, and a resource c that has a largest intersection with the subframe 6 in the first candidate resource, and determines the resource a, the resource b, and the resource c as the second candidate resources; the first communication device determines a plurality of resources that are in the first candidate resource and whose quantities of symbols in intersections with the subframe 0, the subframe 3, and the subframe 6 are greater than 80% as second candidate resources; or the first communication device determines a plurality of resources that are in the first candidate resource and that are respectively located in a symbol 1 to a symbol 12 in the subframe 0, a symbol 1 to a symbol 12 in the subframe 3, and a symbol 1 to a symbol 12 in the subframe 6 as second candidate resources. Certainly, the first condition may alternatively be another condition. This is not specifically limited in this embodiment of this application.

In this case, the first communication device completes resource selection.

S705: The first communication device re-evaluates the first resource.

Before service transmission, the first communication device further re-evaluates the first resource, to check whether the first resource selected in S703 can be used for sidelink transmission. For example, if when a new service arrives, the first resource is occupied by another UE, or the like, the previously selected first resource may not be used for sidelink transmission. Therefore, the first communication device needs to re-evaluate the selected first resource.

S706: If an evaluation result indicates that the first resource cannot be used for sidelink transmission, the first communication device triggers resource reselection, and returns to S702.

S707: If an evaluation result indicates that the first resource can be used for sidelink transmission, the first communication device starts sidelink transmission over the first resource.

S708: In a process of performing transmission over the first resource, the first communication device determines whether to trigger resource reselection.

In the sidelink transmission process of the first communication device, the first resource may not be used for sidelink transmission due to some reasons. Therefore, the first communication device further needs to evaluate the first resource, to determine whether to trigger resource reselection. For example, the foregoing reasons may include: an upper layer configures or reconfigures a resource pool; there is no configured sidelink grant; a MAC entity has no new transmission or retransmission over any resource indicated by the configured sidelink grant in the past second; sl-ReselectAfter is configured and consecutive unused transmission opportunities indicated by the configured sidelink grant reach sl-ReselectAfter; a transmission resource indicated by the configured sidelink grant cannot meet a latency requirement of data on a logical channel determined based on a priority of corresponding logical channels, and the MAC entity selects not to transmit a corresponding single MAC PDU; or a priority of a logical channel indicated by SCI received by the UE is higher than a priority of a logical channel of to-be-transmitted data, transmission of an SL scheduled by the SCI is expected to overlap a currently reserved resource, and an SL-RSRP measurement result of transmission of the SL indicated by the SCI is higher than a threshold. When the first resource meets any one of the foregoing conditions, a reserved resource (if any) associated with the SL process is cleared, and the TX UE triggers resource selection/reselection.

S709: If resource reselection is triggered, the first communication device returns to S702.

S710: If resource reselection is not triggered, the first communication device continues to use the first resource for sidelink transmission.

In some possible implementations, the first resource selected by the first communication device in S703 and S704 may further be used as a candidate resource, so that the first communication device selects a reserved resource from the candidate resource, and further performs S705 to S710.

In this embodiment of this application, according to the method described in S701 to S710, the first communication device selects a resource that has an intersection with the DRX active time corresponding to the first service as a reserved resource, and performs sidelink transmission over the reserved resource. This can ensure that the first communication device can receive transmission from a second communication device (for example, TX UE) within the active time, reduce power consumption of the RX UE, and ensure sidelink transmission between the first communication device and the second communication device.

In some possible implementations, to improve a matching degree between the reserved resource and the DRX active time of the first service, if in a scenario of the plurality of destination IDs, before starting sidelink transmission over the first resource in S707, the first communication device may further select the first service, that is, the destination ID, the first communication device may select, from the plurality of destination IDs, a destination ID (used to identify a second service) that corresponds a DRX active time having an intersection with the first resource in time domain, in other words, there is an intersection between a DRX active time corresponding to the last selected destination ID and the reserved resource in time domain.

In some possible implementations, before performing S706, the first communication device may further select a destination ID by using the foregoing method, so that there is an intersection between the selected destination ID and the reserved resource in time domain.

In some possible implementations, to improve the matching degree between the reserved resource and the DRX active time of the first service, when the first communication device performs S701, a MAC layer of the first communication device may first determine a union set, that is, the first active time, of DRX active times in the at least one DRX configuration in time domain, and indicate the union set to a physical layer. Herein, the at least one DRX configuration may be some or all DRX configurations that can be determined by the first communication device. For example, the at least one DRX configuration may include a DRX configuration of the first service. Then, the physical layer performs sensing within the first active time, demodulates SCI of another UE, and performs measurement, for example, measuring a PSCCH-RSRP or a PSSCH-RSRP, or measuring an S-RSSI. The PSCCH-RSRP is determined by measuring a DMRS associated with a PSCCH, and the PSSCH-RSRP is determining by measuring a DMRS associated with a PSSCH. Certainly, the first communication device may further measure another parameter of the resource indicated by the SCI. This is not specifically limited in this embodiment of this application.

It may be understood that, if the first communication device monitors the SCI within the first active time, the SCI is within the first active time. In this case, it may also be considered that the first communication device measures the SCI within the first active time.

In some possible implementations, to improve the matching degree between the reserved resource and the DRX active time of the first service, when the first communication device further performs resource exclusion on the candidate resource in S702, the MAC layer of the first communication device first indicates, to the physical layer, a union set of DRX active times corresponding to the first service and/or a union set of DRX active times corresponding to aperiodic services in a current service and a historical service in the first service; and then the physical layer excludes a resource from the second resource, and determines a resource that has an intersection with the union set as the first candidate resource. It may be understood that the first candidate resource needs to meet at least one of the following conditions: there is an intersection with a union set of DRX active times corresponding to the first service in time domain, and there is an intersection with a union set of DRX active times corresponding to aperiodic services in a current service and a historical service in the first service in time domain.

In some possible embodiments, the physical layer may further exclude the resource from the first candidate resource by using the method in S702, to determine the candidate resource, and further determine the first resource. This is not specifically limited in this embodiment of this application.

It should be noted that the second resource may be a resource that is in a selection window and that corresponds to the resource determined by the physical layer through sensing, or may be a remaining resource obtained after the physical layer performs resource exclusion in S702 from the resource selection determined through sensing.

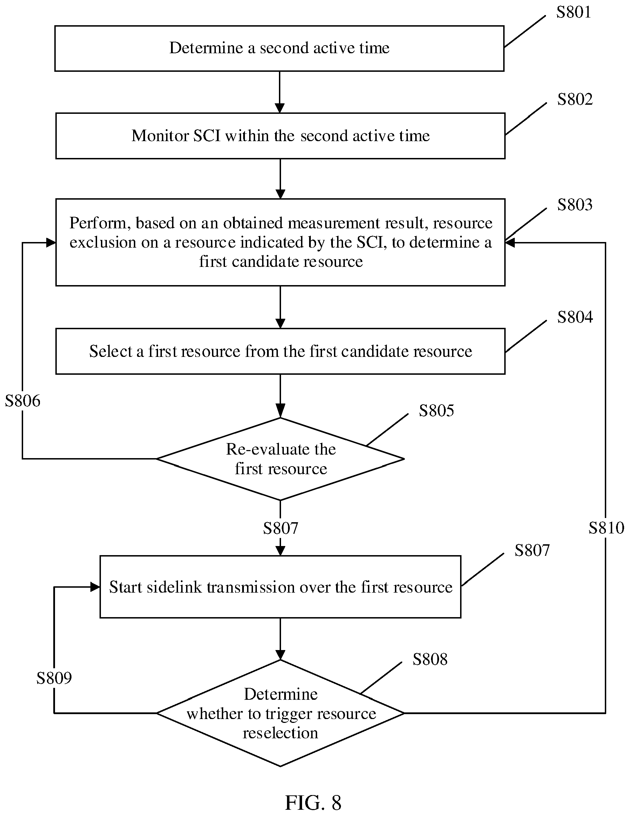

In other embodiments of this application, FIG. 8 is a second schematic flowchart of a communication method on a first communication device side according to an embodiment of this application. Refer to FIG. 8, the method includes the following steps.

S801: The first communication device determines a second active time.

S802: The first communication device monitors, within the second active time, SCI sent by another UE.

Herein, the SCI indicates a resource used by another UE for sidelink transmission.

In this application, after determining the second active time, a MAC layer of the first communication device indicates the second active time to a physical layer of the first communication device. The physical layer monitors, within the second active time, the SCI sent by the another UE, and further the physical layer performs measurement within the second active time.

In some possible implementations, first, the first communication device determines a union set, that is, the second active time, of DRX active times in time domain in at least one DRX configuration. Herein, the at least one DRX configuration may be some or all DRX configurations that can be determined by the first communication device. For example, the at least one DRX configuration may include a DRX configuration of the first service.

Further, after S802, the first communication device may perform measurement within the second active time based on the SCI, that is, measure the SCI, for example, measuring a PSCCH-RSRP or a PSSCH-RSRP, or measuring an S-RSSI. The PSCCH-RSRP is determined by measuring a DMRS associated with a PSCCH, and the PSSCH-RSRP is determining by measuring a DMRS associated with a PSSCH. Certainly, the first communication device may further measure another parameter of the SCI. This is not specifically limited in this embodiment of this application.

It may be understood that, if the first communication device monitors the SCI within the second active time, the SCI is within the second active time. In this case, it may also be considered that the first communication device measures the SCI within the second active time.

In this case, the first communication device completes sensing in the second active time.

S803: The first communication device performs, based on an obtained measurement result, resource exclusion on a resource indicated by the SCI, to determine the first candidate resource.

The first communication device excludes, from the resource indicated by the SCI, a resource whose measurement result meets a condition, to obtain a candidate resource set of the first communication device. In this case, when transmitting a service, the first communication device may select a resource from the candidate resource set for transmission. For example, in S801, the first communication device measures the reference signal received power of the SCI to determine the PSCCH-RSRP or the PSSCH-RSRP. Then, the first communication device may exclude a resource whose PSCCH-RSRP or PSSCH-RSRP meets a preset condition. Alternatively, the first communication device may exclude, according to an indication of the SCI, a resource occupied by another UE. Alternatively, the first communication device may exclude a resource occupied by the another UE and whose RSRP is greater than a preset threshold.

In actual application, the preset condition may be that an RSRP value is within a preset range. For example, the RSRP value ranks among first 20% of all measured RSRP values in descending or ascending order, or the RSRP value is greater than 70% of all RSRP values. Certainly, the preset condition may alternatively be another condition, for example, may be set based on a transmission priority of the first communication device and a transmission priority indicated in the SCI of the another UE. This is not specifically limited in this embodiment of this application.

In some possible implementations, the first communication device may further demodulate the SCI in S801, to determine a subcarrier spacing configuration of the resource, and the first communication device may further filter the resource based on the subcarrier spacing configuration of the resource, so that a selected subcarrier spacing meets a transmission requirement, for use in subsequent sidelink transmission.

Certainly, the first communication device may perform resource exclusion based on another condition. This is not specifically limited in this application.

S804: The first communication device selects, from the first candidate resource, a first resource used for sidelink transmission.

After the first service arrives, the first communication device may select, from the first candidate resource, a reserved resource, that is, the first resource, for the first service.

In this embodiment of this application, the service may include one or a combination of a communication target, a sidelink connection, a source and target pair, a sidelink link, a logical channel, a resource pool, a sidelink service, a MAC PDU, a TB, and the like. This is not specifically limited in this embodiment of this application.

S805: The first communication device re-evaluates the first resource.

Before service transmission, the first communication device further re-evaluates the first resource, to check whether the first resource selected in S803 can be used for sidelink transmission. For example, if when a new service arrives, the first resource is occupied by another UE, or the like, the previously selected first resource may not be used for sidelink transmission. Therefore, the first communication device needs to re-evaluate the selected first resource.

S806: If an evaluation result indicates that the first resource cannot be used for sidelink transmission, the first communication device triggers resource reselection, and returns to S802.

S807: If an evaluation result indicates that the first resource can be used for sidelink transmission, the first communication device starts sidelink transmission over the first resource.

S808: In a process of performing transmission over the first resource, the first communication device determines whether to trigger resource reselection.

In the sidelink transmission process of the first communication device, the first resource may not be used for sidelink transmission due to some reasons. Therefore, the first communication device further needs to evaluate the first resource, to determine whether to trigger resource reselection. For example, the foregoing reasons may include: an upper layer configures or reconfigures a resource pool; there is no configured sidelink grant; a MAC entity has no new transmission or retransmission over any resource indicated by the configured sidelink grant in the past second; sl-ReselectAfter is configured and consecutive unused transmission opportunities indicated by the configured sidelink grant reach sl-ReselectAfter; a transmission resource indicated by the configured sidelink grant cannot meet a latency requirement of data on a logical channel determined based on a priority of corresponding logical channels, and the MAC entity selects not to transmit a corresponding single MAC PDU; or a priority of a logical channel indicated by SCI received by the UE is higher than a priority of a logical channel of to-be-transmitted data, transmission of an SL scheduled by the SCI is expected to overlap a currently reserved resource, and an SL-RSRP measurement result of transmission of the SL indicated by the SCI is higher than a threshold. When the first resource meets any one of the foregoing conditions, a reserved resource (if any) associated with the SL process is cleared, and the first communication device triggers resource selection/reselection.

S809: If resource reselection is triggered, the first communication device returns to S802.

S810: If resource reselection is not triggered, the first communication device continues to use the first resource for sidelink transmission.

In this embodiment of this application, according to the method described in S801 to S810, the first communication device selects a resource that has an intersection (that is, the second active time) with the DRX active time corresponding to the first service as a reserved resource, and performs sidelink transmission over the reserved resource. This can ensure that the first communication device can receive transmission from a second communication device (for example, TX UE) within the active time, reduce power consumption of the RX UE, and ensure sidelink transmission between the first communication device and the second communication device.

In some possible implementations, to improve a matching degree between the reserved resource and the DRX active time of the first service, after S803, the first communication device may further determine a first candidate resource and a first service that are used for sidelink transmission; and the first communication device determines a first resource from the first candidate resource.

After determining the first candidate resource in S803, the first communication device may further obtain the first service that can be currently determined by the first communication device. Because a DRX configuration is configured for the first service, the first communication device may select, from the first candidate resource, a resource that has an intersection with the second active time as a second candidate resource, and further determine the first resource from the second selected resource. In this case, the first resource may be understood as a reserved resource. Herein, the first device may include a current service and/or a historical service. The "first service" is described above. It is assumed that the first service is a communication target identified by a destination ID. The first communication device may determine at least one destination ID as a candidate destination ID set. The candidate destination ID set may include a currently optional destination ID and/or a historically optional destination ID of the first communication device.

In this embodiment of this application, to match the resource with DRX active time of the first service, the second active time may be an active time corresponding to one destination ID or active times corresponding to a plurality of destination IDs.

In this case, if there are a plurality of destination IDs, the second active time may be a union set of a plurality of DRX active times in DRX configurations corresponding to the plurality of destination IDs. In this case, the first communication device may select, from the first candidate resource, a resource that has an intersection with the union set as the second candidate resource. Then, the first communication device may further select the first resource from the second candidate resource. For example, the first communication device selects, from the first candidate resource, a resource that is partially or completely located in a union set formed by the foregoing plurality of DRX active times as the second candidate resource, then selects, from the second candidate resource, a time-frequency resource used for one transmission opportunity based on a quantity of selected frequency domain resources and a remaining PDB of available sidelink data of a logical channel allowed on a carrier, and further may determine a resource reservation period over the selected time domain resource and then select a corresponding periodic resource.

Alternatively, if there is one destination ID, and the second active time may be a plurality of DRX active times in a DRX configuration corresponding to the destination ID, the first communication device may select a resource whose intersection with the DRX active time corresponding to the first service in time domain meets a first condition as a second candidate resource.

In actual application, the foregoing first condition may include one or more of the following: an intersection with the DRX active time corresponding to the first service is largest in time domain, an intersection with the DRX active time corresponding to the first service in time domain is within a preset range, and an intersection with the DRX active time corresponding to the first service in time domain is greater than a preset threshold. For example, if a DRX active time corresponding to one destination ID is a subframe 0, the first communication device determines a resource that is in the first candidate resource and whose quantity of symbols in an intersection with the subframe 0 is largest as the second candidate resource; the first communication device determines a resource that is in the first candidate resource and whose quantity of symbols in an intersection with the subframe 0 is greater than 80% (that is, 11 symbols) as the second candidate resource; or the first communication device determines a resource that is in the first candidate resource and that is in a symbol 1 to a symbol 12 in the subframe 0 as the second candidate resource. Similarly, DRX active times corresponding to one destination ID is a subframe 0, a subframe 3, and a subframe 6. In this case, the first communication device determines a plurality of resources that are in the first candidate resource and whose intersections with the subframe 0, the subframe 3, and the subframe 6 are largest as second candidate resources; the first communication device determines a plurality of resources that are in the first candidate resource and whose quantities of symbols in intersections with the subframe 0, the subframe 3, and the subframe 6 are greater than 80% (that is, 11 symbols) as second candidate resources; or the first communication device determines a plurality of resources that are in the first candidate resource and that are respectively located in a symbol 1 to a symbol 12 in the subframe 0, a symbol 1 to a symbol 12 the subframe 3, and a symbol 1 to a symbol 12 the subframe 6 as second candidate resources. Certainly, the first condition may alternatively be another condition. This is not specifically limited in this embodiment of this application.

In some possible implementations, the first resource selected by the first communication device in S804 may further be used as a candidate resource, so that the first communication device selects a reserved resource from the candidate resource, and further performs S805 to S810.

In some possible implementations, to improve the matching degree between the reserved resource and the DRX active time of the first service, in a scenario of the plurality of destination IDs, before starting sidelink transmission over the first resource in S807, the first communication device may further select the first service, that is, the destination ID, the first communication device may select, from the plurality of destination IDs, a destination ID (used to identify a second service) that correspond a DRX active time having an intersection with the first resource in time domain, in other words, there is an intersection between a DRX active time corresponding to the last selected destination ID and the reserved resource in time domain.

In some possible implementations, to improve the matching degree between the reserved resource and the DRX active time of the first service, when the first communication device further performs resource exclusion on the candidate resource in S803, the MAC layer of the first communication device first indicates, to the physical layer, a union set of DRX active times corresponding to the first service and/or a union set of DRX active times corresponding to aperiodic services in a current service and a historical service in the first service; and then the physical layer excludes a resource from the second resource, and determines a resource that has an intersection with the union set as a third candidate resource. In other words, the third candidate resource needs to meet at least one of the following conditions: there is an intersection with a union set of DRX active times corresponding to the first service in time domain, and there is an intersection with a union set of DRX active times corresponding to aperiodic services in a current service and a historical service in the first service in time domain. The third candidate resource may be used as the first candidate resource. Certainly, the physical layer may further perform the method in S803 from the third candidate resource to determine the first candidate resource. This is not specifically limited in this embodiment of this application.

It should be noted that the second resource may be a resource that is in a selection window and that corresponds to the resource determined by the physical layer through sensing, or may be a remaining resource obtained after the physical layer performs resource exclusion in S702 from resource selection determined through sensing.

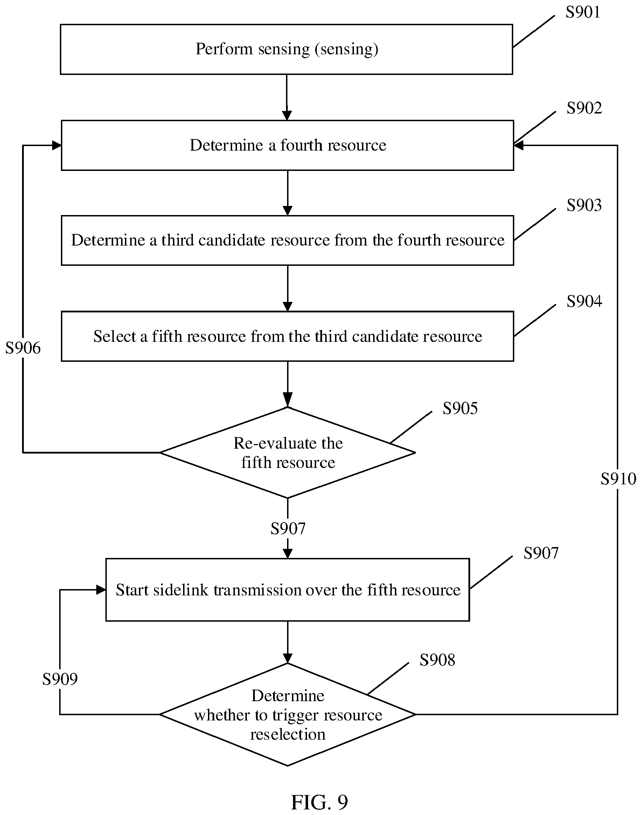

In other embodiments of this application, FIG. 9 is a third schematic flowchart of a communication method on a first communication device side according to an embodiment of this application. Refer to FIG. 9, the method includes the following steps.

S901: The first communication device performs sensing (sensing).

The first communication device continuously monitors SCI sent by another UE, measures, according to an indication of the SCI, a resource indicated by the SCI, and determines a measurement result. Herein, after monitoring the SCI of the another UE, the first communication device demodulates the SCI. Demodulated SCI may reflect at least a resource usage on a sidelink.

In this embodiment of this application, the "measure" may include measuring a sidelink RSRP based on a sidelink DMRS, for example, measuring an RSRP of a PSCCH (that is, a PSCCH-RSRP) or a PSSCH-RSRP; or measuring an S-RSSI. The PSCCH-RSRP is determined by measuring a DMRS associated with a PSCCH, and the PSSCH-RSRP is determining by measuring a DMRS associated with a PSSCH. Certainly, the first communication device may further measure another parameter of the resource indicated by the SCI. This is not specifically limited in this embodiment of this application.

S902: The first communication device determines a fourth resource.

In this embodiment of this application, the fourth resource may be a resource in a selection window, or may be a remaining resource after resource exclusion is performed on the resource in the selection window.

S903: The first communication device determines a third candidate resource from the fourth resource.

Herein, the third candidate resource needs to meet at least one of the following conditions: there is an intersection with a union set of DRX active times corresponding to a first service in time domain; and there is an intersection with a union set of DRX active times corresponding to aperiodic services in a current service and a historical service in the first service in time domain.

After the first communication device performs S901, a MAC layer of the first communication device first indicates, to a physical layer, a union set of DRX active times corresponding to the first service and/or a union set, that is, the first active time, of DRX active times corresponding to aperiodic services in a current service and a historical service in the first service; and then the physical layer excludes a resource from the fourth resource, and determines a resource that has an intersection with the union set as the third candidate resource. In other words, the third candidate resource needs to meet at least one of the following conditions: there is an intersection with a union set of DRX active times corresponding to the first service in time domain, and there is an intersection with a union set of DRX active times corresponding to aperiodic services in a current service and a historical service in the first service in time domain. In this case, the third candidate resource may be used to determine a fifth resource.

Certainly, the physical layer may further exclude a resource from the third candidate resource. For example, the first communication device excludes, from the third candidate resource, a resource whose measurement result meets a condition, and determines a remaining resource as a candidate resource of the first communication device. Further, when transmitting the first service, the first communication device may further determine the fifth resource from the candidate resource for transmission. For example, in S902, the first communication device measures the reference signal received power of the SCI to determine the PSCCH-RSRP or the PSSCH-RSRP. Then, the first communication device may exclude a resource whose PSCCH-RSRP or PSSCH-RSRP meets a preset condition. Alternatively, the first communication device may exclude, according to an indication of the SCI, a resource occupied by another UE. Alternatively, the first communication device may exclude a resource occupied by the another UE and whose corresponding RSRP is greater than a preset threshold.

In actual application, the preset condition may be that an RSRP value is within a preset range. For example, the RSRP value ranks among first 20% of all measured RSRP values in descending or ascending order, or the RSRP value is greater than 70% of all RSRP values. Certainly, the preset condition may alternatively be another condition, for example, may be set based on a transmission priority of the first communication device and a transmission priority indicated in the SCI of the another UE. This is not specifically limited in this embodiment of this application.

In some possible implementations, the first communication device may further demodulate the SCI in S901, to determine a subcarrier spacing configuration of the resource, and the first communication device may further filter the resource based on the subcarrier spacing configuration of the resource, so that a selected subcarrier spacing meets a transmission requirement, for use in subsequent sidelink transmission.

Certainly, the first communication device may perform resource exclusion based on another condition. This is not specifically limited in this application.

S904: The first communication device selects, from the third candidate resource, a fifth resource used for sidelink transmission.

After the first service arrives, the first communication device may select, from the third candidate resource set, a reserved resource for the first service, that is, the fifth resource.

In this embodiment of this application, the service may include one or a combination of a communication target, a sidelink connection, a source and target pair, a sidelink link, an LCH, a resource pool, a sidelink service, a MAC PDU, a TB, and the like. This is not specifically limited in this embodiment of this application.

S905: The first communication device re-evaluates the fifth resource.

Before performing service transmission, the first communication device further re-evaluates the fifth resource to check whether the fifth resource selected in S903 can be used for sidelink transmission, to ensure that a finally selected resource can be used for sidelink transmission.

S906: If an evaluation result indicates that the fifth resource cannot be used for sidelink transmission, the first communication device triggers resource reselection, and returns to S902.

S907: If an evaluation result indicates that the fifth resource can be used for sidelink transmission, the first communication device starts sidelink transmission over the fifth resource.

S908: In a process of performing transmission over the fifth resource, the first communication device continues to determine whether to trigger resource reselection.

In S905 and S908, in the sidelink transmission process of the first communication device, the first resource may not be used for sidelink transmission due to some reasons. Therefore, the first communication device further needs to evaluate the first resource, to determine whether to trigger resource reselection. For example, the foregoing reasons may include: an upper layer configures or reconfigures a resource pool; there is no configured sidelink grant; a MAC entity has no new transmission or retransmission over any resource indicated by the configured sidelink grant in the past second; sl-ReselectAfter is configured and consecutive unused transmission opportunities indicated by the configured sidelink grant reach sl-ReselectAfter; a transmission resource indicated by the configured sidelink grant cannot meet a latency requirement of data on a logical channel determined based on a priority of corresponding logical channels, and the MAC entity selects not to transmit a corresponding single MAC PDU; or a priority of a logical channel indicated by SCI received by the UE is higher than a priority of a logical channel of to-be-transmitted data, transmission of an SL scheduled by the SCI is expected to overlap a currently reserved resource, and an SL-RSRP measurement result of transmission of the SL indicated by the SCI is higher than a threshold. When the first resource meets any one of the foregoing conditions, a reserved resource (if any) associated with the SL process is cleared, and the first communication device triggers resource selection/reselection.

S909: If resource reselection is triggered, the first communication device returns to S902.

S910: If resource reselection is not triggered, the first communication device continues to use the fifth resource for sidelink transmission.

In this embodiment of this application, according to the method described in S901 to S910, the first communication device selects a resource that has an intersection with the DRX active time corresponding to the first service as a reserved resource, and performs sidelink transmission over the reserved resource. This can ensure that the first communication device can receive transmission from a second communication device (for example, TX UE) within the active time, reduce power consumption of the RX UE, and ensure sidelink transmission between the first communication device and the second communication device.

In some possible implementations, to improve a matching degree between the reserved resource and the DRX active time of the first service, when the first communication device performs S901, a union set, that is, the first active time, of DRX active times in the at least one DRX configuration in time domain is first determined. Herein, the at least one DRX configuration may be some or all DRX configurations that can be determined by the first communication device. For example, the at least one DRX configuration may include a DRX configuration of the first service. Then, the first communication device performs sensing within the first active time, demodulates SCI of another UE, and measures the SCI, for example, measuring a PSCCH-RSRP or a PSSCH-RSRP, or measuring an S-RSSI. The PSCCH-RSRP is determined by measuring a DMRS associated with a PSCCH, and the PSSCH-RSRP is determining by measuring a DMRS associated with a PSSCH. Certainly, the first communication device may further measure another parameter of the resource indicated by the SCI. This is not specifically limited in this embodiment of this application.

In this embodiment of this application, after determining the first active time, a MAC layer of the first communication device indicates the first active time to a physical layer of the first communication device. The physical layer monitors, within the first active time, SCI sent by another UE, and further the physical layer performs measurement within the first active time.

In some possible implementations, to improve a matching degree between the reserved resource and the DRX active time of the first service, after S903, the first communication device may further determine a third candidate resource and a first service that are used for sidelink transmission; and the first communication device determines the fifth resource from the third candidate resource.

After determining the third candidate resource in S903, the first communication device may further obtain the first service that can be currently determined by the first communication device. Because a DRX configuration is configured for the first service, the first communication device may select, from the third candidate resource, a resource that has an intersection with the first active time as the fifth resource. In this case, the fifth resource may be a reserved resource. Herein, the first device may include a current service and/or a historical service. The "first service" is described above. It is assumed that the first service is a communication target identified by a destination ID. The first communication device may determine at least one destination ID as a candidate destination ID set. The candidate destination ID set may include a currently optional destination ID and/or a historically optional destination ID of the first communication device.

In this embodiment of this application, to match the resource with DRX active time of the first service, the first active time may be an active time corresponding to one destination ID or a union set of active times corresponding to a plurality of destination IDs.

In this case, if there are a plurality of destination IDs, the first active time may be a union set of a plurality of DRX active times in DRX configurations corresponding to the plurality of destination IDs. In this case, the first communication device may select, from the third candidate resource, a resource that has an intersection with the union set as a fourth candidate resource. Then, the first communication device may further select the fifth resource from the fourth candidate resource. For example, the first communication device selects, from the third candidate resource, a resource that is partially or completely located in a union set formed by the foregoing plurality of DRX active times as a fourth candidate resource, then selects, from the fourth candidate resource, a time-frequency resource used for one transmission opportunity based on a quantity of selected frequency domain resources and a remaining PDB of available sidelink data of a logical channel allowed on a carrier, and further may determine a resource reservation period over the selected time domain resource and then select a corresponding periodic resource.

Alternatively, if there is one destination ID, and the first active time may be a plurality of DRX active times in a DRX configuration corresponding to the destination ID, the first communication device may select a resource whose intersection with the DRX active time corresponding to the first service in time domain meets a first condition as a fourth candidate resource.

In actual application, the foregoing first condition may include one or more of the following: an intersection with the DRX active time corresponding to the first service is largest in time domain, an intersection with the DRX active time corresponding to the first service in time domain is within a preset range, and an intersection with the DRX active time corresponding to the first service in time domain is greater than a preset threshold.

In some possible implementations, the fifth resource selected by the first communication device in S904 may further be used as a candidate resource, so that the first communication device selects a reserved resource from the candidate resource, and further performs S905 to S910.

In some possible implementations, to improve the matching degree between the reserved resource and the DRX active time of the first service, in a scenario of the plurality of destination IDs, before starting sidelink transmission over the fifth resource in S907, the first communication device may further select the destination ID, the first communication device may select, from the plurality of destination IDs, a destination ID (used to identify a second service) that corresponds a DRX active time having an intersection with the fifth resource in time domain, in other words, there is an intersection between a DRX active time corresponding to the last selected destination ID and the reserved resource in time domain.

In this embodiment of this application, in one or more of the foregoing embodiments, the first communication device may continuously evaluate the third resource (that is, the reserved resource selected by the first communication device). If the first communication device determines that there is no intersection between the third resource and a DRX active time corresponding to a current service (a third service or a fourth service) of the first communication device, that is, the third resource is located outside the DRX active time corresponding to the current service in time domain, the first communication device triggers resource reselection, to reselect a resource that has an intersection with the DRX active time of the current service.

It should be noted that the current service is a service when the first communication device evaluates the third resource, and may be the same as or different from the first service. For example, the third service may include one or a combination of a communication target, a sidelink connection, a source and target pair, a sidelink link, a logical channel, a resource pool, a sidelink service, a MAC PDU, a TB, and the like. This is not specifically limited in this embodiment of this application. The fourth service may include one or a combination of a communication target, a sidelink connection, a source and target pair, a sidelink link, a logical channel, a resource pool, a sidelink service, a MAC PDU, a TB, and the like. This is not specifically limited in this embodiment of this application.

In a process in which the first communication device performs sidelink transmission, because the service changes, for example, a new service arrives, a current resource pool changes, or a current resource is reconfigured, the third resource cannot be used for sidelink transmission. For example, the third resource does not meet a latency requirement of the first service. In this case, the first communication device may trigger resource reselection. Further, the first communication device may further consider a relationship between the third resource and the DRX active time of the current service, to determine whether to trigger resource reselection.

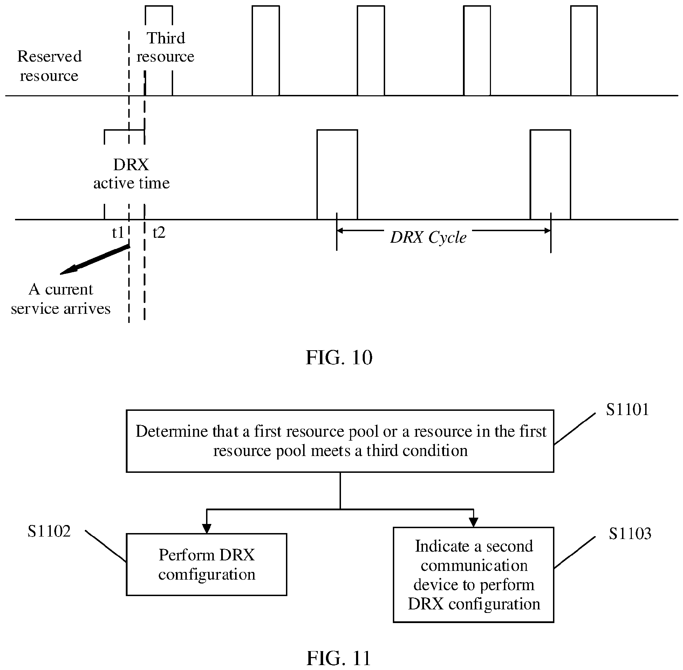

For example, FIG. 10 is a schematic diagram of a resource and a DRX active time corresponding to a current service according to an embodiment of this application. Refer to FIG. 10, the current service arrives at a moment t1, and a time difference between a start time t2 of a third resource and t1 meets a latency requirement of the current service. However, because the third resource is located outside the DRX active time corresponding to the current service, that is, there is no intersection between the third resource and the DRX active time corresponding to the current service, in this case, the first communication device triggers resource reselection.

In some possible implementations, that there is no intersection between the third resource and the DRX active time corresponding to the current service of the first communication device may include: there is no intersection between the third resource and a union set of a plurality of DRX active times corresponding to the current service; there is no intersection between the third resource and at least one of a plurality of DRX active times corresponding to the current service; or there is no intersection between the third resource and a DRX active time that is in a plurality of DRX active times corresponding to the current service and that meets a preset quantity. It may be understood that, a DRX active time that is in the plurality of DRX active times corresponding to the current service and that has no intersection with the third resource reaches a preset quantity (which may be an empirical value), or is within a preset quantity range (which may be an empirical value), the first communication device determines that there is no intersection between the third resource and the DRX active time that meets the preset quantity in the plurality of DRX active times corresponding to the current service.

In some possible implementations, the first communication device may further configure a cycle for the first resource. In this case, the first communication device may configure a DRX cycle (that is, a DRX cycle) that meets a second condition and that is in a DRX configuration corresponding to the first service as a cycle corresponding to the first resource.

Herein, the second condition may include: a minimum value of a DRX cycle in the DRX configuration corresponding to the first service, a DRX cycle in the DRX configuration corresponding to the first service being less than a preset threshold, a DRX cycle in the DRX configuration corresponding to the first service being less than 20%, or the like. The second condition may alternatively be another condition. This is not specifically limited in this embodiment of this application.

It should be noted that there is no execution sequence for the first communication device to configure the cycle for the first resource and to select the first resource. Both of them may be performed sequentially or simultaneously. When both of them are performed sequentially, the first communication device may first configure the cycle for the first resource and then select the first resource, or may first select the first resource and then configure the cycle for the first resource. Execution occasions for the first communication device to configure the cycle for the first resource and to select the first resource are not specifically limited in this embodiment of this application.

In this embodiment of this application, a cycle of the first resource is selected as a minimum value of cycles of all DRX configurations corresponding to the first service, so that a cycle in which the first communication device wakes up to monitor SCI matches a cycle in which the first service is sent, thereby increasing a probability of effectively utilizing sidelink resources.

An embodiment of this application further provides a communication method, which may be applied to the foregoing communication system. A first communication device may be TX UE, or may be RX UE. Correspondingly, a second communication device may be RX UE, or may be TX UE.

FIG. 11 is a schematic flowchart of a communication method according to an embodiment of this application. Refer to FIG. 11, the method may include the following steps.

S1101: The first communication device determines that a first resource pool or a resource in the first resource pool meets a third condition.

Herein, the first resource pool is a resource pool from which the first communication device currently selects a resource.

In some possible implementations, the third condition includes: a channel busy rate (channel busy ratio, CBR) of the current resource pool meets a fourth condition, for example, the fourth condition may be that the CBR is greater than a preset value (which may be an empirical value), or the CBR is within a preset range; and the first communication device triggers resource pool reselection, and/or a packet loss rate meets a fifth condition, for example, the fifth condition may be that the packet loss rate is greater than a preset value (which may be an empirical value), the packet loss rate is within a preset range, or the like.

In some possible implementations, the third condition may further include one of the following conditions or a combination of a plurality of conditions: a quantity of times that the CBR meets the fourth condition reaches a first threshold; a quantity of times of triggering resource pool reselection by the first communication device reaches a second threshold; and a quantity of times that the packet loss rate of the second communication device meets the fifth condition reaches a third threshold. The first threshold, the second threshold, and the third threshold may be empirical values, for example, 3 times, 5 times, or 8 times.

In this embodiment of this application, the third condition is not limited to the foregoing several cases. This is not specifically limited.

S 1102: The first communication device performs DRX configuration.

After performing S 1101, the first communication device performs S 1102, so that the first communication device selects a resource pool that can be used for sidelink transmission.

S1103: The first communication device indicates the second communication device to perform DRX configuration.

It should be noted that the "DRX configuration" described herein may be understood as performing DRX configuration based on the reserved resource. For example, DRX reconfiguration is performed based on the reserved resource, so that there is an intersection between the reserved resource and a reconfigured DRX active time in time domain; or initial DRX configuration is performed based on the reserved resource, so that there is an intersection between the reserved resource and a configured DRX active time in time domain.

In some possible implementations, the "DRX configuration" may also be understood as enabling (enable) or disabling (disabled) a DRX function, that is, the first communication device may indicate the second communication device to configure the DRX function or cancel the DRX function. Further, if the first communication device indicates the second communication device to configure the DRX function, the first communication device may simultaneously send DRX configuration information to the second communication device, or the second communication device configures the DRX configuration information by itself. Certainly, the second communication device may alternatively determine the DRX configuration information in another manner. This is not specifically limited in this embodiment of this application.

In another embodiment of this application, after performing S1101, the first communication device may further perform S1103, to indicate the second communication device to select a resource pool that can be used for sidelink transmission.

In some possible implementations, S1103 may include: The first communication device notifies the second communication device that a current resource pool or a resource in the current resource pool of the first communication device meets the third condition; the first communication device sends a second indication message to the second communication device, where the second indication message indicates the second communication device to perform DRX configuration; and/or the first communication device sends a third indication message to the second communication device, where the third indication message indicates DRX configuration information.

In actual application, the DRX configuration information may include some or all sidelink DRX parameters. Optionally, the DRX parameter may include one or more of the following parameters: an SL DRX onduration timer (drx-onDurationTimerSL), an SL DRX slot offset (drx-SlotOffsetSL), an SL DRX inactivity timer (drx-InactivityTimerSL), an SL DRX retransmission timer (drx-RetransmissionTimerSL), an SL DRX long cycle start offset (drx-LongCycleStartOffsetSL), an SL DRX long cycle (drx-LongCycleSL), an SL DRX short cycle (drx-ShortCycleSL), an SL DRX short cycle timer (drx-ShortCycleTimerSL), or an SL DRX HARQ round trip time (round trip time, RTT) timer (drx-HARQ-RTT-TimerSL). Herein, it may be understood that the "timer" in the foregoing parameters actually refers to a length of the timer.

In another embodiment of this application, if the first communication device is TX UE, before S1101, the first communication device may further receive a fourth indication message from the second communication device (RX UE), where the fourth indication message indicates a packet loss rate of the second communication device or that the packet loss rate meets a fifth condition. For example, the fifth condition may be that the packet loss rate is greater than a preset value (which may be an empirical value), or the packet loss rate is within a preset range. Certainly, the fifth condition may alternatively be another condition. This is not specifically limited in this embodiment of this application.

In some possible implementations, the second communication device may further send fourth indication information to the first communication device when the packet loss rate meets the fifth condition and reaches a fourth threshold, for example, the packet loss rate meets the fifth condition for 3 times, 5 times, or 10 times. In this case, the fourth indication information may indicate the latest packet loss rate or that the latest packet loss rate meets the fifth condition. In actual application, a trigger condition for sending the fourth indication information by the second communication device may alternatively be another condition. This is not specifically limited in this embodiment of this application.

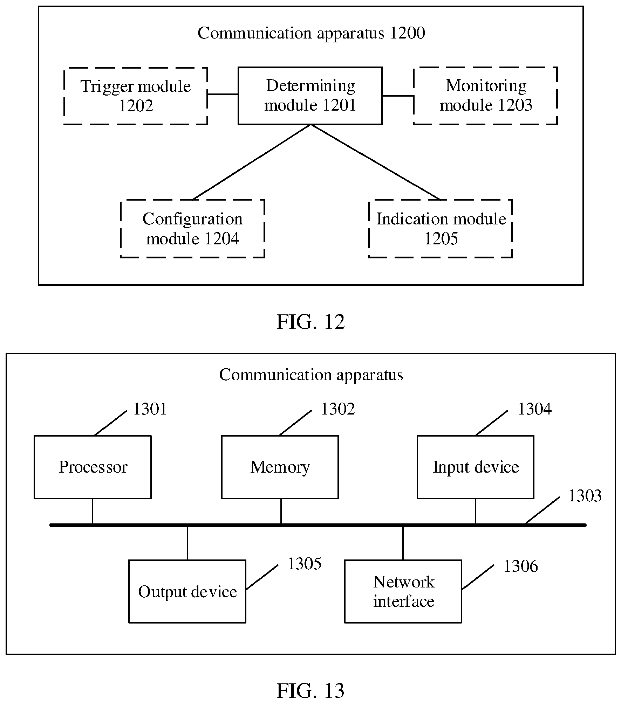

Based on a same inventive concept, an embodiment of this application provides a communication apparatus. The communication apparatus may be a chip or a system on chip in a first communication device, or may be a function module that is in the first communication device and that is configured to implement the method in any one of the foregoing embodiments. The chip or the system on chip includes a memory. The memory stores instructions. When the instructions are invoked by the system on chip or the chip, the foregoing method is performed. FIG. 12 is a schematic diagram of a structure of a communication apparatus according to an embodiment of this application. Refer to FIG. 12, the communication apparatus 1200 may include a determining module 1201, and may further include one or more of a trigger module 1202, a monitoring module 1203, a configuration module 1204, or an indication module 1205.

In some possible implementations, the determining module 1201 is configured to determine a first candidate resource and a first service that are used for sidelink transmission; and determine a first resource from the first candidate resource, where there is an intersection between the first resource and a first active time in time domain, and the first active time is determined based on a DRX active time corresponding to the first service.

In some possible implementations, the determining module 1201 is configured to determine a resource that is in the first candidate resource and that has an intersection with the first active time in time domain as a second candidate resource; and determine the first resource from the second candidate resource.

In some possible implementations, the determining module 1201 is further configured to determine a resource that is in the first candidate resource and that is included in the first active time in time domain as the second candidate resource.

In some possible implementations, the apparatus may further include: a selection module, configured to select a second service, where there is an intersection between a DRX active time corresponding to the second service and the first resource in time domain.

In some possible implementations, the trigger module 1202 is configured to: if there is no intersection between the first resource and a DRX active time corresponding to a third service of the first communication device, trigger resource reselection.

In some possible implementations, the determining module 1201 is further configured to determine a DRX cycle that meets a second condition and that is in a DRX configuration corresponding to the first service as a first cycle, where the first cycle is a cycle corresponding to the first resource.

In some possible implementations, the determining module 1201 is further configured to: before determining the first candidate resource used for sidelink transmission, determine the first active time; and the monitoring module 1203 is configured to monitor SCI within the first active time, where the SCI indicates a resource used by another communication device for sidelink transmission.

Optionally, the foregoing apparatus may further include a measurement module, configured to perform measurement within the first active time based on the SCI.

In some possible implementations, the determining module 1202 is specifically configured to determine a second resource used for sidelink transmission; and determine the first candidate resource from the second resource, where the first candidate resource meets at least one of the following conditions: there is an intersection with a union set of DRX active times corresponding to the first service in time domain, where the first service includes a current service and/or a historical service; and there is an intersection with a union set of DRX active times corresponding to aperiodic services in the current service and the historical service in time domain.

Based on a same inventive concept, an embodiment of this application provides a communication apparatus. The communication apparatus may be a chip or a system on chip in a first communication device, or may be a function module that is in the first communication device and that is configured to implement the method in any one of the foregoing embodiments. The chip or the system on chip includes a memory. The memory stores instructions. When the instructions are invoked by the system on chip or the chip, the foregoing method is performed. Still refer to FIG. 12, the determining module 1201 is further configured to determine a third resource used for sidelink transmission; and the trigger module 1202 is configured to: if there is no intersection between the third resource and a DRX active time corresponding to a fourth service of the first communication device, trigger resource reselection.

In some possible implementations, that there is no intersection between the third resource and a DRX active time corresponding to a first service includes: there is no intersection between the third resource and a union set of a plurality of DRX active times corresponding to the fourth service; there is no intersection between the third resource and at least one of a plurality of DRX active times corresponding to the fourth service; or there is no intersection between the third resource and a DRX active time that is in a plurality of DRX active times corresponding to the fourth service and that meets a preset quantity.

In some possible implementations, the DRX active time corresponding to the first service includes at least one of the following: a DRX active time corresponding to a communication target, a DRX active time corresponding to a sidelink connection, a DRX active time corresponding to a source and target pair, a DRX active time corresponding to a sidelink link, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

Based on a same inventive concept, an embodiment of this application provides a communication apparatus. The communication apparatus may be a chip or a system on chip in a first communication device, or may be a function module that is in the first communication device and that is configured to implement the method in any one of the foregoing embodiments. The chip or the system on chip includes a memory. The memory stores instructions. When the instructions are invoked by the system on chip or the chip, the foregoing method is performed. Still refer to 12, the determining module 1201 is further configured to determine a second active time, where the second active time is a union set of DRX active times in at least one DRX configuration in time domain; the monitoring module 1203 is further configured to monitor sidelink control information SCI within the second active time, where the SCI indicates a resource used by another communication device for sidelink transmission.

Further, the foregoing apparatus may further include a measurement module, configured to perform measurement within the second active time based on the SCI.

In some possible implementations, the at least one DRX configuration includes a DRX configuration of the first service.

Based on a same inventive concept, an embodiment of this application provides a communication apparatus. The communication apparatus may be a chip or a system on chip in a first communication device, or may be a function module that is in the first communication device and that is configured to implement the method in any one of the foregoing embodiments. The chip or the system on chip includes a memory. The memory stores instructions. When the instructions are invoked by the system on chip or the chip, the foregoing method is performed. Still refer to FIG. 12, the determining module 1201 is configured to determine a fourth resource used for sidelink transmission, and determine a third candidate resource from the fourth resource, where the third candidate resource meets at least one of the following conditions: there is an intersection with a union set of DRX active times corresponding to a first service in time domain, where the first service includes a current service and/or a historical service; and there is an intersection with a union set of DRX active times corresponding to aperiodic services in the current service and the historical service in time domain, where the third candidate resource is used to determine a fifth resource used for sidelink transmission.

In some possible implementations, the DRX active time corresponding to the first service includes at least one of the following: a DRX active time corresponding to a communication target, a DRX active time corresponding to a sidelink connection, a DRX active time corresponding to a source and target pair, a DRX active time corresponding to a sidelink link, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

Based on a same inventive concept, an embodiment of this application provides a communication apparatus. The communication apparatus may be a chip or a system on chip in a first communication device, or may be a function module that is in the first communication device and that is configured to implement the method in any one of the foregoing embodiments. The chip or the system on chip includes a memory. The memory stores instructions. When the instructions are invoked by the system on chip or the chip, the foregoing method is performed. Still refer to FIG. 12, the determining module 1201 is configured to determine that a first resource pool or a resource in the first resource pool meets a third condition, where the first resource pool is a resource pool from which the first communication device currently selects a resource; and the configuration module 1204 is configured to perform discontinuous reception DRX configuration, and/or the indication module 1205 is configured to indicate a second communication device to perform DRX configuration, where sidelink communication is performed between the first communication device and the second communication device.

In some possible implementations, the third condition includes at least one of the following: a channel busy rate CBR of the current resource pool meets a fourth condition; a quantity of times that the CRB meets the fourth condition reaches a first threshold; the first communication device triggers resource pool reselection; a quantity of times of triggering resource pool reselection by the first communication device reaches a second threshold; and a packet loss rate of the second communication device meets a fifth condition or a quantity of times that the packet loss rate of the second communication device meets the fifth condition reaches a third threshold.

In some possible implementations, the fourth condition includes: the CBR is greater than a first preset value, or the CBR is within a first preset interval; and/or the fifth condition includes: the packet loss rate is greater than a second preset value, or the packet loss rate is within a second preset interval.

In some possible implementations, the indication module 1205 is configured to: send a first indication message to the second communication device, where the first indication message notifies the second communication device that a current resource pool of the first communication device or a resource in the current resource pool meets the third condition; send a second indication message to the second communication device, where the second indication message indicates the second communication device to perform DRX configuration; and/or send a third indication message to the second communication device, where the third indication message indicates DRX configuration information.

In some possible implementations, the apparatus further includes a receiving module, configured to receive a fourth indication message from the second communication device, where the fourth indication message indicates a packet loss rate or that the packet loss rate meets the fifth condition.

Based on a same inventive concept, an embodiment of this application provides a communication apparatus, which may be applied to the foregoing communication system. The communication apparatus may be consistent with the first communication device described in one or more of the foregoing embodiments. FIG. 13 is a schematic diagram of another structure of a communication apparatus according to an embodiment of this application. As shown in FIG. 13, the communication apparatus 1300 may include a processor 1301, a memory 1302, a bus 1303, an input device 1304, and an output device 1305.

Specifically, the memory 1302 may include a computer storage medium in a form of a volatile and/or nonvolatile memory, such as a read-only memory and/or a random access memory. The memory 1302 may store an operating system, an application program, another program module, executable code, program data, user registration data, user subscription data, or the like.

The input device 1304 may be configured to input a command and information to the first communication device. The input device 1304 is a keyboard or a pointing device, such as a mouse, a trackball, a touchpad, a microphone, a joystick, a game pad, a satellite television antenna, a scanner, or a similar device. These input devices may be connected to the processor 1301 by using the bus 1303.

The output device 1305 may be used to output information to the first communication device. The output device 1305 may be a monitor, or may be other peripheral output devices, such as a loudspeaker and/or a printing device, and the output devices may be connected to the processor 1301 by using the bus 1303.

The first communication device may be connected to a network, for example, a local area network (LAN), through a network interface 1306. In a network connection environment, computer-executable instructions stored in the first communication device may be stored in a remote storage device, and are not limited to being locally stored.

When executing the executable code or the application program stored in the memory 1302, the processor 1301 in the first communication device may perform the method steps on the first communication device side in the foregoing embodiments. For a specific execution process, refer to the foregoing embodiments. Details are not described herein again.

In addition, the memory 1302 stores computer-executable instructions used to implement functions of the determining module, the trigger module, the monitoring module, the configuration module, the indication module, and the measurement module. Functions/implementation processes of the determining module, the trigger module, the monitoring module, the configuration module, the indication module, and the measurement module may be implemented by the processor 1301 in FIG. 13 by invoking the computer-executable instructions stored in the memory 1302. For specific implementation processes and functions, refer to the foregoing related embodiments.

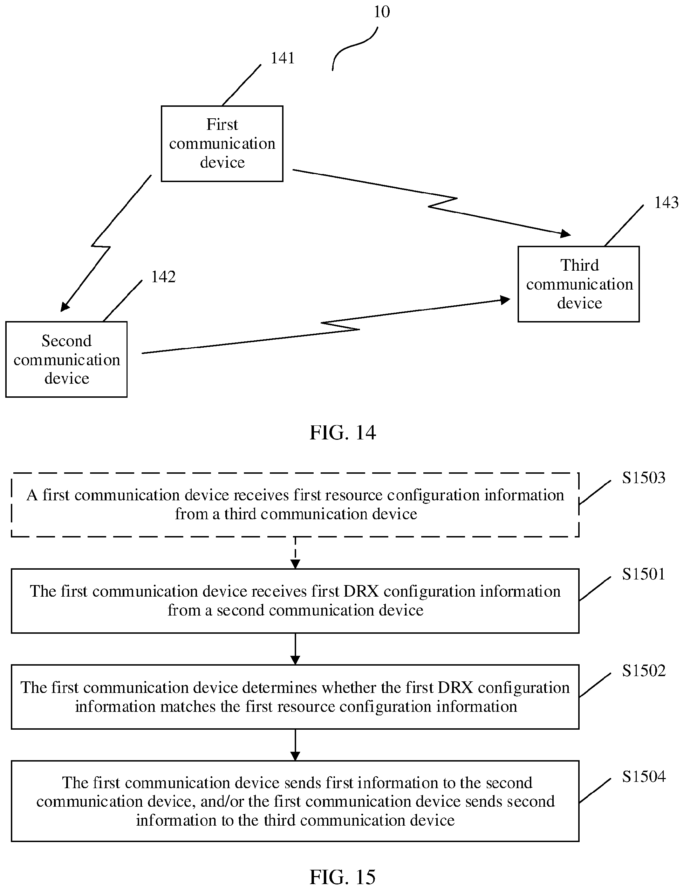

Based on a same inventive concept, an embodiment of this application further provides a communication method. The method may be applied to a communication system. FIG. 14 is a schematic diagram of still another architecture of a communication system according to an embodiment of this application. Refer to FIG. 14, the communication system 10 may include a first communication device 141, a second communication device 142, and a third communication device 143. For different application scenarios, the first communication device may be a transmit terminal device (denoted as TX UE) or a receive terminal device (denoted as RX UE). The second communication device may be TX UE, RX UE, a network device (for example, a base station) to which the TX UE belongs, or a network device (for example, a base station) to which the RX UE belongs. The third communication device may also be TX UE, RX UE, a network device (for example, a base station) to which the TX UE belongs, or a network device (for example, a base station) to which the RX UE belongs.

In a sidelink transmission process, the first communication device may receive first DRX configuration information configured by the second communication device for a first sidelink corresponding to the first communication device, and may further receive first resource configuration information configured by the third communication device for a second sidelink corresponding to the first communication device. The first DRX configuration information may include some or all sidelink DRX parameters. Further, the first DRX configuration information indicates a DRX active time period of the first sidelink. For example, the DRX active time period may include a DRX active time (onduration) or an active time (active time). Herein, the active time may include a time of an onduration timer (onduration timer), a time of a retransmission timer (retransmission timer), a time of an inactivity timer (inactivity timer), and the like. Certainly, the active time further includes another time period. This is not specifically limited in this embodiment of this application.

In some possible implementations, the first sidelink may be a sidelink between the first communication device and the second communication device, or may be a sidelink between the first communication device and another terminal device (which may be denoted as another UE). In this case, the first DRX configuration information may be used for a first sidelink between the first communication device and the second communication device, or may be used for a first sidelink between the first communication device and another UE.

In some possible implementations, the first sidelink may be one or more sidelinks, and the second sidelink may also be one or more sidelinks. It should be noted that when the first sidelink is one sidelink, the second sidelink and the first sidelink may be a same sidelink, or the second sidelink and the first sidelink are different sidelinks. For example, the first sidelink is a sidelink between the TX UE and the RX UE, and the second sidelink may be a sidelink between the RX UE and the TX UE, or may be a sidelink between the RX UE being as the TX UE and another RX UE. Alternatively, the first sidelink may be a sidelink between the TX UE or the RX UE and another UE, and the second sidelink may be a sidelink between the RX UE and the TX UE, or may be a sidelink between the TX UE or the RX UE and another UE. Further, when the first sidelink is a plurality of sidelinks, the second sidelink may be one or more of the first sidelinks. In other words, the second sidelink is some or all of the first sidelinks.

In this embodiment of this application, the first communication device may configure the first DRX configuration information for the first communication device, and the third communication device configures the first resource configuration information for the first communication device; the second communication device may configure the first DRX configuration information for the first communication device, and the first communication device configures the first resource configuration information for the first communication device; or the second communication device may configure the first DRX configuration information for the first communication device, and the third communication device configures the first resource configuration information for the first communication device. Obviously, because DRX configuration information and resource configuration information are configured by different entities, a DRX active time period indicated by the DRX configuration information and a time domain interval indicated by the resource configuration information may conflict in one or more time periods. For example, refer to FIG. 6, there is no intersection between a DRX active time and a time domain interval, or refer to FIG. 5, an intersection between the DRX active time and the time domain interval is less than an AND threshold. In this case, it may be referred to that the first DRX configuration information does not match the first resource configuration information. In this embodiment of this application, the "one time period" may be a slot corresponding to previous time domain intervals, or may be a slot corresponding to next time domain intervals.

Further, in mode 1, the time domain interval may be a time domain interval corresponding to a resource configured by a base station for the UE. In mode 2, the time domain interval may be a time domain interval in a resource pool configured by a base station for the UE, a resource pool configured by peer UE for the UE, or a resource pool selected by the UE. In actual application, the time domain interval may be represented by using a symbol (symbol), a slot (slot), a subframe, a system frame, a superframe, or the like.

Specifically, if a quantity of slots in which n DRX active time periods (indicated by the DRX configuration information) overlap the time domain interval (indicated by the resource configuration information) is less than a preset threshold (for example, a total quantity of slots in which the n ondurations overlap the time domain interval is less than b), it may be considered that a conflict exists between the DRX active time period and the time domain interval in one time period. Alternatively, if a value obtained by dividing the quantity of slots in which the n DRX active times overlap the time domain interval by a quantity of slots of n times a DRX active time is less than the preset threshold (for example, a total quantity of slots in which the n ondurations overlap the time domain interval/(n×the quantity of slots of ondurations) is less than a), it may be considered that a conflict exists between the DRX active time period and the time domain interval in one time period. The parameters n, a, and b may be determined by a network based on factors such as a CBR and a service feature of the resource pool, and configured or preconfigured by using system information, an RRC message, or a MAC CE/SCI. Alternatively, a value of n may be defined as a value obtained by dividing (a least common multiple of the quantity of slots of ondurations and a length of a bitmap (bitmap) of the time domain interval) by the quantity of slots of ondurations. Certainly, the parameters n, a, and b may have other values. This is not specifically limited in this embodiment of this application.

With reference to the foregoing communication system, this application provides a communication method. In the communication method, if first DRX configuration information does not match first resource configuration information, a first communication device sends first information to a second communication device, and/or sends second information to a third communication device. That is, if an active time period indicated by the first DRX configuration information conflicts with a time domain interval indicated by the first resource configuration information in at least one time period, the first communication device sends the first information to the second communication device (an entity that configures DRX configuration information for the first communication device), to request the second communication device to configure (which may be initial configuration or reconfiguration) DRX configuration information for a first sidelink of the first communication device (in this case, the first resource configuration information may be configured by the first communication device itself, or may be configured by the third communication device for the first communication device). Alternatively, if an active time period indicated by the first DRX configuration information conflicts with a time domain interval indicated by the first resource configuration information in at least one time period, the first communication device sends the second information to the third communication device (an entity for configuring resource configuration information for the first communication device), to request the third communication device to configure (which may be initial configuration or reconfiguration) the resource configuration information for a second sidelink of the first communication device (in this case, the first DRX configuration information may be configured by the second communication device, or may be configured by the first communication device itself). In some possible implementations, the first resource configuration information may be current resource configuration information, and the first DRX configuration information may be DRX configuration information received by the first communication device. FIG. 15 is a fourth schematic flowchart of a communication method on a first communication device side according to an embodiment of this application. Refer to solid lines in FIG. 15, the method includes the following steps.

S1501: The first communication device receives first DRX configuration information from a second communication device.

Herein, the first communication device receives first DRX configuration information configured by the second communication device for a first sidelink.

S1502: The first communication device determines whether the first DRX configuration information matches first resource configuration information; and if yes, the procedure ends, or if no, performs S 1504.

The first resource configuration information may be current resource configuration information of the first communication device.

Herein, after receiving the first DRX configuration information by using S1501, the first communication device determines whether the first DRX configuration information matches the current resource configuration information (that is, the first resource configuration information) of the first communication device.

For example, refer to a dashed line in FIG. 15, before S1501, the method may further include: S1503: The first communication device receives first resource configuration information from a third communication device.

Herein, the first communication device receives first resource configuration information configured by the third communication device for a second sidelink, and then the first communication device may determine, based on the first resource configuration information, a time domain interval corresponding to the second sidelink. Next, the first communication device may perform second sidelink transmission in the time domain interval. In this case, the first resource configuration information may be understood as current resource configuration information of the first communication device.

S1504: The first communication device sends first information to the second communication device, and/or the first communication device sends second information to the third communication device.

In this embodiment of this application, when determining that the DRX configuration information does not match the current resource configuration information, the first communication device may request the second communication device to perform DRX configuration, and/or request the third communication device to perform resource configuration, so that the DRX configuration information matches the resource configuration information.

The following describes the foregoing communication method by using a specific scenario as an example.

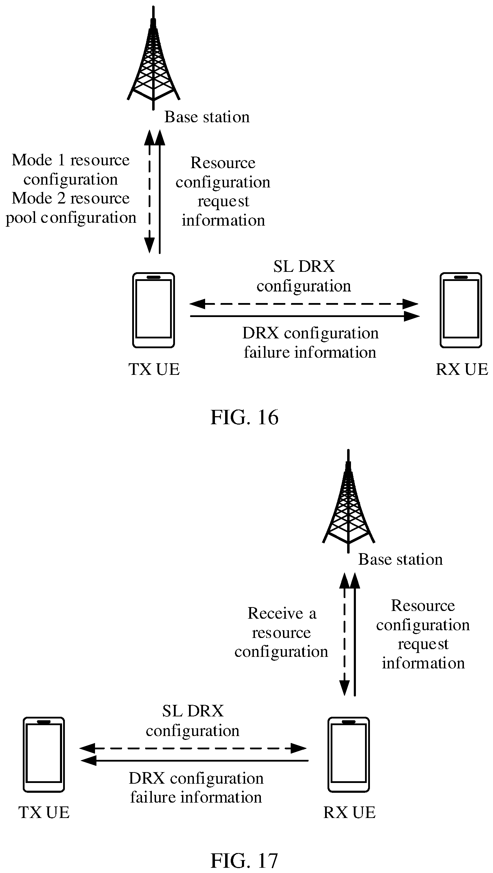

In a first case, the first communication device is TX UE, the second communication device is RX UE, and the third communication device is a network device (for example, a base station) to which the TX UE belongs. FIG. 16 is a schematic diagram of a first scenario of a resource configuration and a DRX configuration according to an embodiment of this application. Refer to FIG. 16, RX UE or a base station to which the RX UE belongs configures first DRX configuration information for TX UE, and TX UE or a base station to which the TX UE belongs configures first resource configuration information for the TX UE. The first DRX configuration information may be used for a first sidelink between the RX UE and the TX UE, or may be used for a first sidelink between the RX UE and another UE. The first resource configuration information may indicate a resource configured by the base station for the TX UE in mode 1, or may indicate a resource pool corresponding to the TX UE in mode 2.

It may be understood that, in the first case, the TX UE may determine the first resource configuration information by itself. In this case, the TX UE performs S 1502 after receiving the first DRX configuration information from the RX UE in S 1501, and further performs S1504 when the first DRX configuration information does not match the first resource configuration information. In this case, for example, the TX UE may send first information to the RX UE or re-determine resource configuration information by itself. Alternatively, the base station to which the TX UE belongs may configure the first resource configuration information for the TX UE. In this case, the TX UE performs S1502 after receiving the first DRX configuration information from the RX UE in S1501, and further performs S1504 when the first DRX configuration information does not match the first resource configuration information. In this case, for example, the TX UE may send the first information to the RX UE and/or send second information to the base station to which the TX UE belongs.

In some possible implementations, S1504 may include but is not limited to the following specific implementations:
Manner 1: The TX UE sends the first information to the RX UE.

Specific implementation 1: When the RX UE configures the first DRX configuration information for the TX UE, the TX UE sends DRX configuration failure information (for example, the first information) to the RX UE, to request to configure or reconfigure DRX configuration information for the TX UE.

Specific implementation 2: When the base station to which the RX UE belongs configures the first DRX configuration information for the TX UE, the TX UE sends DRX configuration failure information (for example, the first information) to the RX UE, and then the RX UE sends fourth information to the base station to which the RX UE belongs, to indicate, to the base station to which the RX UE belongs, that a DRX configuration corresponding to the first sidelink fails, so that after receiving the DRX configuration failure information, the base station may configure or reconfigure DRX configuration information for the first sidelink based on identification information corresponding to the first DRX configuration information carried in the fourth information.

Herein, it may be understood that the fourth information may be the foregoing DRX configuration failure information, to be specific, the RX UE forwards the DRX configuration failure information to the base station to which the RX UE belongs, or the fourth information may further include indication information generated by the RX UE based on the DRX configuration failure information, to indicate that the DRX configuration corresponding to the first sidelink fails.

The DRX configuration failure information or the fourth information may include at least one of the following: third information indicating a DRX configuration failure (for example, information indicating that a failure reason is an SL DRX configuration conflict), identification information corresponding to the first DRX configuration information, a configuration failure type indicating that DRX configuration information does not match resource configuration information, an effective duration in which the RX UE is not allowed to configure DRX for the TX UE, the first resource configuration information (may be understood as conflicting resource configuration information), expected DRX configuration information (may be understood as recommended DRX configuration information, where the expected DRX configuration information may include some DRX parameters, such as a DRX active time period, or include all DRX parameters), a DRX adjustment amount, and identification information corresponding to the DRX adjustment amount. Certainly, the DRX configuration failure information may further include other information. This is not specifically limited in this embodiment of this application.

In this embodiment of this application, the DRX configuration failure information may be a PC5 RRC reconfiguration failure message. The DRX configuration failure information may be carried in a PC5 RRC message, a PC5 MAC CE, an SCI bearer, or the like. The fourth information may be a sidelink UE information message, an SL failure information message, or SL DRX configuration failure indication information. The fourth information may be carried in an RRC message, a MAC CE, a PUCCH bearer, or the like.

Manner 2: The TX UE sends the second information to the base station to which the TX UE belongs.

Specific implementation 3: The TX UE sends mode switching request information (that is, the second information) to the base station to which the TX UE belongs, to request the base station to switch a resource allocation mode of the TX UE from a first mode to a second mode, and configure or reconfigure a resource for the first communication device in the second mode. Herein, the first mode may be mode 1, or may be mode 2. Correspondingly, if the first mode is the mode 1, the second mode is the mode 2; or if the first mode is the mode 2, the second mode is the mode 1.

For example, if the TX UE is currently in mode 1, the TX UE sends mode switching request information to the base station to which the TX UE belongs. In response to the mode switching request information, the base station switches a resource allocation mode of the TX UE from mode 1 to mode 2, and then reallocates a resource to the TX UE in mode 2. In this way, the TX UE can receive new resource configuration information sent by the base station. Alternatively, if the TX UE is currently in mode 2, the TX UE sends mode switching request information to the base station to which the TX UE belongs. In response to the mode switching request information, the base station switches a resource allocation mode of the TX UE from mode 2 to mode 1, and then reallocates a resource to the TX UE in mode 1. In this way, the TX UE can receive new resource configuration information sent by the base station.

Specific implementation 4: The TX UE sends resource configuration request information to the base station to which the TX UE belongs, to request the base station to configure or reconfigure a resource for the TX UE.

The resource configuration request information includes at least one of the following: a request reason indicating that DRX configuration information does not match resource configuration information, the first DRX configuration information, identification information corresponding to the first DRX configuration information, expected resource configuration information (may be understood as recommended resource configuration information), or a resource adjustment amount.

Manner 3: The TX UE sends the first information to the RX UE, and also sends the second information to the base station to which the TX UE belongs.

Specific implementation 5: The TX UE may first send resource configuration request information to the base station to which the TX UE belongs. After receiving the resource configuration request information, the base station attempts to reconfigure a matched resource for the TX UE based on the first DRX configuration information carried in the resource configuration request information. If the base station can provide the matched resource, the base station may send new resource configuration information to the TX UE to indicate a reconfigured resource. Otherwise, the base station sends DRX configuration failure information to the TX UE, and then the TX UE sends the DRX configuration failure information to the RX UE.

Specific implementation 6: The TX UE may first send resource configuration request information to the base station to which the TX UE belongs, and start a timer when sending the resource configuration request information to the base station. When the timer expires, if the TX UE receives no resource configuration information reconfigured by the base station for the second sidelink, the TX UE sends DRX configuration failure information to the RX UE.

Further, when the base station to which the RX UE belongs configures the first DRX configuration information for the TX UE, the RX UE may further send fourth information to the base station to which the RX UE belongs, to indicate, to the base station to which the RX UE belongs, that a DRX configuration corresponding to the first sidelink fails, so that after receiving the DRX configuration failure information, the base station may configure or reconfigure DRX configuration information for the first sidelink based on identification information corresponding to the first DRX configuration information carried in the fourth information.

Specific implementation 7: The TX UE sends resource configuration request information to the base station to which the TX UE belongs, and sends DRX configuration failure information to the RX UE. Optionally, the resource configuration request information carries expected resource configuration information and/or a resource adjustment amount, and the DRX configuration failure information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier.

For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

In some possible embodiments, if an energy saving requirement of the TX UE is high, the specific implementations 3 to 6 are preferred.

In a second case, the first communication device is RX UE, the second communication device is TX UE, and the third communication device is a network device (for example, a base station) to which the RX UE belongs. FIG. 17 is a schematic diagram of a second scenario of a resource configuration and a DRX configuration according to an embodiment of this application. Refer to FIG. 17, TX UE or a base station to which the TX UE belongs configures first DRX configuration information for RX UE, and RX UE or a base station to which the RX UE belongs configures first resource configuration information for the RX UE. The first DRX configuration information is used for a first sidelink between the RX UE and the TX UE, the first resource configuration information indicates a receiving resource corresponding to the RX UE in mode 2, and the receiving resource is used for the first sidelink.

It may be understood that, in the second case, the RX UE may determine the first resource configuration information by itself. In this case, the RX UE performs S 1502 after receiving the first DRX configuration information from the TX UE in S 1501, and further performs S 1504 when the first DRX configuration information does not match the first resource configuration information. In this case, for example, the RX UE may send first information to the TX UE or re-determine resource configuration information by itself. Alternatively, the base station to which the RX UE belongs may configure the first resource configuration information for the RX UE. In this case, the RX UE performs S1502 after receiving the first DRX configuration information from the TX UE in S1501, and further performs S1504 when the first DRX configuration information does not match the first resource configuration information. In this case, for example, the RX UE may send the first information to the TX UE and/or send second information to the base station to which the RX UE belongs.

In some possible implementations, S1504 may include but is not limited to the following specific implementations:
Manner 1: The RX UE sends the first information to the TX UE.

Specific implementation 1: When the TX UE configures the first DRX configuration information for the RX UE, the RX UE sends DRX configuration failure information (for example, the first information) to the TX UE, to request the TX UE to configure or reconfigure DRX configuration information.

Specific implementation 2: When the base station to which the TX UE belongs configures the first DRX configuration information for the RX UE, the RX UE sends DRX configuration failure information (for example, the first information) to the TX UE, and then the TX UE sends fourth information to the base station to which the TX UE belongs, to indicate, to the base station to which the TX UE belongs, that a DRX configuration corresponding to the first sidelink fails, so that after receiving the DRX configuration failure information, the base station may configure or reconfigure DRX configuration information for the first sidelink based on identification information corresponding to the first DRX configuration information carried in the fourth information.

The DRX configuration failure information or the fourth information may include at least one of the following: third information indicating a DRX configuration failure (for example, information indicating that a failure reason is an SL DRX configuration conflict), identification information corresponding to the first DRX configuration information, a configuration failure type indicating that DRX configuration information does not match resource configuration information, an effective duration in which the TX UE is not allowed to configure DRX for the RX UE, the first resource configuration information (may be understood as conflicting resource configuration information), expected DRX configuration information (may be understood as recommended DRX configuration information, where the expected DRX configuration information may include some DRX parameters, such as a DRX active time period, or include all DRX parameters), a DRX adjustment amount, and identification information corresponding to the DRX adjustment amount. Certainly, the DRX configuration failure information may further include other information. This is not specifically limited in this embodiment of this application.

Manner 2: The RX UE sends the second information to the base station to which the RX UE belongs.

Specific implementation 3: The RX UE sends mode switching request information (that is, the second information) to the base station to which the RX UE belongs, to request the base station to switch a resource allocation mode of the RX UE from a first mode to a second mode, and configure or reconfigure a resource for the first communication device in the second mode. For example, if the RX UE is currently in mode 2, the RX UE sends mode switching request information to the base station to which the RX UE belongs. In response to the mode switching request information, the base station switches a resource allocation mode of the RX UE from mode 2 to mode 1, and then reallocates a resource to the RX UE in mode 1. In this way, the RX UE can receive new resource configuration information sent by the base station.

Specific implementation 4: The RX UE sends resource configuration request information to the base station to which the RX UE belongs, to request the base station to configure or reconfigure a resource for the RX UE.

The resource configuration request information includes at least one of the following: a request reason indicating that DRX configuration information does not match resource configuration information, the first DRX configuration information, identification information corresponding to the first DRX configuration information, expected resource configuration information (may be understood as recommended resource configuration information), or a resource adjustment amount.

Manner 3: The RX UE sends the first information to the TX UE, and also sends the second information to the base station to which the RX UE belongs.

Specific implementation 5: The RX UE may first send resource configuration request information to the base station to which the RX UE belongs. After receiving the resource configuration request information, the base station attempts to reconfigure a matched resource for the RX UE based on the first DRX configuration information carried in the resource configuration request information. If the base station can provide the matched resource, the base station may send new resource configuration information to the RX UE to indicate a reconfigured resource. Otherwise, the base station sends DRX configuration failure information to the RX UE, and then the RX UE sends the DRX configuration failure information to the TX UE.

Specific implementation 6: The RX UE may first send resource configuration request information to the base station to which the RX UE belongs, and start a timer when sending the resource configuration request information to the base station. When the timer expires, if the RX UE receives no resource configuration information reconfigured by the base station for the second sidelink, the RX UE sends DRX configuration failure information to the TX UE.

Further, when the base station to which the TX UE belongs configures the first DRX configuration information for the RX UE, the TX UE may further send fourth information to the base station to which the TX UE belongs, to indicate, to the base station to which the TX UE belongs, that a DRX configuration corresponding to the first sidelink fails, so that after receiving the DRX configuration failure information, the base station may configure or reconfigure the DRX configuration information for the first sidelink based on identification information corresponding to the first DRX configuration information carried in the fourth information.

Specific implementation 7: The RX UE sends resource configuration request information to the base station to which the RX UE belongs, and sends DRX configuration failure information to the TX UE. Optionally, the resource configuration request information carries expected resource configuration information and/or a resource adjustment amount, and the DRX configuration failure information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier. For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

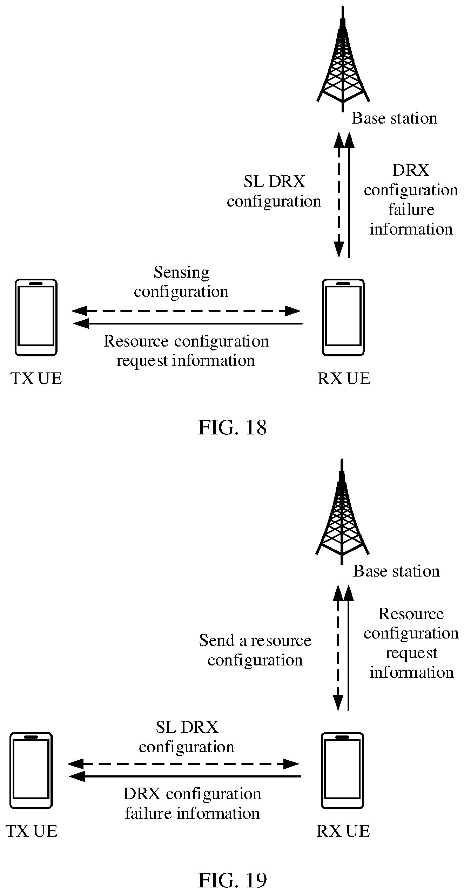

In a third case, the first communication device is RX UE, the second communication device is RX UE or a network device (for example, a base station) to which the RX UE belongs, and the third communication device is TX UE. FIG. 18 is a schematic diagram of a third scenario of a resource configuration and a DRX configuration according to an embodiment of this application. Refer to FIG. 18, RX UE or a base station to which the RX UE belongs configures first DRX configuration information for the RX UE, and TX UE or a base station to which the TX UE belongs configures first resource configuration information for the RX UE. The first resource configuration information may include resource configuration information indicating the first communication device to perform sensing.

In some possible implementations, the RX UE may be replaced with "auxiliary UE", and the TX UE may be replaced with "assisted UE". In this case, the first resource configuration information may be auxiliary configuration information (for example, including resource configuration information indicating the RX UE to perform sensing). The assisted UE sends the auxiliary configuration information to the auxiliary UE, and the auxiliary UE may send auxiliary information (for example, one or more resource sets) to the assisted UE based on the auxiliary configuration information.

It may be understood that the auxiliary UE may be used to assist the assisted UE in determining the resource configuration information, and the resource configuration information determined by the assisted UE may be used for a sidelink corresponding to the assisted UE.

In some possible implementations, in a relay scenario, the auxiliary UE may be understood as a relay (delay) UE, and the assisted UE may be understood as a remote (remote) UE. The relay UE may assist the remote UE in determining the resource configuration information.

Further, a resource allocation mode of the RX UE may be that the UE autonomously selects a resource, for example, the mode 2 or an enhanced mode 2 in the foregoing embodiment. For example, the enhanced mode 2 may include a mode 2 based on UE (inter) assistance, a mode 2 and a mode 2b based on UE (inter) coordination, and the like.

It should be noted that the sensing (sensing) described in this embodiment of this application may include sensing when UE autonomous resource allocation (for example, a mode 2, a mode 4, and a related enhancement method) is used, or may refer to only some behaviors in the sensing (for example, monitoring SCI).

In some possible implementations, S1504 may include but is not limited to the following specific implementations:
Manner 1: The RX UE sends the first information to the base station to which the RX UE belongs.

Specific implementation 1: When the base station to which the RX UE belongs configures the first DRX configuration information for the RX UE, the RX UE sends DRX configuration failure information (for example, the first information) to the base station to which the RX UE belongs, to request the base station to configure or reconfigure DRX configuration information for the first sidelink after receiving the DRX configuration failure information.

The DRX configuration failure information may be a sidelink UE information message, an SL failure information message, or SL DRX configuration failure indication information. The DRX configuration failure indication information may be carried in an RRC message, a MAC CE, the SCI, or the like.

The DRX configuration failure information may include at least one of the following: third information indicating a DRX configuration failure (for example, information indicating that a failure reason is an SL DRX configuration conflict), identification information corresponding to the first DRX configuration information, a configuration failure type indicating that DRX configuration information does not match resource configuration information, an effective duration in which the TX UE is not allowed to configure DRX for the RX UE, the first resource configuration information (may be understood as conflicting resource configuration information), expected DRX configuration information (may be understood as recommended DRX configuration information, where the expected DRX configuration information may include some DRX parameters, such as a DRX active time period, or include all DRX parameters), a DRX adjustment amount, and identification information corresponding to the DRX adjustment amount. Certainly, the DRX configuration failure information may further include other information. This is not specifically limited in this embodiment of this application.

Manner 2: The RX UE sends the second information to the TX UE.

Specific implementation 2: The RX UE sends mode switching request information (that is, the second information) to the TX UE, to request the TX UE to switch a resource allocation mode of the RX UE from a first mode to a second mode, and configure or reconfigure a resource for the first communication device in the second mode. For example, if the RX UE is currently in mode 2, the RX UE sends mode switching request information to the TX UE. In response to the mode switching request information, the TX UE switches a resource allocation mode of the RX UE from mode 2 to mode 1, and then reallocates a resource to the RX UE in mode 1. In this way, the RX UE can receive new resource configuration information sent by the TX UE.

Specific implementation 3: The RX UE sends resource configuration request information to the TX UE, to request the TX UE to configure or reconfigure a resource for the RX UE.

The resource configuration request information includes at least one of the following: a request reason indicating that DRX configuration information does not match resource configuration information, the first DRX configuration information, identification information corresponding to the first DRX configuration information, expected resource configuration information (may be understood as recommended resource configuration information), or a resource adjustment amount.

Manner 3: The RX UE sends the first information to the base station to which the RX UE belongs, and also sends the second information to the TX UE.

Specific implementation 4: The RX UE may first send resource configuration request information to the TX UE. After receiving the resource configuration request information, the TX UE attempts to reconfigure a matched resource for the RX UE based on the first DRX configuration information carried in the resource configuration request information. If the TX UE can provide the matched resource, the TX UE may send new resource configuration information to the RX UE to indicate a reconfigured resource. Otherwise, the TX UE sends DRX configuration failure information to the RX UE, and then the RX UE sends the DRX configuration failure information to the base station to which the RX UE belongs.

Specific implementation 5: The RX UE may first send resource configuration request information to the TX UE, and start a timer when sending the resource configuration request information to the TX UE. When the timer expires, if the RX UE receives no resource configuration information reconfigured by the TX UE for the second sidelink, the RX UE sends DRX configuration failure information to the base station to which the RX UE belongs.

Further, when the base station to which the TX UE belongs configures the first resource configuration information for the RX UE, the TX UE may further send resource configuration request information (for example, fourth information) to the base station to which the TX UE belongs, to indicate the base station to which the TX UE belongs to perform resource reconfiguration for the first sidelink, so that after receiving the resource configuration request information, the base station configures or reconfigures the resource configuration information for the first side-link.

Specific implementation 6: The RX UE sends resource configuration request information to the TX UE, and sends DRX configuration failure information to the base station to which the RX UE belongs. Optionally, the resource configuration request information carries expected DRX configuration information and/or a DRX adjustment amount, and the DRX configuration failure information carries expected resource configuration information and/or a resource adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier.

For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

In a fourth case, the first communication device is RX UE, the second communication device is TX UE, and the third communication device is a network device (for example, a base station) to which the RX UE belongs.

FIG. 19 is a schematic diagram of a fourth scenario of a resource configuration and a DRX configuration according to an embodiment of this application. Refer to FIG. 19, TX UE or a base station to which the TX UE belongs configures first DRX configuration information for RX UE, and RX UE or a base station to which the RX UE belongs configures first resource configuration information for RX UE. The first DRX configuration resource is used for a first sidelink between the RX UE and the TX UE, the first resource configuration information is used for a second sidelink between the RX UE being as the TX UE and another UE (that is, a fourth communication device), and the first resource configuration information indicates the RX UE to send sidelink data on the second sidelink. It may also be understood that the first resource configuration information is used by the RX UE (being as the TX UE) to send sidelink data to another UE (that is, a fourth communication device).

It may be understood that, in the fourth case, the RX UE may determine the first resource configuration information by itself. In this case, the RX UE performs S 1502 after receiving the first DRX configuration information from the TX UE in S 1501, and further performs S 1504 when the first DRX configuration information does not match the first resource configuration information. In this case, for example, the RX UE may send first information to the TX UE or re-determine resource configuration information by itself. Alternatively, the base station to which the RX UE belongs may configure the first resource configuration information for the RX UE. In this case, the RX UE performs S1502 after receiving the first DRX configuration information from the TX UE in S1501, and further performs S1504 when the first DRX configuration information does not match the first resource configuration information. In this case, for example, the RX UE may send the first information to the TX UE and/or send second information to the base station to which the RX UE belongs.

In some possible implementations, S1504 may include but is not limited to the following specific implementations:
Manner 1: The RX UE sends the first information to the TX UE.

Specific implementation 1: When the TX UE configures the first DRX configuration information for the RX UE, the RX UE sends DRX configuration failure information (for example, the first information) to the TX UE, to request to configure or reconfigure DRX configuration information for the TX UE.

Specific implementation 2: When the base station to which the TX UE belongs configures the first DRX configuration information for the RX UE, the RX UE sends DRX configuration failure information (for example, the first information) to the TX UE, and then the TX UE sends fourth information to the base station to which the TX UE belongs, to indicate, to the base station to which the TX UE belongs, that a DRX configuration corresponding to the first sidelink fails, so that after receiving the DRX configuration failure information, the base station may configure or reconfigure DRX configuration information for the first sidelink based on identification information corresponding to the first DRX configuration information carried in the fourth information.

The DRX configuration failure information may include at least one of the following: third information indicating a DRX configuration failure (for example, information indicating that a failure reason is an SL DRX configuration conflict), identification information corresponding to the first DRX configuration information, a configuration failure type indicating that DRX configuration information does not match resource configuration information, an effective duration in which the TX UE is not allowed to configure DRX for the RX UE, the first resource configuration information (may be understood as conflicting resource configuration information), expected DRX configuration information (may be understood as recommended DRX configuration information, where the expected DRX configuration information may include some DRX parameters, such as a DRX active time period, or include all DRX parameters), a DRX adjustment amount, and identification information corresponding to the DRX adjustment amount. Certainly, the DRX configuration failure information may further include other information. This is not specifically limited in this embodiment of this application.

Manner 2: The RX UE sends the second information to the base station to which the RX UE belongs.

Specific implementation 3: The RX UE sends mode switching request information (that is, the second information) to the base station to which the RX UE belongs, to request the base station to switch a resource allocation mode of the RX UE from a first mode to a second mode, and configure or reconfigure a resource for the first communication device in the second mode. For example, if the RX UE is currently in mode 2, the RX UE sends mode switching request information to the base station to which the RX UE belongs. In response to the mode switching request information, the base station switches a resource allocation mode of the RX UE from mode 2 to mode 1, and then reallocates a resource to the RX UE in mode 1. In this way, the RX UE can receive new resource configuration information sent by the base station.

Specific implementation 4: The RX UE sends resource configuration request information to the base station to which the RX UE belongs, to request the base station to configure or reconfigure a resource for the RX UE.

The resource configuration request information includes at least one of the following: a request reason indicating that DRX configuration information does not match resource configuration information, the first DRX configuration information, identification information corresponding to the first DRX configuration information, expected resource configuration information (may be understood as recommended resource configuration information), or a resource adjustment amount.

Manner 3: The RX UE sends the first information to the TX UE, and also sends the second information to the base station to which the RX UE belongs.

Specific implementation 5: The RX UE may first send resource configuration request information to the base station to which the RX UE belongs. After receiving the resource configuration request information, the base station attempts to reconfigure a matched resource for the RX UE based on the first DRX configuration information carried in the resource configuration request information. If the base station can provide the matched resource, the base station may send new resource configuration information to the RX UE to indicate a reconfigured resource. Otherwise, the base station sends DRX configuration failure information to the RX UE, and then the RX UE sends the DRX configuration failure information to the TX UE.

Specific implementation 6: The RX UE may first send resource configuration request information to the base station to which the RX UE belongs, and start a timer when sending the resource configuration request information to the base station. When the timer expires, if the RX UE receives no resource configuration information reconfigured by the base station for the second sidelink, the RX UE sends DRX configuration failure information to the TX UE.

Further, when the base station to which the TX UE belongs configures the first DRX configuration information for the RX UE, the TX UE may further send fourth information to the base station to which the TX UE belongs, to indicate, to the base station to which the TX UE belongs, that a DRX configuration corresponding to the first sidelink fails, so that after receiving the DRX configuration failure information, the base station may configure or reconfigure the DRX configuration information for the first sidelink based on identification information corresponding to the first DRX configuration information carried in the fourth information.

Specific implementation 7: The RX UE sends resource configuration request information to the base station to which the RX UE belongs, and sends DRX configuration failure information to the TX UE. Optionally, the resource configuration request information carries expected resource configuration information and/or a resource adjustment amount, and the DRX configuration failure information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier. For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

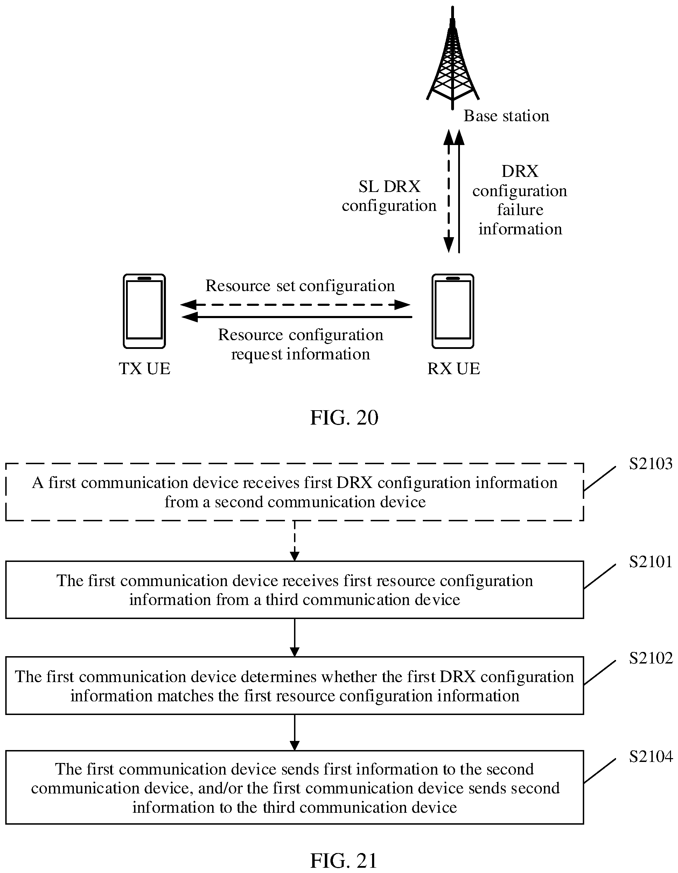

In a fifth case, the first communication device is RX UE, the second communication device is RX UE or a network device (for example, a base station) to which the RX UE belongs, and the third communication device is TX UE. FIG. 20 is a schematic diagram of a fifth scenario of a resource configuration and a DRX configuration according to an embodiment of this application. Refer to FIG. 20, RX UE or a base station to which the RX UE belongs configures first DRX configuration information for the RX UE, and TX UE or a base station to which the TX UE belongs configures first resource configuration information for the RX UE. The first resource configuration information indicates one or more resource sets corresponding to the RX UE.

In some possible implementations, the RX UE may be replaced with "assisted UE", "scheduled UE", or "member UE"; and the TX UE may be replaced with "auxiliary UE", "scheduling UE", or "head UE". In this case, the first resource configuration information may be auxiliary information indicating one or more resource sets. The assisted UE sends the auxiliary configuration information to the auxiliary UE, and the auxiliary UE may send auxiliary information to the assisted UE based on the auxiliary configuration information.

Further, a resource allocation mode of the RX UE may be that the UE autonomously selects a resource, for example, the mode 2 or an enhanced mode 2 in the foregoing embodiment. For example, the enhanced mode 2 may include a mode 2 based on UE (inter) assistance, a mode 2 and a mode 2d based on UE (inter) coordination, and the like.

It may be understood that the auxiliary UE may be used to assist the assisted UE in determining the resource configuration information, and the resource configuration information determined by the assisted UE may be used for a sidelink corresponding to the assisted UE.

In some possible implementations, in a relay scenario, the auxiliary UE may be understood as a relay (delay) UE, and the assisted UE may be understood as a remote (remote) UE. The relay UE may assist the remote UE in determining the resource configuration information. For example, the relay UE sends, to the remote UE, the first resource configuration information configured by the base station.

In some possible implementations, S1504 may include but is not limited to the following specific implementations:
Manner 1: The RX UE sends the first information to the base station to which the RX UE belongs.

Specific implementation 1: When the base station to which the RX UE belongs configures the first DRX configuration information for the RX UE, the RX UE sends DRX configuration failure information (for example, the first information) to the base station to which the RX UE belongs, to request the base station to configure or reconfigure DRX configuration information for the first side-link after receiving the DRX configuration failure information.

In actual application, the DRX configuration failure information may be a sidelink UE information message, an SL failure information message, or SL DRX configuration failure indication information. The SL DRX configuration failure information may be carried in an RRC message, a MAC CE, a PUCCH bearer, or the like.

The DRX configuration failure information may include at least one of the following: third information indicating a DRX configuration failure (for example, information indicating that a failure reason is an SL DRX configuration conflict), identification information corresponding to the first DRX configuration information, a configuration failure type indicating that DRX configuration information does not match resource configuration information, an effective duration in which the TX UE is not allowed to configure DRX for the RX UE, the first resource configuration information (may be understood as conflicting resource configuration information), expected DRX configuration information (may be understood as recommended DRX configuration information, where the expected DRX configuration information may include some DRX parameters, such as a DRX active time period, or include all DRX parameters), a DRX adjustment amount, and identification information corresponding to the DRX adjustment amount. Certainly, the DRX configuration failure information may further include other information. This is not specifically limited in this embodiment of this application.

Manner 2: The RX UE sends the second information to the TX UE.

Specific implementation 2: The RX UE sends mode switching request information (that is, the second information) to the TX UE, to request the TX UE to switch a resource allocation mode of the RX UE from a first mode to a second mode, and configure or reconfigure a resource for the first communication device in the second mode. For example, if the RX UE is currently in mode 2, the RX UE sends mode switching request information to the TX UE. In response to the mode switching request information, the TX UE switches a resource allocation mode of the RX UE from mode 2 to mode 1, and then reallocates a resource to the RX UE in mode 1. In this way, the RX UE can receive new resource configuration information sent by the TX UE.

Specific implementation 3: The RX UE sends resource configuration request information to the TX UE, to request the TX UE to configure or reconfigure a resource for the RX UE.

The resource configuration request information includes at least one of the following: a request reason indicating that DRX configuration information does not match resource configuration information, the first DRX configuration information, identification information corresponding to the first DRX configuration information, expected resource configuration information (may be understood as recommended resource configuration information), or a resource adjustment amount.

Manner 3: The RX UE sends the first information to the base station to which the RX UE belongs, and also sends the second information to the TX UE.

Specific implementation 4: The RX UE may first send resource configuration request information to the TX UE. After receiving the resource configuration request information, the TX UE attempts to reconfigure a matched resource for the RX UE based on the first DRX configuration information carried in the resource configuration request information. If the TX UE can provide the matched resource, the TX UE may send new resource configuration information to the RX UE to indicate a reconfigured resource. Otherwise, the TX UE sends DRX configuration failure information to the RX UE, and then the RX UE sends the DRX configuration failure information to the base station to which the RX UE belongs.

Specific implementation 5: The RX UE may first send resource configuration request information to the TX UE, and start a timer when sending the resource configuration request information to the TX UE. When the timer expires, if the RX UE receives no resource configuration information reconfigured by the TX UE for the second sidelink, the RX UE sends DRX configuration failure information to the base station to which the RX UE belongs.

Further, when the base station to which the TX UE belongs configures the first resource configuration information for the RX UE, the TX UE may further send resource configuration request information (for example, fourth information) to the base station to which the TX UE belongs, to indicate the base station to which the TX UE belongs to perform resource reconfiguration for the first sidelink, so that after receiving the resource configuration request information, the base station configures or reconfigures the resource configuration information for the first side-link.

Specific implementation 6: The RX UE sends resource configuration request information to the TX UE, and sends DRX configuration failure information to the base station to which the RX UE belongs. Optionally, the resource configuration request information carries expected resource configuration information and/or a resource adjustment amount, and the DRX configuration failure information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier. For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

In some possible implementations, the first resource configuration information may be resource configuration information received by the first communication device, and the first DRX configuration information may be current DRX configuration information of the first communication device. FIG. 21 is a fifth schematic flowchart of a communication method on a first communication device side according to an embodiment of this application. Refer to solid lines in FIG. 21, the method includes the following steps.

S2101: The first communication device receives first resource configuration information from a third communication device.

Herein, the first communication device receives first resource configuration information configured by the third communication device for a second sidelink.

S2102: The first communication device determines whether the first resource configuration information matches first DRX configuration information; and if yes, the procedure ends, or if no, performs S2104.

The first DRX configuration information may be current DRX configuration information of the first communication device.

Herein, after receiving the first resource configuration information by using S2101, the first communication device determines whether the first resource configuration information matches the current DRX resource configuration information (that is, the first DRX configuration information) of the first communication device.

For example, refer to a dashed line in FIG. 21, before S2101, the method may further include: S2103: The first communication device receives first DRX configuration information from a second communication device.

Herein, the first communication device receives first DRX configuration information configured by the second communication device for a first sidelink, and then the first communication device may perform discontinuous reception based on the first DRX configuration information. In this case, the first DRX configuration information may be understood as current DRX configuration information of the first communication device.

S2104: The first communication device sends first information to the second communication device, and/or the first communication device sends second information to the third communication device.

In this embodiment of this application, when determining that the resource configuration information does not match the current DRX configuration information, the first communication device may request the second communication device to perform DRX configuration, and/or request the third communication device to perform resource configuration, so that the DRX configuration information matches the resource configuration information.

The following describes the foregoing communication method by using a specific scenario as an example.

In a sixth case, the first communication device is TX UE, the second communication device is RX UE, and the third communication device is a network device (for example, a base station) to which the TX UE belongs.

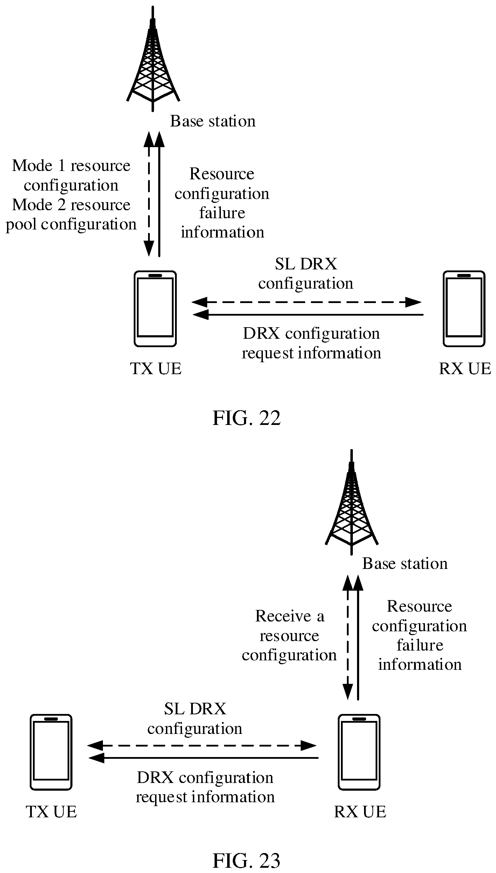

FIG. 22 is a schematic diagram of a sixth scenario of a resource configuration and a DRX configuration according to an embodiment of this application. Refer to FIG. 22, TX UE, RX UE, or a base station to which the RX UE belongs configures first DRX configuration information for the TX UE, and a base station to which the TX UE belongs configures first resource configuration information for the TX UE. The first resource configuration information may indicate a resource configured by the base station for the TX UE in mode 1, or may indicate a resource pool corresponding to the TX UE in mode 2.

It may be understood that, in the sixth case, the TX UE may determine the first DRX configuration information by itself. In this case, the TX UE performs S2102 after receiving the first resource configuration information from the base station to which the TX UE belongs in S2101, and further performs S2104 when the first DRX configuration information does not match the first resource configuration information. In this case, for example, the TX UE may send second information to the TX UE or re-determine DRX configuration information by itself. Alternatively, the RX UE or the base station to which the RX UE belongs may configure the first DRX configuration information for the TX UE. In this case, the TX UE performs S2102 after receiving the first resource configuration information from the base station to which the TX UE belongs in S2101, and further performs S2104 when the first DRX configuration information does not match the first resource configuration information. In this case, for example, the TX UE may send the first information to the RX UE and/or send second information to the base station to which the TX UE belongs.

In some possible implementations, S2104 may include but is not limited to the following specific implementations:
Manner 1: The TX UE sends the first information to the RX UE.

Specific implementation 1: When the RX UE or the base station to which the RX UE belongs configures the first DRX configuration information for the TX UE, the TX UE sends DRX configuration request information (for example, the first information) to the RX UE, to request to configure or reconfigure DRX configuration information for the TX UE.

The DRX configuration request information includes at least one of the following: a request reason indicating that DRX configuration information does not match resource configuration information, the first resource configuration information, identification information corresponding to the first resource configuration information, first DRX configuration information, and identification information corresponding to the first DRX configuration information.

In actual application, the DRX configuration request information may be a PC5 RRC reconfiguration failure message, and the DRX configuration request information may be carried in a PC5 RRC message, a PC5 MAC CE, an SCI bearer, or the like.

Manner 2: The TX UE sends the second information to the base station to which the TX UE belongs.

Specific implementation 2: The TX UE sends mode switching request information (that is, the second information) to the base station to which the TX UE belongs, to request the base station to switch a resource allocation mode of the TX UE from a first mode to a second mode, and configure or reconfigure a resource for the first communication device in the second mode. For example, if the TX UE is currently in mode 2, the TX UE sends mode switching request information to the base station to which the TX UE belongs. In response to the mode switching request information, the base station switches a resource allocation mode of the TX UE from mode 2 to mode 1, and then reallocates a resource to the TX UE in mode 1. In this way, the TX UE can receive new resource configuration information sent by the base station. Alternatively, if the TX UE is currently in mode 1, the TX UE sends mode switching request information to the base station to which the TX UE belongs. In response to the mode switching request information, the base station switches a resource allocation mode of the TX UE from mode 1 to mode 2, and then reallocates a resource to the TX UE in mode 2. In this way, the TX UE can receive new resource configuration information sent by the base station.

Specific implementation 3: The TX UE sends resource configuration failure information to the base station to which the TX UE belongs, to request the base station to configure or reconfigure a resource for the TX UE.

The resource configuration failure information may include at least one of the following: fourth information indicating a resource configuration failure, a configuration failure type indicating that resource configuration information does not match DRX configuration information, first DRX configuration information (the first DRX configuration information may include some DRX parameters, such as a DRX active time period, or include all DRX parameters), identification information corresponding to the first DRX configuration information, expected resource configuration information (which may be understood as recommended resource configuration information), or a resource adjustment amount.

Manner 3: The TX UE sends the first information to the RX UE, and also sends the second information to the base station to which the TX UE belongs.

Specific implementation 4: The TX UE may first send resource configuration failure information to the base station to which the TX UE belongs. After receiving the resource configuration failure information, the base station attempts to reconfigure a matched resource for the TX UE based on the first DRX configuration information carried in the resource configuration failure information. If the base station can provide the matched resource, the base station may send new resource configuration information to the TX UE to indicate a reconfigured resource. Otherwise, the base station sends resource configuration failure information to the TX UE, and then the TX UE sends the DRX configuration request information to the RX UE.

Specific implementation 5: The TX UE sends resource configuration failure information to the base station to which the TX UE belongs, and sends DRX configuration request information to the RX UE. Optionally, the resource configuration failure information carries expected resource configuration information and/or a resource adjustment amount, and the DRX configuration request information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier.

For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

In a seventh case, the first communication device is RX UE, the second communication device is a network device (for example, a base station) to which the RX UE belongs, and the third communication device is TX UE. FIG. 23 is a schematic diagram of a seventh scenario of a resource configuration and a DRX configuration according to an embodiment of this application. Refer to FIG. 23, RX UE, TX UE, or a base station to which the TX UE belongs configures first DRX configuration information for the RX UE, and a base station to which the RX UE belongs configures first resource configuration information for the RX UE. The first resource configuration information indicates a receiving resource corresponding to the RX UE in mode 2.

It may be understood that, in the seventh case, the RX UE may determine the first DRX configuration information by itself. In this case, the RX UE performs S2102 after receiving the first resource configuration information from the base station to which the RX UE belongs in S2101, and further performs S2104 when the first DRX configuration information does not match the first resource configuration information. In this case, for example, the RX UE may send second information to the base station to which the RX UE belongs or re-determine DRX configuration information by itself. Alternatively, the TX UE or the base station to which the TX UE belongs may configure the first DRX configuration information for the RX UE. In this case, the RX UE performs S2102 after receiving the first resource configuration information from the base station to which the RX UE belongs in S2101, and further performs S2104 when the first DRX configuration information does not match the first resource configuration information. In this case, for example, the RX UE may send the first information to the TX UE and/or send second information to the base station to which the RX UE belongs.

In some possible implementations, S2104 may include but is not limited to the following specific implementations:
Manner 1: The RX UE sends the first information to the TX UE.

Specific implementation 1: When the TX UE or the base station to which the TX UE belongs configures the first DRX configuration information for the RX UE, the RX UE sends DRX configuration request information (for example, the first information) to the TX UE, to request to configure or reconfigure DRX configuration information for the TX UE.

The DRX configuration request information includes at least one of the following: a request reason indicating that DRX configuration information does not match resource configuration information, the first resource configuration information, identification information corresponding to the first resource configuration information, expected DRX configuration information, and a DRX adjustment amount.

Manner 2: The RX UE sends the second information to the base station to which the RX UE belongs.

Specific implementation 2: The RX UE sends resource configuration failure information to the base station to which the RX UE belongs, to request the base station to configure or reconfigure a resource for the TX UE.

The resource configuration failure information may include at least one of the following: fifth information indicating a resource configuration failure, a configuration failure type indicating that resource configuration information does not match DRX configuration information, first DRX configuration information (the first DRX configuration information may include some DRX parameters, such as a DRX active time period, or include all DRX parameters), identification information corresponding to the first DRX configuration information, expected resource configuration information (which may be understood as recommended resource configuration information), or a resource adjustment amount.

Manner 3: The RX UE sends the first information to the TX UE, and also sends the second information to the base station to which the RX UE belongs.

Specific implementation 3: The RX UE sends resource configuration failure information to the base station to which the RX UE belongs, and sends DRX configuration request information to the TX UE. Optionally, the resource configuration failure information carries expected resource configuration information and/or a resource adjustment amount, and the DRX configuration request information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier. For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

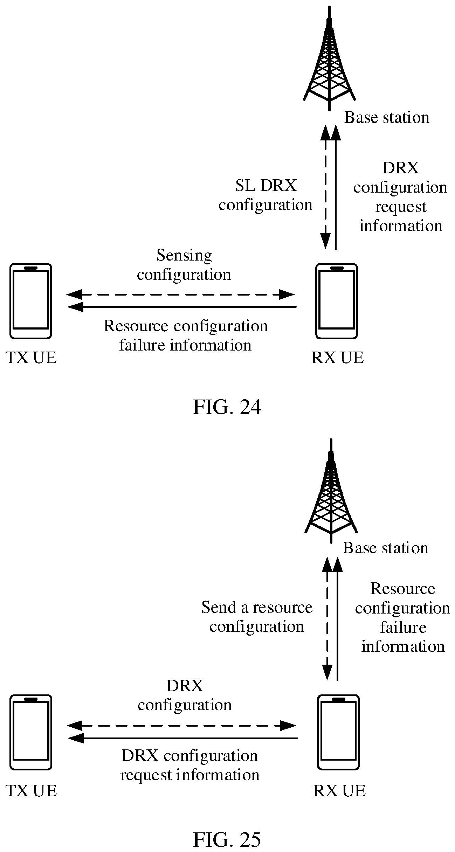

In an eighth case, similar to the scenario of the third case, the first communication device is RX UE, the second communication device is a network device (for example, a base station) to which the RX UE belongs, and the third communication device is TX UE. FIG. 24 is a schematic diagram of an eighth scenario of a resource configuration and a DRX configuration according to an embodiment of this application. Refer to FIG. 24, RX UE or a base station to which the RX UE belongs configures first DRX configuration information for the RX UE, and TX UE or a base station to which the TX UE belongs configures first resource configuration information for the RX UE. The first resource configuration information may include resource configuration information indicating the RX UE to perform sensing.

It may be understood that, in the eighth case, the RX UE may determine the first DRX configuration information by itself. In this case, the RX UE performs S2102 after receiving the first resource configuration information (including resource configuration information indicating the RX UE to perform sensing) from the TX UE in S2101, and further performs S2104 when the first DRX configuration information does not match the first resource configuration information. In this case, for example, the RX UE may send second information to the TX UE or re-determine DRX configuration information by itself. Alternatively, the base station to which the RX UE belongs may configure the first DRX configuration information for the RX UE. In this case, the RX UE performs S2102 after receiving the first resource configuration information from the TX UE in S2101, and further performs S2104 when the first DRX configuration information does not match the first resource configuration information. In this case, for example, the RX UE may send the first information to the base station to which the RX UE belongs and/or send second information to the TX UE.

In some possible implementations, S2104 may include but is not limited to the following specific implementations:
Manner 1: The TX UE sends the first information to the RX UE.

Specific implementation 1: When the base station to which the RX UE belongs configures the first DRX configuration information for the RX UE, the RX UE sends DRX configuration request information (for example, the first information) to the base station to which the RX UE belongs, to request to configure or reconfigure DRX configuration information for the base station.

The DRX configuration request information includes at least one of the following: a request reason indicating that DRX configuration information does not match resource configuration information, the first resource configuration information, identification information corresponding to the first resource configuration information, expected DRX configuration information, and a DRX adjustment amount.

Manner 2: The RX UE sends the second information to the TX UE.

Specific implementation 2: The RX UE sends mode switching request information (that is, the second information) to the TX UE, to request the TX UE to switch a resource allocation mode of the RX UE from a first mode to a second mode, and configure or reconfigure a resource for the first communication device in the second mode. For example, if the RX UE is currently in mode 2, the RX UE sends mode switching request information to the TX UE. In response to the mode switching request information, the TX UE switches a resource allocation mode of the RX UE from mode 2 to mode 1, and then reallocates a resource to the RX UE in mode 1. In this way, the RX UE can receive new resource configuration information sent by the base station.

Specific implementation 3: The RX UE sends resource configuration failure information to the TX UE, to request the TX UE to configure or reconfigure a resource for the RX UE.

The resource configuration failure information may include at least one of the following: fifth information indicating a resource configuration failure, a configuration failure type indicating that resource configuration information does not match DRX configuration information, first DRX configuration information (the first DRX configuration information may include some DRX parameters, such as a DRX active time period, or include all DRX parameters), identification information corresponding to the first DRX configuration information, expected resource configuration information (which may be understood as recommended resource configuration information), or a resource adjustment amount.

Manner 3: The RX UE sends the first information to the base station to which the RX UE belongs, and also sends the second information to the TX UE.

Specific implementation 4: The RX UE sends resource configuration failure information to the TX UE, and sends DRX configuration request information to the base station to which the RX UE belongs. Optionally, the resource configuration failure information carries expected resource configuration information and/or a resource adjustment amount, and the DRX configuration request information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier. For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

In a ninth case, the first communication device is RX UE, the second communication device is TX UE, and the third communication device is a network device (for example, a base station) to which the RX UE belongs.

FIG. 25 is a schematic diagram of a ninth scenario of a resource configuration and a DRX configuration according to an embodiment of this application. Refer to FIG. 25, RX UE, TX UE, or a base station to which the TX UE belongs configures first DRX configuration information for the RX UE, and a base station to which the RX UE belongs configures first resource configuration information for the RX UE. The first DRX configuration resource is used for a first sidelink between the RX UE and the TX UE, the first resource configuration information is used for a second sidelink between the RX UE being as the TX UE and another UE (that is, a fourth communication device), and the first resource configuration information indicates the RX UE to send sidelink data on the second sidelink. It may also be understood that the first resource configuration information is used by the RX UE (being as the TX UE) to send sidelink data to another UE (that is, a fourth communication device).

It may be understood that, in the ninth case, the RX UE may determine the first DRX configuration information by itself. In this case, the RX UE performs S2102 after receiving the first resource configuration information from the base station to which the RX UE belongs in S2101, and further performs S2104 when the first DRX configuration information does not match the first resource configuration information. In this case, for example, the RX UE may send second information to the base station to which the RX UE belongs or re-determine DRX configuration information by itself. Alternatively, the TX UE or the base station to which the TX UE belongs may configure the first DRX configuration information for the RX UE. In this case, the RX UE performs S2102 after receiving the first resource configuration information from the base station to which the RX UE belongs in S2101, and further performs S2104 when the first DRX configuration information does not match the first resource configuration information. In this case, for example, the RX UE may send the first information to the TX UE and/or send second information to the base station to which the RX UE belongs.

In some possible implementations, S2104 may include but is not limited to the following specific implementations:
Manner 1: The RX UE sends the first information to the TX UE.

Specific implementation 1: When the TX UE or the base station to which the TX UE belongs configures the first DRX configuration information for the RX UE, the RX UE sends DRX configuration request information (for example, the first information) to the TX UE, to request to configure or reconfigure DRX configuration information for the TX UE or the base station to which the TX belongs.

The DRX configuration request information includes at least one of the following: a request reason indicating that DRX configuration information does not match resource configuration information, the first resource configuration information, identification information corresponding to the first resource configuration information, first DRX configuration information, and identification information corresponding to the first DRX configuration information.

Manner 2: The RX UE sends the second information to the base station to which the RX UE belongs.

Specific implementation 2: The RX UE sends resource configuration failure information (for example, the second information) to the base station to which the RX UE belongs, to request the base station to configure or reconfigure a resource for the RX UE.

The resource configuration failure information may include at least one of the following: fifth information indicating a resource configuration failure, a configuration failure type indicating that resource configuration information does not match DRX configuration information, first DRX configuration information (the first DRX configuration information may include some DRX parameters, such as a DRX active time period, or include all DRX parameters), identification information corresponding to the first DRX configuration information, expected resource configuration information (which may be understood as recommended resource configuration information), or a resource adjustment amount.

Manner 3: The RX UE sends the first information to the TX UE, and also sends the second information to the base station to which the RX UE belongs.

Specific implementation 3: The RX UE sends resource configuration failure information to the base station to which the RX UE belongs, and sends DRX configuration request information to the TX UE. Optionally, the resource configuration failure information carries expected resource configuration information and/or a resource adjustment amount, and the DRX configuration request information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier. For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

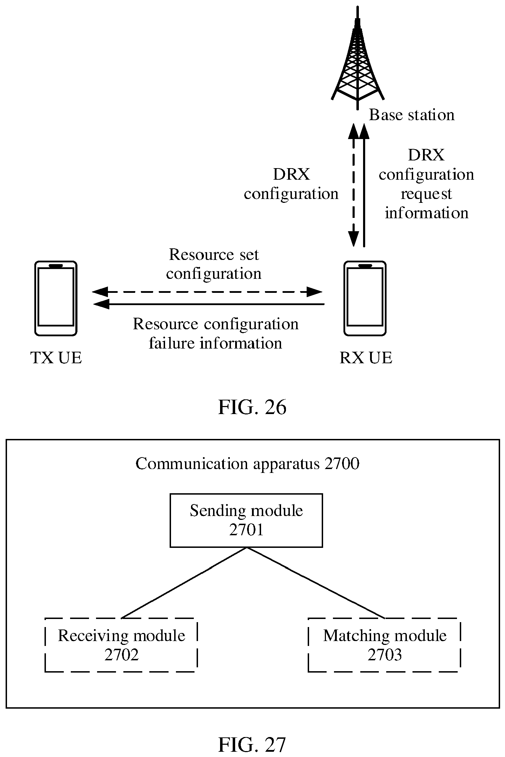

In a tenth case, similar to the scenario of the fifth case, the first communication device is TX UE, the second communication device is a network device (for example, a base station) to which the TX UE belongs, and the third communication device is TX UE or RX UE. FIG. 26 is a schematic diagram of a tenth scenario of a resource configuration and a DRX configuration according to an embodiment of this application. Refer to FIG. 26, RX UE or a base station to which the RX UE belongs configures first DRX configuration information for the RX UE, and TX UE or a base station to which the TX UE belongs configures first resource configuration information for the RX UE. The first resource configuration information indicates one or more resource sets corresponding to the RX UE.

It may be understood that, in the tenth case, the RX UE may determine the first DRX configuration information by itself. In this case, the RX UE performs S2102 after receiving the first resource configuration information from the TX UE in S2101, and further performs S2104 when the first DRX configuration information does not match the first resource configuration information. In this case, for example, the RX UE may send second information to the TX UE or re-determine DRX configuration information by itself. Alternatively, the base station to which the RX UE belongs may configure the first DRX configuration information for the RX UE. In this case, the RX UE performs S2102 after receiving the first resource configuration information from the TX UE in S2101, and further performs S2104 when the first DRX configuration information does not match the first resource configuration information. In this case, for example, the RX UE may send the first information to the base station to which the RX UE belongs and/or send second information to the TX UE.

In some possible implementations, S2104 may include but is not limited to the following specific implementations:
Manner 1: The RX UE sends the first information to the base station to which the RX UE belongs.

Specific implementation 1: When the base station to which the RX UE belongs configures the first DRX configuration information for the RX UE, the RX UE sends DRX configuration request information (for example, the first information) to the base station, to request to configure or reconfigure DRX configuration information for the RX UE.

The DRX configuration request information includes at least one of the following: a request reason indicating that DRX configuration information does not match resource configuration information, the first resource configuration information, identification information corresponding to the first resource configuration information, first DRX configuration information (the first DRX configuration information may include some DRX parameters, such as a DRX active time period, or include all DRX parameters), and identification information corresponding to the first DRX configuration information.

Manner 2: The RX UE sends the second information to the TX UE.

Specific implementation 2: The RX UE sends mode switching request information (for example, the second information) to the TX UE, to request the TX UE to switch a resource allocation mode of the RX UE from a first mode to a second mode, and configure or reconfigure a resource for the first communication device in the second mode. For example, if the RX UE is currently in mode 2, the RX UE sends mode switching request information to the TX UE. In response to the mode switching request information, the TX UE switches a resource allocation mode of the RX UE from mode 2 to mode 1, and then reallocates a resource to the RX UE in mode 1. In this way, the RX UE can receive new resource configuration information sent by the base station.

Specific implementation 3: The RX UE sends resource configuration failure information to the TX UE, to request the TX UE to configure or reconfigure a resource for the RX UE.

The resource configuration failure information may include at least one of the following: fourth information indicating a resource configuration failure, a configuration failure type indicating that resource configuration information does not match DRX configuration information, first DRX configuration information (the first DRX configuration information may include some DRX parameters, such as a DRX active time period, or include all DRX parameters), identification information corresponding to the first DRX configuration information, expected resource configuration information (which may be understood as recommended resource configuration information), or a resource adjustment amount.

Manner 3: The RX UE sends the first information to the base station to which the RX UE belongs, and also sends the second information to the TX UE.

Specific implementation 4: The RX UE sends resource configuration failure information to the TX UE, and sends DRX configuration request information to the base station to which the RX UE belongs. Optionally, the resource configuration failure information carries expected resource configuration information and/or a resource adjustment amount, and the DRX configuration request information carries expected DRX configuration information and/or a DRX adjustment amount.

It should be noted that the identification information corresponding to the DRX configuration information in the foregoing specific implementations may include at least one of the following: a target identifier, a source identifier, a sidelink connection identifier, a source and target identifier pair, a sidelink link identifier, a logical channel identifier, a resource pool identifier, a sidelink service identifier, a MAC PDU identifier, and a TB identifier. For example, the source identifier may be a source layer 1 identifier (source L1 ID) or a source layer 2 identifier (source L2 ID), and the target identifier may be a target layer 1 identifier (source L1 ID) or a target layer 2 identifier (source L2 ID).

It can be learned from the foregoing that, when determining that the first resource configuration information does not match the first DRX configuration information (that is, an SL resource and an SL DRX), the first communication device sends the first information to the second communication device and/or sends the second information to the third communication device, so that an SL resource configured by the second communication device and/or the third communication device matches the SL DRX.

Further, the first communication device needs to send the SL DRX configuration to an SL resource configuration body (the base station or the UE) only when the first communication device determines that the SL resource does not match the SL DRX, so that signaling overheads of sending related SL DRX by the first communication device to the SL resource configuration body can be reduced. The first communication device needs to send the SL resource configuration to an SL DRX configuration body (the base station or the UE) only when the first communication device determines that the SL resource does not match the SL DRX, signaling overheads of sending, by the first communication device, a related SL resource configuration of the first communication device to the SL DRX configuration body can be reduced.

Further, when the UE determines that the SL resource does not match the SL DRX, the UE indicates a mismatched SL resource configuration/recommended SL DRX configuration to the SL DRX configuration body, indicates a mismatched SL DRX configuration/recommended SL resource configuration to the SL resource configuration body, or indicates the recommended SL resource configuration to the SL DRX configuration body while indicating the recommended SL DRX configuration to the SL DRX configuration body, so that a subsequently reconfigured SL resource matches the SL DRX.

Based on a same inventive concept, an embodiment of this application provides a communication apparatus. The communication apparatus may be a chip or a system on chip in a first communication device, or may be a function module that is in the first communication device and that is configured to implement the method in any one of the foregoing embodiments. The chip or the system on chip includes a memory. The memory stores instructions. When the instructions are invoked by the system on chip or the chip, the foregoing method is performed. FIG. 27 is a schematic diagram of still another structure of a communication apparatus according to an embodiment of this application. As shown in FIG. 27, the communication apparatus 2700 may include a sending module 2701, and may further include a receiving module 2702 and/or a matching module 2703.

In some possible implementations, the sending nodule 2701 is configured to: if first discontinuous reception DRX configuration information does not match first resource configuration information, send first information to a second communication device, and/or send second information to a third communication device.

The first DRX configuration information is used for a first sidelink corresponding to the first communication device, the first resource configuration information is used for a second sidelink corresponding to the first communication device, the first information indicates the second communication device to perform DRX configuration for the first sidelink, and the second information indicates the third communication device to perform resource configuration for the second sidelink.

In some possible implementations, the first sidelink may be one or more sidelinks, and the second sidelink may also be one or more sidelinks. It should be noted that when the first sidelink is one sidelink, the second sidelink and the first sidelink may be a same sidelink, or the second sidelink and the first sidelink are different sidelinks. When the first sidelink is a plurality of sidelinks, the second sidelink may be one or more of the first sidelinks. In other words, the second sidelink is some or all of the first sidelinks.

In some possible implementations, because DRX configuration information and resource configuration information are configured by different entities, a DRX active time period indicated by the first DRX configuration information and a time domain interval indicated by the first resource configuration information may conflict in one or more time periods. In this case, it may be referred to that the first DRX configuration information does not match the first resource configuration information.

Optionally, the "one time period" may be a slot corresponding to previous time domain intervals, or may be a slot corresponding to next time domain intervals.

Further, that a DRX active time period indicated by the first DRX configuration information conflicts with a time domain interval indicated by the first resource configuration information in at least one time period includes: a quantity of slots in which n DRX active time periods overlap the time domain interval is less than a preset threshold, and n is a positive integer. For example, that a quantity of slots in which n DRX active time periods overlap the time domain interval is less than a preset threshold includes: A value obtained by dividing the quantity of overlapping slots by a quantity of slots of n times a DRX active time is less than the preset threshold.

In some possible implementations, the first resource configuration information is current resource configuration information of the first communication device. The receiving module 2702 is configured to receive the first DRX configuration information from the second communication device; and the matching module 2703 is configured to determine that the first DRX configuration information does not match the first resource configuration information.

In some possible implementations, the first communication device is TX UE, the second communication device is RX UE, and the third communication device is a network device to which the TX UE belongs. The first resource configuration information may indicate a resource configured by a base station for the TX UE in mode 1, or may indicate a resource pool corresponding to the TX UE in mode 2.

In some possible implementations, the first communication device is RX UE, the second communication device is TX UE, and the third communication device is a network device to which the RX UE belongs. The first DRX configuration information is used for a first sidelink between the RX UE and the TX UE, the first resource configuration information indicates a receiving resource corresponding to the RX UE in mode 2, and the receiving resource is used for the first sidelink.

In some possible implementations, the first communication device is RX UE, the third communication device is TX UE, and the second communication device is a network device to which the RX UE belongs. The first resource configuration information includes resource configuration information indicating the RX UE to perform sensing.

Further, the first communication device may be auxiliary user equipment, the second communication device may be a network device to which the auxiliary user equipment belongs, and the third communication device may be assisted user equipment. The first resource configuration information includes resource configuration information indicating the first communication device to perform sensing.

In some possible implementations, the first communication device is RX UE, the second communication device is TX UE, and the third communication device is a network device to which the RX UE belongs. The first DRX configuration resource is used for a first sidelink between the RX UE and the TX UE, the first resource configuration information is used for a second sidelink between the RX UE being as the TX UE and another RX UE, and the first resource configuration information indicates the RX UE to send sidelink data on the second sidelink. It may also be understood that the first resource configuration information is used by the RX UE (being as the TX UE) to send sidelink data to another UE.

In some possible implementations, the first communication device is RX UE, the second communication device is a network device to which the RX UE belongs, and the third communication device is TX UE. The first DRX configuration resource is used for a first sidelink between the RX UE and the TX UE, and the first resource configuration information indicates one or more resource sets corresponding to the RX UE.

Further, the first communication device may be auxiliary user equipment, the second communication device may be a network device to which the auxiliary user equipment belongs, and the third communication device may be assisted user equipment. The first DRX configuration resource is used for a first sidelink between the RX UE and the TX UE, and the first resource configuration information indicates one or more resource sets corresponding to the RX UE.

In some possible implementations, the sending module 2701 is specifically configured to: send mode switching request information to the third communication device, where the mode switching request information requests the third communication device to switch a resource allocation mode of the communication apparatus from a first mode to a second mode; or send resource configuration request information to the third communication device.

The resource configuration request information includes at least one of the following: a request reason indicating that DRX configuration information does not match resource configuration information, the first DRX configuration information, identification information corresponding to the first DRX configuration information, expected resource configuration information, or a resource adjustment amount.

In some possible implementations, the sending module 2701 is configured to send DRX configuration failure information to the second communication device.

The DRX configuration failure information includes at least one of the following: third information indicating a DRX configuration failure, identification information corresponding to DRX configuration information, a configuration failure type indicating that DRX configuration information does not match resource configuration information, an effective duration in which the second communication device is not allowed to configure DRX for the first communication device, the first resource configuration information, expected DRX configuration information, a DRX adjustment amount, and identification information corresponding to the DRX adjustment amount.

In some possible implementations, the receiving module 2702 is further configured to receive the DRX configuration failure information sent by the third communication device; and the sending module 2701 is further configured to send the DRX configuration failure information to the second communication device.

In some possible implementations, the apparatus 2700 further includes a timer, where the timer is started after the sending module 2701 sends the resource configuration request information to the third communication device; and the sending module 2701 is further configured to: when the timer expires and the receiving module 2702 receives no resource configuration information sent by the third communication device, send the DRX configuration failure information to the second communication device.

In some possible implementations, the DRX configuration failure information is further used to trigger the second communication device to send fourth information to a network device to which the second communication device belongs, and the fourth information indicates that a DRX configuration corresponding to the first sidelink fails.

It may be understood that the fourth information may be the foregoing DRX configuration failure information, to be specific, the RX UE forwards the DRX configuration failure information to a base station to which the RX UE belongs, or the fourth information may further include indication information generated by the RX UE based on the DRX configuration failure information, to indicate that a DRX configuration corresponding to the first sidelink fails.

The identification information may include at least one of the following: a target identifier, a source identifier, a sidelink connection identifier, a source and target identifier pair, a sidelink link identifier, a logical channel identifier, a resource pool identifier, a sidelink service identifier, a media access control protocol data unit MAC PDU identifier, and a transport block TB identifier.

In some possible implementations, the sending module 2701 is further configured to send resource configuration request information to the third communication device, and send DRX configuration failure information to the second communication device.

In some possible implementations, the first DRX configuration information is current DRX configuration information of the first communication device; and the receiving module 2702 is further configured to receive the first resource configuration information from the third communication device; and the matching module 2703 is configured to determine that the first DRX configuration information does not match the first resource configuration information.

In some possible implementations, the first communication device is TX UE, the second communication device is RX UE, and the third communication device is a network device to which the TX UE belongs. The first resource configuration information may indicate a resource configured by a base station for the TX UE in mode 1, or may indicate a resource pool corresponding to the TX UE in mode 2.

In some possible implementations, the first communication device is RX UE, the second communication device is a network device to which the RX UE belongs, and the third communication device is RX UE. The first resource configuration information indicates a receiving resource corresponding to the TX UE in mode 2.

In some possible implementations, the first communication device is RX UE, the second communication device is a network device to which the RX UE belongs, and the third communication device is TX UE. The first resource configuration information includes resource configuration information indicating the RX UE to perform sensing.

Further, the first communication device may be assisted user equipment, the second communication device may be a network device to which the assisted user equipment belongs, and the third communication device may be auxiliary user equipment. The first resource configuration information includes resource configuration information indicating the first communication device to perform sensing.

In some possible implementations, the first communication device is RX UE, the second communication device is TX UE, and the third communication device is a network device to which the RX UE belongs. The first resource configuration information is used by the RX UE to send sidelink data on the second sidelink between the RX UE and the another UE. It may also be understood that the first resource configuration information is used by the RX UE (being as the TX UE) to send sidelink data to the another UE.

In some possible implementations, the first communication device is RX UE, the second communication device is a network device to which the RX UE belongs, and the third communication device is TX UE. The first resource configuration information indicates one or more resource sets corresponding to the RX UE.

Further, the first communication device is assisted user equipment, the second communication device is a network device to which the assisted user equipment belongs, and the third communication device is auxiliary user equipment.

In some possible implementations, the sending module 2701 is further configured to send mode switching request information to the third communication device, where the mode switching request information requests the third communication device to switch a resource allocation mode of the first communication device from a first mode to a second mode, and configure a resource for the first communication device in the second mode; or send resource configuration failure information to the third communication device, where the resource configuration failure information includes at least one of the following: fifth information indicating a resource configuration failure, a configuration failure type indicating that resource configuration information does not match DRX configuration information, the first DRX configuration information, identification information corresponding to the first DRX configuration information, expected resource configuration information, or a resource adjustment amount.

In some possible implementations, the sending module 2701 is further configured to send DRX configuration request information to the third communication device. The DRX configuration request information includes at least one of the following: a request reason indicating that DRX configuration information does not match resource configuration information, the first resource configuration information, an expected DRX configuration, or a DRX adjustment amount.

In some possible implementations, the sending module 2701 is further configured to send, by the first communication device, resource configuration failure information to the second communication device, and send DRX configuration request information to the third communication device.

Based on a same inventive concept, still refer to FIG. 13, when executing the executable code or the application program stored in the memory 1302, the processor 1301 in the first communication device may perform the method steps on the first communication device side in the foregoing embodiments. For a specific execution process, refer to the foregoing embodiments. Details are not described herein again.

In addition, the memory 1302 stores computer-executable instructions used to implement functions of the sending module, the receiving module, and the matching module. Functions/implementation processes of the sending module, the receiving module, and the matching module may be implemented by the processor 1301 in FIG. 13 by invoking the computer-executable instructions stored in the memory 1302. For specific implementation processes and functions, refer to the foregoing related embodiments.

Based on a same inventive concept, an embodiment of this application provides a computer-readable storage medium. The computer-readable storage medium stores instructions, and when the instructions run on a computer, the communication method according to one or more embodiments is performed.

Based on a same inventive concept, an embodiment of this application provides a computer program or a computer program product. When the computer program or the computer program product is executed on a computer, the computer is enabled to implement the communication method according to one or more embodiments.

A person skilled in the art can appreciate that functions described with reference to various illustrative logical blocks, modules, and algorithm steps disclosed and described herein may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communication medium that facilitates transmission of a computer program from one place to another (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (digital subscriber line, DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (compact disc, CD), a laser disc, an optical disc, a digital versatile disc (digital versatile disc, DVD), and a Blu-ray disc. The disks usually reproduce data magnetically, whereas the discs reproduce data optically by using lasers. Combinations of the above should also be included within the scope of the computer-readable medium.

An instruction may be executed by one or more processors such as one or more digital signal processors (DSP), a general microprocessor, an application-specific integrated circuit (ASIC), a field programmable gate array (FPGA), or an equivalent integrated circuit or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

The technologies in this application may be implemented in various apparatuses or devices, including a wireless handset, an integrated circuit (integrated circuit, IC), or a set of ICs (for example, a chip set). Various components, modules, or units are described in this disclosure to emphasize functional aspects of devices configured to perform the disclosed techniques, but do not necessarily require realization by different hardware units. Actually, as described above, various units may be combined into a codec hardware unit in combination with appropriate software and/or firmware, or may be provided by interoperable hardware units (including the one or more processors described above).

In the foregoing embodiments, the description of each embodiment has respective focuses. For a part that is not described in detail in an embodiment, refer to related descriptions in other embodiments.

The foregoing descriptions are merely example specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
if first discontinuous reception DRX configuration information does not match first resource configuration information, sending, by a first communication device, first information to a second communication device, and/or sending second information to a third communication device, wherein
the first DRX configuration information is used for a first sidelink corresponding to the first communication device, the first resource configuration information is used for a second sidelink corresponding to the first communication device, the first information indicates the second communication device to perform DRX configuration for the first sidelink, and the second information indicates the third communication device to perform resource configuration for the second sidelink.

2. The method according to claim 1, wherein that first DRX configuration information does not match first resource configuration information comprises: a DRX active time period indicated by the first DRX configuration information conflicts with a time domain interval indicated by the first resource configuration information in at least one time period.

3. The method according to claim 1 or 2, wherein that a DRX active time period indicated by the first DRX configuration information conflicts with a time domain interval indicated by the first resource configuration information in at least one time period comprises: a quantity of slots in which n DRX active time periods overlap the time domain interval is less than a preset threshold, and n is a positive integer.

4. The method according to claim 3, wherein that a quantity of slots in which n DRX active time periods overlap the time domain interval is less than a preset threshold comprises: a value obtained by dividing the quantity of overlapping slots by a quantity of slots of n times a DRX active time is less than the preset threshold.

5. The method according to any one of claims 1 to 4, wherein the first resource configuration information is current resource configuration information of the first communication device; and the method further comprises:
receiving, by the first communication device, the first DRX configuration information from the second communication device; and
determining, by the first communication device, that the first DRX configuration information does not match the first resource configuration information.

6. The method according to claim 5, wherein the first communication device is a transmit terminal device, the second communication device is a receive terminal device, and the third communication device is a network device to which the transmit terminal device belongs.

7. The method according to claim 5, wherein the first communication device is a receive terminal device, the second communication device is a transmit terminal device, and the third communication device is a network device to which the receive terminal device belongs.

8. The method according to claim 5, wherein the first communication device is a receive terminal device, the third communication device is a transmit terminal device, and the second communication device is a network device to which the receive terminal device belongs; and the first resource configuration information comprises resource configuration information indicating the first communication device to perform sensing.

9. The method according to claim 5, wherein the first communication device is auxiliary user equipment, the second communication device is a network device to which the auxiliary user equipment belongs, the third communication device is assisted user equipment, and the first resource configuration comprises resource configuration information indicating the first communication device to perform sensing.

10. The method according to claim 5, wherein the first communication device is a receive terminal device, the second communication device is a transmit terminal device, and the third communication device is a network device to which the receive terminal device belongs; and the first resource configuration information is used by the first communication device to send sidelink data on the second sidelink between the first communication device and a fourth communication device.

11. The method according to claim 5, wherein the first communication device is a receive terminal device, the second communication device is a network device to which the receive terminal device belongs, and the third communication device is a transmit terminal device.

12. The method according to claim 5, wherein the first communication device is assisted user equipment, the second communication device is a network device to which the assisted user equipment belongs, and the third communication device is auxiliary user equipment.

13. The method according to any one of claims 5 to 12, wherein the sending, by a first communication device, second information to a third communication device comprises:
sending, by the first communication device, mode switching request information to the third communication device, wherein the mode switching request information requests the third communication device to switch a resource allocation mode of the first communication device from a first mode to a second mode; or
sending, by the first communication device, resource configuration request information to the third communication device, wherein the resource configuration request information comprises at least one of the following: a request reason indicating that DRX configuration information does not match resource configuration information, the first DRX configuration information, identification information corresponding to the first DRX configuration information, expected resource configuration information, or a resource adjustment amount.

14. The method according to any one of claims 5 to 12, wherein the sending, by a first communication device, first information to a second communication device comprises:
sending, by the first communication device, DRX configuration failure information to the second communication device, wherein
the DRX configuration failure information comprises at least one of the following: third information indicating a DRX configuration failure, identification information corresponding to DRX configuration information, a configuration failure type indicating that DRX configuration information does not match resource configuration information, an effective duration in which the second communication device is not allowed to configure DRX for the first communication device, the first resource configuration information, expected DRX configuration information, a DRX adjustment amount, and identification information corresponding to the DRX adjustment amount.

15. The method according to claim 14, wherein the sending, by the first communication device, DRX configuration failure information to the second communication device comprises:
receiving, by the first communication device, DRX configuration failure information sent by the third communication device, and sending, by the first communication device, the DRX configuration failure information to the second communication device; or
starting, by the first communication device, a timer after sending the resource configuration request information to the third communication device; and when the timer expires and the first communication device receives no resource configuration information sent by the third communication device, sending, by the first communication device, the DRX configuration failure information to the second communication device.

16. The method according to claim 14 or 15, wherein the DRX configuration failure information is further used to trigger the second communication device to send fourth information to a network device to which the second communication device belongs, and the fourth information indicates that a DRX configuration corresponding to the first sidelink fails.

17. The method according to any one of claims 14 to 16, wherein the identification information comprises at least one of the following: a target identifier, a source identifier, a sidelink connection identifier, a source and target identifier pair, a sidelink link identifier, a logical channel identifier, a resource pool identifier, a sidelink service identifier, a media access control protocol data unit MAC PDU identifier, and a transport block TB identifier.

18. The method according to any one of claims 5 to 12, wherein the sending, by a first communication device, first information to a second communication device, and/or sending second information to a third communication device comprises:
sending, by the first communication device, resource configuration request information to the third communication device, and sending DRX configuration failure information to the second communication device.

19. The method according to any one of claims 1 to 4, wherein the first DRX configuration information is current DRX configuration information of the first communication device; and the method further comprises:
receiving, by the first communication device, the first resource configuration information from the third communication device; and
determining, by the first communication device, that the first DRX configuration information does not match the first resource configuration information.

20. The method according to claim 19, wherein the first communication device is a transmit terminal device, the second communication device is a receive terminal device, and the third communication device is a network device to which the transmit terminal device belongs.

21. The method according to claim 19, wherein the first communication device is a receive terminal device, the second communication device is a transmit terminal device, and the third communication device is a network device to which the receive terminal device belongs.

22. The method according to claim 19, wherein the first communication device is a receive terminal device, the second communication device is a network device to which the receive terminal device belongs, and the third communication device is a transmit terminal device; and the first resource configuration information comprises resource configuration information indicating the first communication device to perform sensing.

23. The method according to claim 19, wherein the first communication device is assisted user equipment, the second communication device is a network device to which the assisted user equipment belongs, the third communication device is auxiliary user equipment, and the first resource configuration information comprises resource configuration information indicating the first communication device to perform sensing.

24. The method according to claim 19, wherein the first communication device is a receive terminal device, the second communication device is a transmit terminal device, and the third communication device is a network device to which the receive terminal device belongs; and the first resource configuration information is used by the first communication device to send sidelink data on the second sidelink between the first communication device and a fourth communication device.

25. The method according to claim 19, wherein the first communication device is a receive terminal device, the second communication device is a network device to which the receive terminal device belongs, and the third communication device is a transmit terminal device.

26. The method according to claim 25, wherein the first communication device is assisted user equipment, the second communication device is a network device to which the assisted user equipment belongs, and the third communication device is auxiliary user equipment.

27. The method according to any one of claims 19 to 26, wherein the sending, by a first communication device, second information to a third communication device comprises:
sending, by the first communication device, mode switching request information to the third communication device, wherein the mode switching request information requests the third communication device to switch a resource allocation mode of the first communication device from a first mode to a second mode, and configuring a resource for the first communication device in the second mode; or
sending, by the first communication device, resource configuration failure information to the third communication device, wherein the resource configuration failure information comprises at least one of the following: fifth information indicating a resource configuration failure, a configuration failure type indicating that resource configuration information does not match DRX configuration information, the first DRX configuration information, identification information corresponding to the first DRX configuration information, expected resource configuration information, or a resource adjustment amount.

28. The method according to any one of claims 19 to 26, wherein the sending, by a first communication device, first information to a second communication device comprises:
sending, by the first communication device, DRX configuration request information to the third communication device, wherein the DRX configuration request information comprises at least one of the following: a request reason indicating that DRX configuration information does not match resource configuration information, the first resource configuration information, an expected DRX configuration, or a DRX adjustment amount.

29. The method according to any one of claims 19 to 26, wherein the sending, by a first communication device, first information to a second communication device, and/or sending second information to a third communication device comprises:
sending, by the first communication device, resource configuration failure information to the second communication device, and sending DRX configuration request information to the third communication device.

30. A communication method, wherein the method comprises:
determining, by a first communication device, a first candidate resource and a first service that are used for sidelink transmission; and
determining, by the first communication device, a first resource from the first candidate resource, wherein there is an intersection between the first resource and a first active time in time domain, and the first active time is determined based on a discontinuous reception DRX active time corresponding to the first service.

31. The method according to claim 30, wherein the determining, by the first communication device, a first resource from the first candidate resource comprises:
determining, by the first communication device, a resource that is in the first candidate resource and that has an intersection with the first active time in time domain as a second candidate resource; and
determining, by the first communication device, the first resource from the second candidate resource.

32. The method according to claim 31, wherein the determining, by the first communication device, a resource that is in the first candidate resource and that has an intersection with the first active time in time domain as a second candidate resource comprises:
determining, by the first communication device, a resource that is in the first candidate resource and that is comprised in the first active time in time domain as the second candidate resource.

33. The method according to any one of claims 30 to 32, wherein the method further comprises:
selecting, by the first communication device, a second service, wherein there is an intersection between a DRX active time corresponding to the second service and the first resource in time domain.

34. The method according to any one of claims 30 to 33, wherein the method further comprises:
if there is no intersection between the first resource and a DRX active time corresponding to a third service of the first communication device, triggering, by the first communication device, resource reselection.

35. The method according to any one of claims 30 to 34, wherein the method further comprises:
determining, by the first communication device, a DRX cycle that meets a second condition and that is in a DRX configuration corresponding to the first service as a first cycle, wherein the first cycle is a cycle corresponding to the first resource.

36. The method according to any one of claims 30 to 35, wherein before the determining, by a first communication device, a first candidate resource used for sidelink transmission, the method further comprises:
determining, by the first communication device, the first active time;
monitoring, by the first communication device, sidelink control information SCI within the first active time, wherein the SCI indicates a resource used by another communication device for sidelink transmission; and
performing, by the first communication device, measurement within the first active time based on the SCI.

37. The method according to any one of claims 30 to 35, wherein before the determining, by a first communication device, a first candidate resource used for sidelink transmission, the method further comprises:
determining, by the first communication device, a second resource used for sidelink transmission;
determining, by the first communication device, the first candidate resource from the second resource, wherein the first candidate resource meets at least one of the following conditions:
there is an intersection with a union set of DRX active times corresponding to the first service in time domain, wherein the first service comprises a current service and/or a historical service; and
there is an intersection with a union set of DRX active times corresponding to aperiodic services in the current service and the historical service in time domain.

38. A communication method, wherein the method comprises:
determining, by a first communication device, a third resource used for sidelink transmission; and
if there is no intersection between the third resource and a discontinuous reception DRX active time corresponding to a fourth service of the first communication device, triggering, by the first communication device, resource reselection.

39. The method according to claim 38, wherein that there is no intersection between the third resource and a DRX active time corresponding to a fourth service comprises:
there is no intersection between the third resource and a union set of a plurality of DRX active times corresponding to the fourth service;
there is no intersection between the third resource and at least one of a plurality of DRX active times corresponding to the fourth service; or
there is no intersection between the third resource and a DRX active time that is in a plurality of DRX active times corresponding to the fourth service and that meets a preset quantity.

40. The method according to claim 38 or 39, wherein the DRX active time corresponding to the fourth service comprises at least one of the following: a DRX active time corresponding to a communication target, a DRX active time corresponding to a sidelink connection, a DRX active time corresponding to a source and target pair, a DRX active time corresponding to a sidelink link, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

41. A communication method, wherein the method comprises:
determining, by a first communication device, a second active time, wherein the second active time is a union set of DRX active times in at least one discontinuous reception DRX configuration in time domain;
monitoring, by the first communication device, sidelink control information SCI within the second active time, wherein the SCI indicates a resource used by another communication device for sidelink transmission; and
performing, by the first communication device, measurement within the second active time based on the SCI.

42. The method according to claim 41, wherein the at least one DRX configuration comprises a DRX configuration of a first service.

43. The method according to claim 42, wherein the first service comprises at least one of the following: a communication target, a sidelink connection, a source and target pair, a sidelink link, a logical channel, a resource pool, a sidelink service, a media access control protocol data unit MAC PDU, and a transport block TB.

44. A communication method, wherein the method comprises:
determining, by a first communication device, a fourth resource used for sidelink transmission;
determining, by the first communication device, a third candidate resource from the fourth resource, wherein the third candidate resource meets at least one of the following conditions:
there is an intersection with a union set of discontinuous reception DRX active times corresponding to a first service in time domain, wherein the first service comprises a current service and/or a historical service; and
there is an intersection with a union set of DRX active times corresponding to aperiodic services in the current service and the historical service in time domain, wherein
the third candidate resource is used to determine a fifth resource used for sidelink transmission.

45. The method according to claim 44, wherein the DRX active time corresponding to the first service comprises at least one of the following: a DRX active time corresponding to a communication target, a DRX active time corresponding to a sidelink connection, a DRX active time corresponding to a source and target pair, a DRX active time corresponding to a sidelink link, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

46. A communication method, comprising:
determining, by a first communication device, that a first resource pool or a resource in the first resource pool meets a third condition, wherein the first resource pool is a resource pool from which the first communication device currently selects a resource; and
performing, by the first communication device, discontinuous reception DRX configuration, and/or indicating a second communication device to perform DRX configuration, wherein sidelink communication is performed between the first communication device and the second communication device.

47. The method according to claim 46, wherein the third condition comprises at least one of the following:
a channel busy rate CBR of the current resource pool meets a fourth condition;
a quantity of times that the CRB meets the fourth condition reaches a first threshold;
the first communication device triggers resource pool reselection;
a quantity of times of triggering resource pool reselection by the first communication device reaches a second threshold; and
a packet loss rate of the second communication device meets a fifth condition or a quantity of times that the packet loss rate of the second communication device meets the fifth condition reaches a third threshold.

48. The method according to claim 47, wherein the fourth condition comprises: the CBR is greater than a first preset value, or the CBR is within a first preset interval; and/or
the fifth condition comprises: the packet loss rate is greater than a second preset value, or the packet loss rate is within a second preset interval.

49. The method according to any one of claims 46 to 48, wherein the indicating, by the first communication device, a second communication device to perform DRX configuration comprises:
sending, by the first communication device, a first indication message to the second communication device, wherein the first indication message notifies the second communication device that a current resource pool of the first communication device or a resource in the current resource pool meets the third condition;
sending, by the first communication device, a second indication message to the second communication device, wherein the second indication message indicates the second communication device to perform DRX configuration; and/or
sending, by the first communication device, a third indication message to the second communication device, wherein the third indication message indicates DRX configuration information.

50. The method according to any one of claims 46 to 49, wherein the method further comprises:
receiving, by the first communication device, a fourth indication message from the second communication device, wherein the fourth indication message indicates a packet loss rate or that the packet loss rate meets the fifth condition.

51. A communication apparatus, wherein the apparatus comprises a sending module; and
the sending nodule is configured to: if first discontinuous reception DRX configuration information does not match first resource configuration information, send first information to a second communication device, and/or send second information to a third communication device, wherein
the first DRX configuration information is used for a first sidelink corresponding to the communication apparatus, the first resource configuration information is used for a second sidelink corresponding to the communication apparatus, the first information indicates the second communication device to perform DRX configuration for the first sidelink, and the second information indicates the third communication device to perform resource configuration for the second sidelink.

52. The apparatus according to claim 51, wherein that first DRX configuration information does not match first resource configuration information comprises: a DRX active time period indicated by the first DRX configuration information conflicts with a time domain interval indicated by the first resource configuration information in at least one time period.

53. The apparatus according to claim 51 or 52, wherein that a DRX active time period indicated by the first DRX configuration information conflicts with a time domain interval indicated by the first resource configuration information in at least one time period comprises: a quantity of slots in which n DRX active time periods overlap the time domain interval is less than a preset threshold, and n is a positive integer.

54. The apparatus according to claim 53, wherein that a quantity of slots in which n DRX active time periods overlap the time domain interval is less than a preset threshold comprises: a value obtained by dividing the quantity of overlapping slots by a quantity of slots of n times a DRX active time is less than the preset threshold.

55. The apparatus according to any one of claims 51 to 54, wherein the first resource configuration information is current resource configuration information of the communication apparatus; and the apparatus further comprises a receiving module and a matching module;
the receiving module is configured to receive the first DRX configuration information from the second communication device; and
the matching module is configured to determine that the first DRX configuration information does not match the first resource configuration information.

56. The apparatus according to claim 55, wherein the communication apparatus is a transmit terminal device, the second communication device is a receive terminal device, and the third communication device is a network device to which the transmit terminal device belongs.

57. The apparatus according to claim 55, wherein the communication apparatus is a receive terminal device, the second communication device is a transmit terminal device, and the third communication device is a network device to which the receive terminal device belongs.

58. The apparatus according to claim 55, wherein the communication apparatus is a receive terminal device, the third communication device is a transmit terminal device, and the second communication device is a network device to which the receive terminal device belongs; and the first resource configuration information comprises resource configuration information indicating the communication apparatus to perform sensing.

59. The apparatus according to claim 55, wherein the communication apparatus is auxiliary user equipment, the second communication device is a network device to which the auxiliary user equipment belongs, and the third communication device is assisted user equipment; and the first resource configuration comprises resource configuration information indicating the communication apparatus to perform sensing.

60. The apparatus according to claim 55, wherein the communication apparatus is a receive terminal device, the second communication device is a transmit terminal device, and the third communication device is a network device to which the receive terminal device belongs; and the first resource configuration information is used by the communication apparatus to send sidelink data on the second sidelink between the communication apparatus and a fourth communication device.

61. The apparatus according to claim 55, wherein the communication apparatus is a receive terminal device, the second communication device is a network device to which the receive terminal device belongs, and the third communication device is a transmit terminal device.

62. The apparatus according to claim 55, wherein the communication apparatus is assisted user equipment, the second communication device is a network device to which the assisted user equipment belongs, and the third communication device is auxiliary user equipment.

63. The apparatus according to any one of claims 55 to 62, wherein the sending module is configured to:
send mode switching request information to the third communication device, wherein the mode switching request information requests the third communication device to switch a resource allocation mode of the communication apparatus from a first mode to a second mode; or
send resource configuration request information to the third communication device, wherein the resource configuration request information comprises at least one of the following: a request reason indicating that DRX configuration information does not match resource configuration information, the first DRX configuration information, identification information corresponding to the first DRX configuration information, expected resource configuration information, or a resource adjustment amount.

64. The apparatus according to any one of claims 55 to 62, wherein the sending module is configured to:
send DRX configuration failure information to the second communication device, wherein
the DRX configuration failure information comprises at least one of the following: third information indicating a DRX configuration failure, identification information corresponding to DRX configuration information, a configuration failure type indicating that DRX configuration information does not match resource configuration information, an effective duration in which the second communication device is not allowed to configure DRX for the communication apparatus, the first resource configuration information, expected DRX configuration information, a DRX adjustment amount, and identification information corresponding to the DRX adjustment amount.

65. The apparatus according to claim 64, wherein the receiving module is configured to receive the DRX configuration failure information sent by the third communication device; and the sending module is configured to send the DRX configuration failure information to the second communication device; or
the apparatus further comprises a timer, wherein the timer is started after the sending module sends the resource configuration request information to the third communication device; and the sending module is further configured to: when the timer expires and the communication apparatus receives no resource configuration information sent by the third communication device, send the DRX configuration failure information to the second communication device.

66. The apparatus according to claim 64 or 65, wherein the DRX configuration failure information is further used to trigger the second communication device to send fourth information to a network device to which the second communication device belongs, and the fourth information indicates that a DRX configuration corresponding to the first sidelink fails.

67. The apparatus according to any one of claims 64 to 66, wherein the identification information comprises at least one of the following: a target identifier, a source identifier, a sidelink connection identifier, a source and target identifier pair, a sidelink link identifier, a logical channel identifier, a resource pool identifier, a sidelink service identifier, a media access control protocol data unit MAC PDU identifier, and a transport block TB identifier.

68. The apparatus according to any one of claims 55 to 62, wherein the sending module is configured to:
send resource configuration request information to the third communication device, and send DRX configuration failure information to the second communication device.

69. The apparatus according to any one of claims 51 to 54, wherein the first DRX configuration information is current DRX configuration information of the communication apparatus; and the receiving module is further configured to receive the first resource configuration information from the third communication device; and
the matching module is configured to determine that the first DRX configuration information does not match the first resource configuration information.

70. The apparatus according to claim 69, wherein the communication apparatus is a transmit terminal device, the second communication device is a receive terminal device, and the third communication device is a network device to which the transmit terminal device belongs.

71. The apparatus according to claim 69, wherein the communication apparatus is a receive terminal device, the second communication device is a transmit terminal device, and the third communication device is a network device to which the receive terminal device belongs.

72. The apparatus according to claim 69, wherein the communication apparatus is a receive terminal device, the second communication device is a network device to which the receive terminal device belongs, and the third communication device is a transmit terminal device; and the first resource configuration information comprises resource configuration information indicating the communication apparatus to perform sensing.

73. The apparatus according to claim 69, wherein the communication apparatus is assisted user equipment, the second communication device is a network device to which the assisted user equipment belongs, the third communication device is auxiliary user equipment, and the first resource configuration information comprises resource configuration information indicating the communication apparatus to perform sensing.

74. The apparatus according to claim 69, wherein the communication apparatus is a receive terminal device, the second communication device is a transmit terminal device, and the third communication device is a network device to which the receive terminal device belongs; and the first resource configuration information is used by the communication apparatus to send sidelink data on the second sidelink between the communication apparatus and a fourth communication device.

75. The apparatus according to claim 69, wherein the communication apparatus is a receive terminal device, the second communication device is a network device to which the receive terminal device belongs, and the third communication device is a transmit terminal device.

76. The method according to claim 75, wherein the communication apparatus is assisted user equipment, the second communication device is a network device to which the assisted user equipment belongs, and the third communication device is auxiliary user equipment.

77. The apparatus according to any one of claims 69 to 76, wherein the sending module is configured to:
send mode switching request information to the third communication device, wherein the mode switching request information requests the third communication device to switch a resource allocation mode of the communication apparatus from a first mode to a second mode, and configure a resource for the communication apparatus in the second mode; or
send resource configuration failure information to the third communication device, wherein the resource configuration failure information comprises at least one of the following: fifth information indicating a resource configuration failure, a configuration failure type indicating that resource configuration information does not match DRX configuration information, the first DRX configuration information, identification information corresponding to the first DRX configuration information, expected resource configuration information, or a resource adjustment amount.

78. The apparatus according to any one of claims 69 to 76, wherein the sending module is further configured to:
send DRX configuration request information to the third communication device, wherein the DRX configuration request information comprises at least one of the following: a request reason indicating that DRX configuration information does not match resource configuration information, the first resource configuration information, an expected DRX configuration, or a DRX adjustment amount.

79. The apparatus according to any one of claims 69 to 76, wherein the sending module is further configured to:
send resource configuration failure information to the second communication device, and send DRX configuration request information to the third communication device.

80. A communication apparatus, comprising: a determining module, wherein
the determining module is configured to determine a first candidate resource and a first service that are used for sidelink transmission; and
the determining module is further configured to determine a first resource from the first candidate resource, wherein there is an intersection between the first resource and a first active time in time domain, and the first active time is determined based on a discontinuous reception DRX active time corresponding to the first service.

81. The apparatus according to claim 80, wherein the determining module is configured to determine a resource that is in the first candidate resource and that has an intersection with the first active time in time domain as a second candidate resource; and determine the first resource from the second candidate resource.

82. The apparatus according to claim 81, wherein the determining module is configured to:
determine a resource that is in the first candidate resource and that is comprised in the first active time in time domain as the second candidate resource.

83. The apparatus according to any one of claims 80 to 82, wherein the apparatus further comprises a selection module; and
the selection module is configured to select a second service, wherein there is an intersection between a DRX active time corresponding to the second service and the first resource in time domain.

84. The apparatus according to any one of claims 80 to 83, wherein the apparatus further comprises a trigger module; and
the trigger module is configured to: if there is no intersection between the first resource and a DRX active time corresponding to a third service of the communication apparatus, trigger resource reselection.

85. The apparatus according to any one of claims 80 to 84, wherein the determining module is further configured to:
determine a DRX cycle that meets a second condition and that is in a DRX configuration corresponding to the first service as a first cycle, wherein the first cycle is a cycle corresponding to the first resource.

86. The apparatus according to any one of claims 80 to 85, wherein before the communication apparatus determines the first candidate resource used for sidelink transmission, the determining module is further configured to determine the first active time; and
the communication apparatus further comprises a monitoring module and a measurement module, the monitoring module is configured to monitor sidelink control information SCI within the first active time, wherein the SCI indicates a resource used by another communication device for sidelink transmission, and
the measurement module is configured to perform measurement within the first active time based on the SCI.

87. The apparatus according to any one of claims 80 to 85, wherein the determining module is configured to:
before the communication apparatus determines the first candidate resource used for sidelink transmission, determine a second resource used for sidelink transmission; and determine the first candidate resource from the second resource, wherein the first candidate resource meets at least one of the following conditions:
there is an intersection with a union set of DRX active times corresponding to the first service in time domain, wherein the first service comprises a current service and/or a historical service; and
there is an intersection with a union set of DRX active times corresponding to aperiodic services in the current service and the historical service in time domain.

88. A communication apparatus, comprising: a determining module and a trigger module, wherein
the determining module is configured to determine a third resource used for sidelink transmission; and
the trigger module is configured to: if there is no intersection between the third resource and a discontinuous reception DRX active time corresponding to a fourth service of the communication apparatus, trigger resource reselection.

89. The apparatus according to claim 88, wherein that there is no intersection between the third resource and a DRX active time corresponding to a fourth service comprises:
there is no intersection between the third resource and a union set of a plurality of DRX active times corresponding to the fourth service;
there is no intersection between the third resource and at least one of a plurality of DRX active times corresponding to the fourth service; or
there is no intersection between the third resource and a DRX active time that is in a plurality of DRX active times corresponding to the fourth service and that meets a preset quantity.

90. The apparatus according to claim 88 or 89, wherein the DRX active time corresponding to the first service comprises at least one of the following: a DRX active time corresponding to a communication target, a DRX active time corresponding to a sidelink connection, a DRX active time corresponding to a source and target pair, a DRX active time corresponding to a sidelink link, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

91. A communication apparatus, comprising a determining module, a monitoring module, and a measurement module, wherein
the determining module is configured to determine a second active time, wherein the second active time is a union set of DRX active times in at least one discontinuous reception DRX configuration in time domain;
the monitoring module is configured to monitor sidelink control information SCI within the second active time, wherein the SCI indicates a resource used by another communication device for sidelink transmission; and
the measurement module is configured to perform measurement within the second active time based on the SCI.

92. The apparatus according to claim 91, wherein the at least one DRX configuration comprises a DRX configuration of a first service.

93. The apparatus according to claim 92, wherein the first service comprises at least one of the following: a communication target, a sidelink connection, a source and target pair, a sidelink link, a logical channel, a resource pool, a sidelink service, a media access control protocol data unit MAC PDU, and a transport block TB.

94. A communication apparatus, comprising: a determining module, wherein
the determining module is configured to determine a fourth resource used for sidelink transmission, and determine a third candidate resource from the fourth resource, wherein the third candidate resource meets at least one of the following conditions:
there is an intersection with a union set of discontinuous reception DRX active times corresponding to a first service in time domain, wherein the first service comprises a current service and/or a historical service; and
there is an intersection with a union set of DRX active times corresponding to aperiodic services in the current service and the historical service in time domain, wherein
the third candidate resource is used to determine a fifth resource used for sidelink transmission.

95. The apparatus according to claim 94, wherein the DRX active time corresponding to the first service comprises at least one of the following: a DRX active time corresponding to a communication target, a DRX active time corresponding to a sidelink connection, a DRX active time corresponding to a source and target pair, a DRX active time corresponding to a sidelink link, a DRX active time corresponding to a logical channel, a DRX active time corresponding to a resource pool, a DRX active time corresponding to a sidelink service, a DRX active time corresponding to a media access control protocol data unit MAC PDU, and a DRX active time corresponding to a transport block TB.

96. A communication apparatus, comprising:
a determining module, configured to determine that a first resource pool or a resource in the first resource pool meets a third condition, wherein the first resource pool is a resource pool from which the communication apparatus currently selects a resource; and
a configuration module, configured to perform discontinuous reception DRX configuration, and/or an indication module, configured to indicate a second communication device to perform DRX configuration, wherein sidelink communication is performed between the communication apparatus and the second communication device.

97. The apparatus according to claim 96, wherein the third condition comprises at least one of the following:
a channel busy rate CBR of the current resource pool meets a fourth condition;
a quantity of times that the CRB meets the fourth condition reaches a first threshold;
the communication apparatus triggers resource pool reselection;
a quantity of times of triggering resource pool reselection by the communication apparatus reaches a second threshold; and
a packet loss rate of the second communication device meets a fifth condition or a quantity of times that the packet loss rate of the second communication device meets the fifth condition reaches a third threshold.

98. The apparatus according to claim 97, wherein the fourth condition comprises: the CBR is greater than a first preset value, or the CBR is within a first preset interval; and/or
the fifth condition comprises: the packet loss rate is greater than a second preset value, or the packet loss rate is within a second preset interval.

99. The apparatus according to any one of claims 96 to 98, wherein the indication module is configured to:
send a first indication message to the second communication device, wherein the first indication message notifies the second communication device that a current resource pool of the communication apparatus or a resource in the current resource pool meets the third condition;
send a second indication message to the second communication device, wherein the second indication message indicates the second communication device to perform DRX configuration; and/or
send a third indication message to the second communication device, wherein the third indication message indicates DRX configuration information.

100. The apparatus according to any one of claims 96 to 99, wherein the apparatus further comprises a receiving module; and
the receiving module is configured to receive a fourth indication message from the second communication device, wherein the fourth indication message indicates a packet loss rate or that the packet loss rate meets the fifth condition.

101. A communication apparatus, comprising a processor and a memory, wherein the processor is coupled to the memory, and the processor is configured to read and execute instructions in the memory, to implement the communication method according to any one of claims 1 to 50.

102. A communication system, comprising the communication apparatus according to claim 101.

103. A computer-readable storage medium, wherein the computer-readable storage medium stores a computer program or instructions; and when the computer program or the instructions are executed, a computer is enabled to perform the method according to any one of claims 1 to 50.

104. A computer program product, wherein the computer program product comprises instructions, and when the instructions are executed, the communication method according to any one of claims 1 to 50 is performed.
